(19) Europäisches Patentamt
European Patent Office
Office européen des brevets

(11) **EP 4 245 555 A1**

(12) **EUROPEAN PATENT APPLICATION**
published in accordance with Art. 153(4) EPC

(43) Date of publication:
**20.09.2023 Bulletin 2023/38**

(21) Application number: **21891996.7**

(22) Date of filing: **12.11.2021**

(51) International Patent Classification (IPC):
***B41M 5/26*** *(2006.01)* ***B42D 25/328*** *(2014.01)*
***B42D 25/382*** *(2014.01)* ***B32B 7/023*** *(2019.01)*
***G07D 7/12*** *(2016.01)*

(52) Cooperative Patent Classification (CPC):
**B32B 7/023; B41M 5/26; B42D 25/328; B42D 25/382; G07D 7/12**

(86) International application number:
**PCT/JP2021/041758**

(87) International publication number:
**WO 2022/102751 (19.05.2022 Gazette 2022/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.11.2020 JP 2020189604**

(71) Applicant: **Dai Nippon Printing Co., Ltd.**
**Tokyo 162-8001 (JP)**

(72) Inventor: **MIN Xin**
**Tokyo 162-8001 (JP)**

(74) Representative: **Müller-Boré & Partner**
**Patentanwälte PartG mbB**
**Friedenheimer Brücke 21**
**80639 München (DE)**

(54) **LAMINATE, PRINT PRODUCT, AND METHOD USING LAMINATE**

(57) To provide a multi-layered body which is usable as an information medium of which security has been improved by adding information display recognizable by an infrared camera or the like while maintaining information display by color production such as black color production on a laser color production layer, and the like. A multi-layered body is provided which includes: a base material layer; a near-infrared absorption layer which is formed on a side of a first surface of the base material layer and which contains a near-infrared absorption ink composition containing a near-infrared absorption material; and a laser color production layer which is formed on a side of a second surface of the base material layer, which contains a laser color production agent, and which produces color when irradiated with laser light, wherein the near-infrared absorption material contains cesium tungsten oxide or lanthanum hexaboride, and when a target portion of the near-infrared absorption layer is irradiated with laser light, near-infrared absorbency in at least a predetermined wavelength range of the target portion declines.

FIG.5

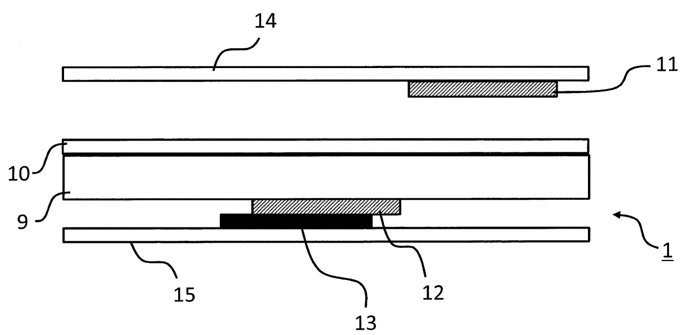


EP 4 245 555 A1

## Description

### Technical Field

The present invention relates to a multi-layered body including a near-infrared absorption layer which enables characters, images, and the like that are recognizable by a near-infrared camera or the like to be printed or drawn (marked), a print product including such a multi-layered body as a sheet, and a method of using the multi-layered body.

### Background Art

In recent years, improving security of data pages, ID (identification) certificates such as identity documents, cards such as credit cards and cash cards, bank bills, and the like has become an issue and various proposals have been made in order to prevent counterfeiting.

Patent Literature 1 proposes a marking method of forming an infrared-absorbing pattern by imparting energy generated by a laser light or the like to a base material containing ytterbium oxide. However, ytterbium oxide does not have sufficiently high infrared absorbency and also presents an issue in terms of handleability.

In addition, while anti-counterfeiting techniques and the like using infrared-absorption material have been proposed such as those described in Patent Literature 2 to Patent Literature 7, none of the techniques are without issues. For example, while variable information is printed by a printing method in Patent Literature 2, the printing method has the following disadvantages:

- Printing on or transferring to a card surface is susceptible to falsification and security declines. Durability including abrasion resistance also deteriorates.
- When printing on or transferring to an intermediate layer of a card, since processing such as pressing, finishing to a card size, and the like is to be performed after printing personal information (or issuing the card), conceivably, it is difficult to issue the card on site. In addition, when any problems arise during processing, since no two pieces of personal information are the same, the entire procedure must be redone from the initial printing step.

### Citation List

### Patent Literature

Patent Literature 1: Japanese Patent No. 4323578
Patent Literature 2: Japanese Translation of PCT International Application Publication No. 2005-505444
Patent Literature 3: Japanese Patent Laid-Open No. 2005-246821
Patent Literature 4: Japanese Patent Laid-Open No. 2008-162233
Patent Literature 5: Japanese Patent No. 6443597
Patent Literature 6: Japanese Patent No. 6507096
Patent Literature 7: Japanese Patent No. 6541400
Patent Literature 8: Japanese Patent No. 6160830
Patent Literature 9: Japanese Patent No. 5854329
Patent Literature 10: International Publication No. WO 2018/151238
Patent Literature 11: Japanese Patent No. 6167803

### Summary of Invention

### Technical Problem

In consideration of the foregoing, an object of the present invention is to provide a multi-layered body which is usable in information media for security including ID certificates and data pages as an information medium of which security has been improved by adding information display recognizable by an infrared camera or the like while maintaining information display by color production such as black color production on a laser color production layer, a print product using such a multi-layered body, and a method related to the multi-layered body.

Solution to Problem

In order to solve the problem described above, the present invention provides a multi-layered body including: a base material layer; a near-infrared absorption layer which is formed on a side of a first surface of the base material layer and which contains a near-infrared absorption ink composition containing a near-infrared absorption material; and a laser color production layer which is formed on a side of a second surface of the base material layer, which contains a laser color production agent, and which produces color when irradiated with laser light, wherein the near-infrared absorption material contains cesium tungsten oxide or lanthanum hexaboride, and when a target portion of the near-infrared absorption layer is irradiated with laser light, near-infrared absorbency in at least a predetermined wavelength range of the target portion declines.

The multi-layered body may further include a first surface-side printing layer which is formed on a side of the first surface of the base material layer and which contains a colored ink composition or a fluorescent ink composition with near-infrared transparency.

The multi-layered body may further include a first surface-side hologram layer which is formed on a side of the first surface of the base material layer and which has near-infrared transparency.

The multi-layered body may further include a second surface-side printing layer which is formed on a side of a second surface of the base material layer so as to overlap with the laser color production layer and which contains a colored ink composition or a fluorescent ink composition.

The multi-layered body may further include a second surface-side hologram layer which is formed on a side of the second surface of the base material layer so as to overlap with the laser color production layer.

The multi-layered body may further include a first surface-side transparent layer which is formed on a side of the first surface of the base material layer as an outermost layer on a side of the first surface in the multi-layered body and which has visible light transparency and near-infrared transparency.

The multi-layered body may further include a second surface-side transparent layer which is formed on a side of the second surface of the base material layer as an outermost layer on a side of the second surface in the multi-layered body and which has visible light transparency and near-infrared transparency.

A plurality of convex optical element portions may be formed in a section which at least partially overlaps with the near-infrared absorption layer on a surface on an opposite side to the near-infrared absorption layer in the first surface-side transparent layer.

A plurality of convex optical element portions may be formed in a partial section on a surface on an opposite side to the laser color production layer in the second surface-side transparent layer.

The multi-layered body may further include a window portion which is formed so as to penetrate the base material layer and the laser color production layer and at least partially overlap with the near-infrared absorption layer and which has visible light transparency and near-infrared transparency.

The multi-layered body may further include a base material intermediate layer, the base material intermediate layer may include a first portion and a second portion, the base material layer may include a first base material layer and a second base material layer, wherein the first portion of the base material intermediate layer may be positioned between the first base material layer and the second base material layer, and the second portion of the base material intermediate layer may be positioned at an end of the base material intermediate layer and may not be positioned between the first base material layer and the second base material layer.

The near-infrared absorption layer may include a near-infrared information display unit which displays information using a change in near-infrared absorption characteristics inside the near-infrared absorption layer caused by irradiating the near-infrared absorption layer with laser light, the laser color production layer may include a visible information display unit which displays information using a change in visible light absorption characteristics inside the laser color production layer caused by irradiating the laser color production layer with laser light, and the information displayed by the near-infrared information display unit and the information displayed by the visible information display unit may contain a same piece of information.

In addition, the present invention provides a print product in which a plurality of sheets are bound together, wherein at least one sheet among the plurality of the sheets is the multi-layered body provided by the present invention described above, and the multi-layered body may be bound with the other sheets in the second portion of the base material intermediate layer.

Furthermore, the present invention provides a multi-layered body including: a base material layer; a near-infrared absorption layer which is formed on a side of a first surface of the base material layer and which contains a near-infrared absorption ink composition containing a near-infrared absorption material; a laser color production layer which is formed on a side of the first surface of the base material layer, which contains a laser color production agent, and which produces color when irradiated with laser light; and a window portion which is formed so as to penetrate the base material layer and the laser color production layer and at least partially overlap with the near-infrared absorption layer and which has visible light transparency and near-infrared transparency, wherein the near-infrared absorption material contains cesium tungsten oxide or lanthanum hexaboride, and when a target portion of the near-infrared absorption layer is irradiated with laser light, near-infrared absorbency in at least a predetermined wavelength range of the target portion declines.

The near-infrared absorption layer may include a near-infrared information display unit which displays information using a change in near-infrared absorption characteristics inside the near-infrared absorption layer caused by irradiating the near-infrared absorption layer with laser light, the laser color production layer may include a visible information display unit which displays information using a change in visible light absorption characteristics inside the laser color production layer caused by irradiating the laser color production layer with laser light, and the information displayed by the near-infrared information display unit and the information displayed by the visible information display unit may contain a same piece of information.

In addition, the present invention provides a method of irradiating a target portion of a near-infrared absorption layer in a multi-layered body with laser light so as to lower near-infrared absorbency in at least a predetermined wavelength range of the target portion, the multi-layered body including: a base material layer; the near-infrared absorption layer which is formed on a side of a first surface of the base material layer and which contains a near-infrared absorption ink composition containing a near-infrared absorption material, the near-infrared absorption material containing cesium tungsten oxide or lanthanum hexaboride; and a laser color production layer which is formed on a side of a second surface of the base material layer, which contains a laser color production agent, and which produces color when irradiated with laser light.

Furthermore, the present invention provides a method of determining authenticity of a multi-layered body by comparing a displayed content of a near-infrared information display unit and a displayed content of a visible information display unit with each other, the multi-layered body including: a base material layer; a near-infrared absorption layer which is formed on a side of a first surface of the base material layer and which contains a near-infrared absorption ink composition containing a near-infrared absorption material, the near-infrared absorption material containing cesium tungsten oxide or lanthanum hexaboride, and which includes the near-infrared information display unit which displays information using a change in near-infrared absorption characteristics inside the near-infrared absorption layer; and a laser color production layer which is formed on a side of a second surface of the base material layer, which contains a laser color production agent, which produces color when irradiated with laser light, and which includes the visible information display unit which displays information using a change in visible light absorption characteristics inside the laser color production layer.

Moreover, the present invention provides a method of determining authenticity of a multi-layered body by comparing a displayed content of a near-infrared information display unit and a displayed content of a visible information display unit with each other, the multi-layered body including: a base material layer; a near-infrared absorption layer which is formed on a side of a first surface of the base material layer and which contains a near-infrared absorption ink composition containing a near-infrared absorption material, the near-infrared absorption material containing cesium tungsten oxide or lanthanum hexaboride, and which includes the near-infrared information display unit which displays information using a change in near-infrared absorption characteristics inside the near-infrared absorption layer; a laser color production layer which is formed on a side of the first surface of the base material layer, which contains a laser color production agent, which produces color when irradiated with laser light, and which includes the visible information display unit which displays information using a change in visible light absorption characteristics inside the laser color production layer; and a window portion which is formed so as to penetrate the base material layer and the laser color production layer and at least partially overlap with the near-infrared absorption layer and which has visible light transparency and near-infrared transparency.

Advantageous Effects of Invention

According to the present invention, by providing a near-infrared absorption layer and a laser color production layer on surfaces on mutually opposite sides or on surfaces that do not completely overlap with each other even on a same side as viewed from a base material layer, both printing of personal information on the laser color production layer by black color production or the like and printing of personal information on the near-infrared absorption layer which is hardly visually recognizable under visible light but is recognizable using an infrared camera or the like can be realized in a same multi-layered body. In particular, by providing the near-infrared absorption layer on a surface on the opposite side to the laser color production layer as viewed from the base material layer, near-infrared absorption characteristics of the near-infrared absorption layer can be prevented from being affected by laser printing which is performed on the laser color production layer.

Brief Description of Drawings

[Figure 1] Figure 1 is a diagram showing an observation image under visible light (visible light image) of a front surface of a multi-layered body according to a first embodiment of the present invention.

[Figure 2] Figure 2 is a diagram showing an observation image by a near-infrared camera (near-infrared image) of the front surface of the multi-layered body according to the first embodiment of the present invention. (A contour of the multi-layered body has been drawn in order to facilitate visualization of the diagram. A similar description applies to other drawings.)

[Figure 3] Figure 3 is a diagram showing an observation image under visible light (visible light image) of a rear surface of the multi-layered body (A surface which becomes visible when the multi-layered body is turned over by rotating the multi-layered body around an axis AX in Figure 1. A similar description applies to other embodiments.) according to the first embodiment of the present invention.

[Figure 4] Figure 4 is a diagram showing an observation image by a near-infrared camera (near-infrared image) of the rear surface of the multi-layered body according to the first embodiment of the present invention. (A contour of the multi-layered body has been drawn in order to facilitate visualization of the diagram. A similar description applies to other drawings.)

[Figure 5] Figure 5 is a diagram conceptually showing an example (as viewed from below in a paper plane shown in Figure 1) of a layer structure of the multi-layered body shown in Figure 1 when viewing an A-A' cross section taken along a line A-A' in Figure 1. (Each layer has been separately drawn in order to show the layer structure. The same description applies to other drawings that show a layer structure.)

[Figure 6] Figure 6 is a diagram conceptually showing another example (as viewed from below in the paper plane shown in Figure 1) of the layer structure of the multi-layered body shown in Figure 1 when viewing the A-A' cross section taken along the line A-A' in Figure 1.

[Figure 7] Figure 7 is a diagram conceptually showing yet another example (as viewed from below in the paper plane shown in Figure 1) of the layer structure of the multi-layered body shown in Figure 1 when viewing the A-A' cross section taken along the line A-A' in Figure 1.

[Figure 8] Figure 8 is a diagram (near-infrared image) showing micro characters which become visible when enlarging a part of a micro display print image using a near-infrared absorption ink shown in Figure 4.

[Figure 9] Figure 9 is a diagram (near-infrared image) showing micro characters which respectively become visible when enlarging a part of a print image using a near-infrared absorption ink and a part of a portrait image generated by laser marking (laser drawing) shown in Figure 4.

[Figure 10] Figure 10 is a diagram (near-infrared image) showing micro characters generated by laser marking (laser printing) of a rear surface of a multi-layered body according to a second embodiment of the present invention.

[Figure 11] Figure 11 is a diagram showing a near-infrared image of a rear surface of a multi-layered body according to a third embodiment of the present invention.

[Figure 12] Figure 12 is a diagram showing an observation image under visible light (visible light image) of a front surface of a multi-layered body according to a fourth embodiment of the present invention.

[Figure 13] Figure 13 is a diagram showing an observation image by a near-infrared camera (near-infrared image) of the front surface of the multi-layered body according to the fourth embodiment of the present invention. (A contour of the multi-layered body has been drawn in order to facilitate visualization of the diagram. A similar description applies to other drawings.)

[Figure 14] Figure 14 is a diagram showing an observation image under visible light (visible light image) of a rear surface of the multi-layered body (A surface which becomes visible when the multi-layered body is turned over by rotating the multi-layered body around an axis AX in Figure 12. A similar description applies to other embodiments.) according to the fourth embodiment of the present invention.

[Figure 15] Figure 15 is a diagram showing an observation image by a near-infrared camera (near-infrared image) of the rear surface of the multi-layered body according to the fourth embodiment of the present invention. (A contour of the multi-layered body has been drawn in order to facilitate visualization of the diagram. A similar description applies to other drawings.)

[Figure 16] Figure 16 is a diagram conceptually showing an example (as viewed from the right in a paper plane shown in Figure 12) of a layer structure of the multi-layered body shown in Figure 12 when viewing a B-B' cross section taken along a line B-B' in Figure 12. (Each layer has been separately drawn in order to show the layer structure. In addition, while a colored ink layer (or a fluorescent ink layer or a hologram layer) 12 and a near-infrared absorption layer 13 on a side of the rear surface are not cut along the line B-B' to be exact, the layers have been drawn to facilitate understanding of the layer structure. The same description applies to other drawings that show a layer structure.)

[Figure 17] Figure 17 is a diagram conceptually showing another example (as viewed from the right in a paper plane shown in Figure 12) of a layer structure of the multi-layered body shown in Figure 12 when viewing a B-B' cross section taken along a line B-B' in Figure 12. (Each layer has been separately drawn in order to show the layer structure. In addition, while the colored ink layer (or a fluorescent ink layer or a hologram layer) 12 and the near-infrared absorption layer 13 on a side of the rear surface are not cut along the line B-B' to be exact, the layers have been drawn to facilitate understanding of the layer structure. The same description applies to other drawings that show a layer structure.)

[Figure 18] Figure 18 is a diagram showing an observation image under visible light (visible light image) of a front surface of a multi-layered body according to a fifth embodiment of the present invention. (Despite being transparent, a lenticular lens has been drawn in order to facilitate visualization of the drawing. In addition, a display by laser marking on a laser color production layer 10 which is visible under the lenticular lens has been omitted.)

[Figure 19] Figure 19 is a diagram showing a visible light image of the front surface when viewing the multi-layered body shown in Figure 18 from a direction of an arrow C in Figure 26 to be described later.

[Figure 19A] Figure 19A is a diagram showing a near-infrared image of the front surface when viewing the multi-layered body shown in Figure 18 from the direction of the arrow C in Figure 26 to be described later.

[Figure 20] Figure 20 is a diagram showing a visible light image of the front surface when viewing the multi-layered body shown in Figure 18 from a direction of an arrow D in Figure 26 to be described later.

[Figure 20A] Figure 20A is a diagram showing a near-infrared image of the front surface when viewing the multi-layered body shown in Figure 18 from the direction of the arrow D in Figure 26 to be described later.

[Figure 21] Figure 21 is a diagram showing an observation image under visible light (visible light image) of a rear surface of the multi-layered body shown in Figure 18. (Despite being transparent, a lenticular lens has been drawn in order to facilitate visualization of the drawing.)

[Figure 22] Figure 22 s a diagram showing a near-infrared image of the rear surface when viewing the multi-layered body shown in Figure 18 from a direction of an arrow E in Figure 26 to be described later.

[Figure 23] Figure 23 is a diagram showing a near-infrared image of the rear surface when viewing the multi-layered body shown in Figure 18 from a direction of an arrow F in Figure 26 to be described later.

[Figure 24] Figure 24 is a diagram conceptually showing an example (as viewed from below in a paper plane shown in Figure 18) of a layer structure of the multi-layered body shown in Figure 18 when viewing an A-A' cross section taken along a line A-A' in Figure 18. (Each layer has been separately drawn in order to show the layer structure. In addition, while a colored ink layer (or a fluorescent ink layer or a hologram layer) 11 on a side of the front surface and a colored ink layer (or a fluorescent ink layer or a hologram layer) 12 on a side of the rear surface are not cut along the line A-A' to be exact, the layers have been drawn to facilitate understanding of the layer structure. The same description applies to other drawings that show a layer structure.)

[Figure 25] Figure 25 is a diagram conceptually showing another example (as viewed from below in the paper plane shown in Figure 18) of the layer structure of the multi-layered body shown in Figure 18 when viewing the A-A' cross section taken along the line A-A' in Figure 18.

[Figure 26] Figure 26 is a diagram conceptually showing an example (as viewed from the right in a paper plane shown in Figure 18) of the layer structure of the multi-layered body shown in Figure 18 when viewing a B-B' cross section taken along a line B-B' in Figure 18. (Each layer has been separately drawn in order to show the layer structure. In addition, while a colored ink layer (or a fluorescent ink layer or a hologram layer) 12, a near-infrared absorption layer 13, and a lenticular lens 31 on a side of the rear surface are not cut along the line B-B' to be exact, the layers and the lens have been drawn to facilitate understanding of the layer structure. The same description applies to other drawings that show a layer structure.)

[Figure 27] Figure 27 is a diagram conceptually illustrating a lenticular principle.

[Figure 28] Figure 28 is a diagram showing an observation image under visible light (visible light image) of a front surface of a multi-layered body according to a sixth embodiment of the present invention.

[Figure 29] Figure 29 is a diagram showing an observation image by a near-infrared camera (near-infrared image) of the front surface of the multi-layered body according to the sixth embodiment of the present invention. (A contour of the multi-layered body has been drawn in order to facilitate visualization of the diagram. A similar description applies to other drawings.)

[Figure 30] Figure 30 is a diagram showing an observation image under visible light (visible light image) of a rear surface of the multi-layered body (A surface which becomes visible when the multi-layered body is turned over by rotating the multi-layered body around an axis AX in Figure 28. A similar description applies to other embodiments.) according to the sixth embodiment of the present invention.

[Figure 31] Figure 31 is a diagram showing an observation image by a near-infrared camera (near-infrared image) of the rear surface of the multi-layered body according to the sixth embodiment of the present invention. (A contour of the multi-layered body has been drawn in order to facilitate visualization of the diagram. A similar description applies to other drawings.)

[Figure 32] Figure 32 is a diagram conceptually showing an example (as viewed from below in a paper plane shown in Figure 28) of a layer structure of the multi-layered body shown in Figure 28 when viewing an A-A' cross section taken along a line A-A' in Figure 28. (Each layer has been separately drawn in order to show the layer structure. In addition, while a colored ink layer (or a fluorescent ink layer or a hologram layer) 11 on a side of the front surface and a colored ink layer (or a fluorescent ink layer or a hologram layer) 12 on a side of the rear surface are not cut along the line A-A' to be exact, the layers have been drawn to facilitate understanding of the layer structure. The same description applies to other drawings that show a layer structure.)

[Figure 33] Figure 33 is a diagram conceptually showing another example (as viewed from below in the paper plane shown in Figure 28) of the layer structure of the multi-layered body shown in Figure 28 when viewing the A-A' cross section taken along the line A-A' in Figure 28.

[Figure 34] Figure 34 is a diagram showing an observation image under visible light (visible light image) of a front surface of a multi-layered body according to a seventh embodiment of the present invention.

[Figure 35] Figure 35 is a diagram showing an observation image by a near-infrared camera (near-infrared image) of the front surface of the multi-layered body according to the seventh embodiment of the present invention. (A contour of the multi-layered body has been drawn in order to facilitate visualization of the diagram. A similar description applies to other drawings.)

[Figure 36] Figure 36 is a diagram showing an observation image under visible light (visible light image) of a rear surface of the multi-layered body (A surface which becomes visible when the multi-layered body is turned over by rotating the multi-layered body around an axis AX in Figure 34. A similar description applies to other embodiments.) according to the seventh embodiment of the present invention.

[Figure 37] Figure 37 is a diagram showing an observation image by a near-infrared camera (near-infrared image) of the rear surface of the multi-layered body according to the seventh embodiment of the present invention. (A contour of the multi-layered body has been drawn in order to facilitate visualization of the diagram. A similar description applies to other drawings.)

[Figure 38] Figure 38 is a diagram conceptually showing an example (as viewed from the right in a paper plane shown in Figure 34) of a layer structure of the multi-layered body shown in Figure 34 when viewing a B-B' cross section taken along a line B-B' in Figure 34. (Each layer has been separately drawn in order to show the layer structure. In addition, while colored ink layers (or fluorescent ink layers or hologram layers) 11 and 12 on a side of the front surface and a side of the rear surface are not cut along the line B-B' to be exact, the layers have been drawn to facilitate understanding of the layer structure. The same description applies to other drawings that show a layer structure.)

[Figure 39] Figure 39 is a diagram showing a print product fabricated using the multi-layered body according to the seventh embodiment of the present invention.

[Figure 40] Figure 40 schematically shows a configuration of a laser marker apparatus.

[Figure 41] Figure 41 is a diagram showing a near-infrared image when a cesium tungsten oxide-containing ink and a ytterbium oxide-containing ink are observed by an infrared camera and a near-infrared image when a printed matter created by performing offset printing of the cesium tungsten oxide-containing ink and the ytterbium oxide-containing ink on a base material is observed by an infrared camera.

[Figure 42] Figure 42 is a graph showing results of measurements of reflectance (before laser printing) of a visible light region to a near-infrared region of a printing surface before performing laser printing in a printed matter created by performing offset printing using cesium tungsten oxide-containing ink on various base materials and reflectance (after laser printing) of a visible light region to a near-infrared region in an area where laser printing has been performed with respect to the printing surface of the printed matter. (Results of measurements of reflectance on a side of the printing surface (ink side) are shown. The same description applies to other graphs.)

[Figure 43] Figure 43 is a graph representing measurement results when PC (polycarbonate) is used as a base material having been extracted from the graph shown in Figure 42.

[Figure 44] Figure 44 is a graph representing measurement results when PET-G (amorphous polyester) is used as a base material having been extracted from the graph shown in Figure 42.

[Figure 45] Figure 45 is a graph representing measurement results when PVC (polyvinyl chloride) is used as a base material having been extracted from the graph shown in Figure 42.

[Figure 46] Figure 46 is a graph showing results of measuring reflectance of a visible light region to a near-infrared region of a printing surface when performing offset printing on high-quality paper as a base material using ink compositions with variously different contents (represented by contents by percentage in units of percent by weight (weight%)) of cesium tungsten oxide.

[Figure 47] Figure 47 is a graph showing results of measurements of reflectance (before laser printing) of a visible light region to a near-infrared region of a printing surface before performing laser printing in a printed matter created by performing offset printing using lanthanum hexaboride-containing ink on PC (polycarbonate) as a base material and reflectance (after laser printing) of a visible light region to a near-infrared region in an area where laser printing has been performed with respect to the printing surface of the printed matter.

Description of Embodiments

Hereinafter, a multi-layered body, a print product, and a method of using the multi-layered body which represent exemplary embodiments of the present invention will be described with reference to the drawings. However, it should be noted that the multi-layered body, the print product, and the method of using the multi-layered body according to the present invention are not limited to the specific aspects described hereinafter and that various modifications can be made within the scope of the present invention. Each function, element, and the like included in the following embodiments can be deleted or modified appropriately within the scope of the present invention, any function, element, and the like not included in the embodiments can be added within the scope of the present invention, and the respective embodiments can be implemented by appropriately combining the embodiments with each other. For example, while a multi-layered body in which a visually recognizable colored ink layer is printed on a base material or a transparent sheet will be described in the following embodiments, a fluorescent ink layer may be formed by printing or the like using a fluorescent ink composition which emits light when irradiated with excitation light in place of the colored ink layer or in addition to the colored ink layer or a hologram layer may be formed, or the colored ink layer and the like may not be formed on the base material or the transparent sheet. Formation of a near-infrared absorption layer (near-infrared absorption ink layer) by offset printing is also not essential and the near-infrared absorption layer (near-infrared absorption ink layer) can also be formed by silkscreen printing, gravure printing, flexographic printing, ink-jet printing, or the like (the printing does not even have to be micro display printing). While the colored ink layer, the fluorescent ink layer, the hologram layer, and the like preferably have near-infrared transparency which enables at least a part of near-infrared radiation among irradiated near-infrared radiation to be transmitted, it is not essential that these layers have near-infrared transparency. In addition, while a multi-layered body in which an oversheet layer (transparent sheet) is formed in an uppermost layer and a lowermost layer of the multi-layered body will be described in the following embodiments, providing these oversheet layers is also not essential. Formation of the near-infrared absorption ink layer by printing is also not essential and the near-infrared absorption ink layer, the colored ink layer, and the like may be formed by a same method or formed by different methods. While the Examples to be described later show that using near-infrared (radiation) laser light as laser light is particularly effective and the respective embodiments describe near-infrared laser light being used as laser light, this does not mean that laser light that can be used in the present invention is limited to near-infrared laser light. In other words, it is not essential to use near-infrared laser light created by a near-infrared laser (for example, a Nd:YAG laser, a $YVO_4$ laser, or a fiber laser) as the laser light, and laser light created by an ultraviolet laser (for example, a THG laser), a visible light laser (for example, a SHG laser), a far-infrared laser (for example, a $CO_2$ laser), and the like can also be used.

Note that in the following embodiments, "near-infrared radiation" is assumed to be electromagnetic waves with a wavelength ranging from 780 nm to 2000 nm (according to "JIS Z 8117:2002 Glossary of Far Infrared Radiation Terms"). "Near-infrared laser light (near-infrared radiation laser light)" is assumed to be laser light having a wavelength within the wavelength range of near-infrared radiation described above. In addition, "visible light" is assumed to be electromagnetic waves with a wavelength ranging from 400 nm to 780 nm. Furthermore, in the following embodiments, "near-infrared absorbency" means a property of absorbing at least a part of irradiated near-infrared radiation, and "near-infrared transparency" means a property of transmitting at least a part of irradiated near-infrared radiation. In a similar manner, in the following embodiments, "visible light absorbency" means a property of absorbing at least a part of irradiated visible light, and "visible light transparency" means a property of transmitting at least a part of irradiated visible light. In addition, in the following embodiments, "laser marking" on a near-infrared absorption layer by laser light such as near-infrared laser light means drawing (or writing) some kind of a display content such as a picture, characters, or other information on the near-infrared absorption layer by irradiating the near-infrared absorption layer with laser light and changing absorption characteristics of the near-infrared absorption layer with respect to near-infrared radiation. Furthermore, in the following embodiments, "laser marking" on a laser color production layer by laser light such as near-infrared laser light means drawing (or writing) some kind of a display content such as a picture, characters, or other information on the laser color production layer by irradiating the laser color production layer with laser light and changing absorption characteristics of the laser color production layer with respect to visible light and near-infrared radiation.

(First embodiment)

Figure 1 is a diagram showing an observation image under visible light (visible light image) of a front surface (which is assumed to be an outermost surface on a side of an oversheet layer 14 in Figure 5. A similar description applies to other drawings.) of a multi-layered body according to a first embodiment of the present invention. While a multi-layered body 1 is assumed to be a printed matter for identifying an individual such as an identity document in the present embodiment and subsequent embodiments, the multi-layered body 1 is not limited thereto and the multi-layered body 1 can be fabricated as a multi-layered body of any kind such as cards including credit cards and cash cards, bank bills, and the like. A laser color production layer 10 is fused by thermal pressing on a base material layer 9 (refer to Figure 5 or the like to be described later) of the multi-layered body 1, and a portrait image 2 and person identification information 3 are drawn (depicted) by laser marking which involves irradiating the laser color production layer 10 with near-infrared laser light. The portrait image 2 is drawn by irradiating the laser color production layer 10 with near-infrared laser light so as to draw a person on the laser color production layer 10 by laser marking. The person identification information 3 is drawn by irradiating the laser color production layer 10 with near-infrared laser light so as to write identification information (a name, an individual identification number, and the like) of a person on the laser color production layer 10 by laser marking. In addition, as shown in Figure 5 to be described later, a mark 4 is printed on the oversheet layer 14 (a colored ink layer 11 in Figure 5) using a colored ink with near-infrared transparency (colored ink with visible light absorption) such as UV SOYBI SG yellow (manufactured by DIC Graphics Corporation), UV SOYBI SG crimson (manufactured by DIC Graphics Corporation), UV SOYBI SG indigo (manufactured by DIC Graphics Corporation), UV 161 yellow S (manufactured by T&K TOKA CO., LTD.), UV 161 crimson S (manufactured by T&K TOKA CO., LTD.), and UV 161 indigo S (manufactured by T&K TOKA CO., LTD.).

Figure 2 is a diagram showing an observation image by a near-infrared camera (near-infrared image) of the front surface of the multi-layered body according to the first embodiment of the present invention. (A contour of the multi-layered body has been drawn in order to facilitate visualization of the diagram. A similar description applies to other drawings.) Such an observation image can be obtained by observation or the like using a near-infrared camera. Since the portrait image 2 and the person identification information 3 drawn by laser marking with respect to the laser color production layer 10 has absorption with respect to visible light and near-infrared radiation, the portrait image 2 and the person identification information 3 can be recognized not only under visible light but also by a near-infrared camera. On the other hand, since the mark 4 is formed by printing using a colored ink with near-infrared transparency, the mark 4 is unrecognizable (or at least difficult to recognize) depending on the near-infrared camera.

Figure 3 is a diagram showing an observation image under visible light (visible light image) of a rear surface of the multi-layered body (A surface which becomes visible when the multi-layered body 1 is turned over by rotating the multi-layered body 1 around an axis AX in Figure 1. The surface is assumed to be an outermost surface on a side of an oversheet layer 15 in Figure 5. A similar description applies to other embodiments.) according to the first embodiment of the present invention. A mark 5 is printed on a rear surface of the base material layer 9 (a colored ink layer 12 in Figure 5) using a colored ink with near-infrared transparency (colored ink with visible light absorption).

Figure 4 is a diagram showing an observation image by a near-infrared camera (near-infrared image) of the rear surface of the multi-layered body according to the first embodiment of the present invention. (A contour of the multi-layered body has been drawn in order to facilitate visualization of the diagram. A similar description applies to other drawings.) In the observation image, a print image 6 is formed by printing on the base material layer 9 or the oversheet layer 15 (refer to Figure 5) using a near-infrared absorption ink containing at least one of cesium tungsten oxide and lanthanum hexaboride which are near-infrared absorption materials (near-infrared absorption ink layer 13). As will be described later with reference to an experiment result, the near-infrared absorption ink composition containing cesium tungsten oxide or lanthanum hexaboride has a property that, when irradiated with near-infrared laser light, absorptance with respect to near-infrared radiation in at least a predetermined wavelength range decreases (reflectance increases), and when a near-infrared absorption ink layer formed by printing using such a near-infrared absorption ink composition is irradiated with near-infrared laser light (laser marking) so as to draw characters, an image (a picture, graphic, or the like), or the like, near-infrared absorption characteristics of a drawn portion changes and, therefore, characters, an image, or the like which are recognizable using an infrared camera or the like is to be formed on the near-infrared absorption ink layer. A portrait image 7 is drawn by irradiating the print image 6 with near-infrared laser light so as to draw a person on the print image 6 by laser marking. Person identification information 8 is drawn by irradiating the print image 6 with near-infrared laser light so as to write identification information (a name, an individual identification number, and the like) of a person on the print image 6 by laser marking.

The portrait image 2 drawn by laser marking on the laser color production layer 10 and the portrait image 7 drawn by laser marking on the near-infrared absorption ink layer 13 may be a "same" picture (information) and the person identification information 3 drawn by laser marking on the laser color production layer 10 and the person identification information 8 drawn by laser marking on the near-infrared absorption ink layer 13 may be a "same" picture (information). For example, when using the multi-layered body 1 as some kind of identification such as a passport, a security function can be enhanced by performing laser marking in such an aspect. For example, while an attendant such as an employee of the Immigration Bureau can confirm a passport at an airport or the like using an infrared camera, by providing "a face photograph of a person (a chromatic laser marking image in black and white or color)" by laser marking in a laser print portion of the laser color production layer 10 and providing "a face photograph of a person (a laser marking image)" being a same picture as that on the laser color production layer 10 as a picture in a laser marking portion of the near-infrared absorption ink layer 13, the attendant or the like performing confirmation work such as censorship can recognize that the same picture is present on both the laser color production layer 10 and the near-infrared absorption ink layer 13 when using an infrared camera or the like in addition to a visible light camera, the naked eye, or the like although the pictures cannot be recognized under visible light alone. In other words, even when a counterfeiter counterfeits a photograph on the laser color production layer 10 (even when the counterfeiter draws a portrait image on the laser color production layer 10 by laser marking), if the presence of a different face photograph in a portion not visible under visible light (a portrait image drawn by laser marking on the near-infrared absorption ink layer 13) can be confirmed using an infrared camera or the like, the attendant or the like can quickly recognize that the multi-layered body 1 as an identification or the like is a counterfeit. A "same" picture can be similarly provided on the laser color production layer and the near-infrared absorption ink layer not only in the multi-layered body 1 according to the first embodiment but also in all of the embodiments (including modifications of the respective embodiments) and counterfeits can be quickly detected in a similar manner.

As a cesium tungsten oxide-containing ink composition, inks containing cesium tungsten oxide represented by the chemical formula (general formula) $Cs_xW_yO_z$ (where x, y, and z are each a positive real number) can be used. In one example, an ink containing fine particles which has a hexagonal crystal structure, which is represented by $Cs_{0.33}WO_3$, and which is described in Patent Literature 8 (Japanese Patent No. 6160830) can be used. As a qualitative analysis method of cesium tungsten oxide, for example, inclusion of cesium tungsten oxide ($Cs_{0.33}WO_3$) can be confirmed by the method described below.

(1) Absorptiometric Analysis: whether or not wavelengths in the infrared range are absorbed
(2) Energy Dispersive x-ray Spectroscopy: whether or not W and Cs are present
(3) Electron Probe Micro Analyzer (EPMA): whether or not W is present
(4) X-ray Absorption Fine Structure (XAFS): valence of W

As a lanthanum hexaboride-containing ink composition, inks containing fine particles represented by the chemical formula $LaB_6$ can be used. In addition to cesium tungsten oxide or lanthanum hexaboride, the near-infrared absorption ink contains a dispersant, a monomer, synthetic resins, an auxiliary agent, and the like. While a content by percentage of cesium tungsten oxide in the cesium tungsten oxide-containing ink is arbitrary, one example having favorable characteristics at a content by percentage of 0.5 weight% (weight percent) to 6 weight% is shown in the Examples to be described later. A content by percentage of lanthanum hexaboride in the lanthanum hexaboride-containing ink is also arbitrary and, while the content by percentage in one example may be 0.05 weight% (weight percent) to 6 weight%, an example having favorable characteristics at a content by percentage of 0.3 weight% is shown in the Examples to be described later.

As a qualitative analysis method of lanthanum boride (lanthanum hexaboride), for example, inclusion of lanthanum boride ($LaB_6$) can be confirmed by the method described below.

(1) Mass Spectrometry (MS): whether or not La and B are present, ratio of La and B

Even when using a near-infrared absorption ink containing both cesium tungsten oxide and lanthanum hexaboride, respective contents by percentage of cesium tungsten oxide and lanthanum hexaboride are similarly arbitrary. In any case, a preferable content by percentage can be modified by print density (accumulated amount). Note that "a content by percentage (weight%) of cesium tungsten oxide" as used herein refers to a ratio of the weight of cesium tungsten oxide contained in ink to the total weight of the ink and is represented by

$$\text{Content by percentage (weight\%) of cesium tungsten oxide in ink} = \{(\text{weight of cesium tungsten oxide})/(\text{total weight of ink})\} \times 100.$$

In a similar manner, "a content by percentage (weight%) of lanthanum hexaboride" refers to a ratio of the weight of lanthanum hexaboride contained in ink to the total weight of the ink and is represented by

$$\text{Content by percentage (weight\%) of lanthanum hexaboride in ink} = \{(\text{weight of lanthanum hexaboride})/(\text{total weight of ink})\} \times 100.$$

Figure 5 is a diagram conceptually showing an example (as viewed from below in a paper plane shown in Figure 1) of a layer structure of the multi-layered body shown in Figure 1 when viewing an A-A' cross section taken along a line A-A' in Figure 1 (Each layer has been separately drawn in order to show the layer structure. The same description applies to other drawings that show a layer structure.)

The base material layer 9 is formed of a sheet-like base material (white sheet) with low visible light transparency and low near-infrared transparency which is fabricated using a material such as PVC (polyvinyl chloride), PET-G (copolyester), PC (polycarbonate), PET (polyethylene terephthalate), or PP (polypropylene). In addition, when not using the oversheet layers 14 and 15, the base material layer 9 may be a paper base material (high-quality paper, code paper, or the like) (the paper base material can be used as the base material layer 9 even when using the oversheet layers 14 and 15).

The laser color production layer 10 is a transparent sheet-like layer containing a laser color production agent and is fused to the base material layer 9 by pressing. The laser color production layer 10 has a property of producing color when irradiated with laser light. Since absorbency with respect to visible light and near-infrared radiation of a portion irradiated with laser light among the laser color production layer 10 changes (in one example, due to increases in visible light absorbency and near-infrared absorbency, the portion appears darker than other portions both visually and by an observation using an infrared camera), the portion can be recognized both visually and by an observation using an infrared camera. As the laser color production agent, as described in the Specification of Japanese Patent No. 6167803, for example, colorants including dyes and pigments, clays, and the like can be used and, specifically, one or more kinds selected from among metal compounds such as yellow iron oxide, inorganic lead compounds, manganese violet, cobalt violet, mercury, cobalt, copper, and nickel, pearlescent pigments, silicon compounds, micas, kaolins, silica sand, diatomaceous earth, talc, titanium oxide-coated micas, tin dioxide-coated micas, antimony-coated micas, tin-antimony-coated micas, tin-antimony-titanium oxide-coated micas, and the like can be used (Paragraph [0043] in the Specification of Japanese Patent No. 6167803). As a color production material which produces color in response to a low-output laser, particularly, at least a bismuth-based compound can be used, and while specifically, bismuth compounds are not particularly limited, specific examples include bismuth nitrate-based compounds such as bismuth oxide, bismuth nitrate, and bismuth oxynitrate, bismuth halide-based compounds such as bismuth chloride, bismuth oxychloride, bismuth sulfate, bismuth acetate, bismuth citrate, bismuth hydroxide, and bismuth titanate, among these compounds, bismuth nitrate and bismuth hydroxide can be preferably used from the perspectives of availability and affordability, a bismuth-based compound can include one or more kinds of these compounds, and in addition to a color production material at least containing a bismuth-based compound as an example, a color production material other than a bismuth compound can also be used in combination as long as the material produces color in response to laser light (Paragraph [0044] in the Specification of Japanese Patent No. 6167803). In addition, when using a color production material at least containing a bismuth-based compound as an example, a color production material which produces color in response to laser light and/or an inorganic compound for increasing color production efficiency can be further used, and an inorganic compound is preferably added since using a metallic oxide, a composite oxide or a metallic salt, or a compound containing one or more of a metallic oxide, a composite oxide, and a metallic salt as the inorganic compound assists color production of the color production material due to the inorganic compound functioning as a color production material and/or the inorganic compound increasing heat generation efficiency even when the inorganic compound is irradiated with low-output laser light or increases whiteness of white ink containing the color production material and a white pigment (Paragraph [0045] in the Specification of Japanese Patent No. 6167803).

The oversheet layer (transparent sheet) 14 having visible light transparency and near-infrared transparency is formed in an uppermost layer on a front side of the multi-layered body 1, and the oversheet layer (transparent sheet) 15 having visible light transparency and near-infrared transparency is formed in a lowermost layer on a rear side of the multi-layered body 1. The oversheet layers 14 and 15 can form the multi-layered body 1 by, for example, preparing two sheets of transparent PC (polycarbonate) with a thickness of around 0.05 mm to 0.2 mm, stacking one sheet each on the lowermost layer and the uppermost layer of the multi-layered body 1 prior to forming the oversheet layers 14 and 15, and fusing the oversheet layers 14 and 15 by applying heat and pressure or the like. When forming the colored ink layer 11 (or the fluorescent ink layer, the hologram layer, or the like. A similar principle applies to other descriptions.) on the oversheet layer 14, printing using a colored ink is performed on the oversheet layer 14 in advance to form the colored ink layer 11 before stacking the oversheet layer 14. In addition, when forming the near-infrared absorption ink layer 13 and the colored ink layer 12 on the oversheet layer 15, printing using near-infrared absorption ink and colored ink is performed on the oversheet layer 15 in advance to form the near-infrared absorption ink layer 13 and the colored ink layer 12 before stacking the oversheet layer 15. When forming print layers on the oversheet layers 14 and 15, the print layers are preferably stacked so as to be arranged on the side of the base material layer 9 in order to prevent falsification. Furthermore, when there is an oversheet layer, printed information is to be printed on the inside of the multi-layered body, making falsification even more difficult. As another example, the multi-layered body 1 may be formed by laminating the multi-layered body 1 prior to forming the oversheet layers 14 and 15 from above and below by two sheets of arbitrary transparent film (if necessary, printing by colored ink, near-infrared absorption ink, or the like is performed in advance on any of each sheet of film, the base material layer 9, and the laser color production layer 10) and gluing the layers together by using an adhesive between the layers. A similar procedure applies to fusing of the laser color production layer 10 with respect to the base material layer 9. As described earlier, forming the oversheet layers 14 and 15 is not essential and only one of the oversheet layers 14 and 15 may be formed or the multi-layered body 1 may be fabricated by forming neither of the oversheet layers. Note that laser marking with respect to the laser color production layer 10 is performed from a side of the uppermost layer of the multi-layered body 1 (a side of the oversheet layer 14).

In addition, laser marking with respect to the print image 6 (the near-infrared absorption ink layer 13) is performed from a side of the lowermost layer of the multi-layered body 1 (a side of the oversheet layer 15).

The colored ink layer 11 is formed on the oversheet layer 14 (or on the laser color production layer 10). As described earlier, the colored ink layer 11 is formed by printing the mark 4 using a colored ink with near-infrared transparency on the oversheet layer 14 (or on the laser color production layer 10). A method of forming the colored ink layer 11 is arbitrary and, for example, a printing method such as letterpress printing, offset printing, silkscreen printing, gravure printing, flexographic printing, or inkjet printing or other arbitrary formation methods can be used. Note that in place of the colored ink layer 11 or in addition to the colored ink layer 11, the fluorescent ink layer 11 may be formed using a fluorescent ink with near-infrared transparency such as UV Fluorescent Medium B (manufactured by T&K TOKA CO., LTD.), UV Fluorescent Medium Y (manufactured by T&K TOKA CO., LTD.), and UV Fluorescent Medium R (manufactured by T&K TOKA CO., LTD.). The fluorescent ink layer 11 can be formed using a fluorescent ink composition by performing printing or the like on the oversheet layer 14 in a similar manner to the colored ink layer 11, and a mark or the like can be printed in a similar manner to colored ink printing. Alternatively, the hologram layer 11 with near-infrared transparency such as a transparent hologram may be formed in place of the colored ink layer 11 or the fluorescent ink layer 11 or in addition to at least one of these layers. The colored ink layer 11 may be formed on a front surface (a surface on an opposite side to the laser color production layer 10) of the oversheet layer 14, formed on a rear surface (a surface on the side of the laser color production layer 10) of the oversheet layer 14, formed on a front surface (a surface on an opposite side to the base material layer 9) of the laser color production layer 10, formed on a rear surface (a surface on the side of the base material layer 9) of the laser color production layer 10, or formed on two or more among these surfaces (illustrations will be omitted when appropriate). Note that the colored ink layer 11, the fluorescent ink layer 11, and the hologram layer 11 need not have near-infrared transparency. In the Examples herein, the layers are uniformly assumed to have near-infrared transparency in order to simplify diagrams showing an observation image.

In addition, a colored ink layer 12 (or a fluorescent ink layer, a hologram layer, or the like. A material, a formation method, and the like thereof may be similar to those of the colored ink layer 11, the fluorescent ink layer 11, the hologram layer 11, or the like. A similar principle applies to other descriptions.) is formed on the oversheet layer 15 (or on the base material layer 9), and the near-infrared absorption ink layer 13 is formed so as to overlap with at least a part of the colored ink layer 12. As described earlier, the near-infrared absorption ink layer 13 is formed by printing the print image 6 on the oversheet layer 15 (or on the base material layer 9) using a near-infrared absorption ink. However, the near-infrared absorption ink layer 13 may be formed by an arbitrary formation method other than printing. For example, a near-infrared absorption layer (transparent sheet) containing a near-infrared absorption material may be formed such as the laser color production layer 10. In addition, it is also not essential that the colored ink layer 12 and the near-infrared absorption ink layer 13 at least partially overlap with each other and the colored ink layer 12 and the near-infrared absorption ink layer 13 may be formed completely separated from each other on the oversheet layer 15 or on the base material layer 9. Furthermore, when the colored ink layer 12 and the near-infrared absorption ink layer 13 at least partially overlap with each other, which of the layers is to be positioned on top is also arbitrary (refer to Figure 6). The colored ink layer 12 and the near-infrared absorption ink layer 13 may respectively be formed on a front surface (a surface on an opposite side to the base material layer 9) of the oversheet layer 15, formed on a rear surface (a surface on the side of the base material layer 9) of the oversheet layer 15, formed on a rear surface (a surface on an opposite side to the laser color production layer 10) of the base material layer 9, or formed on two or more among these surfaces (illustrations will be omitted when appropriate).

Figure 6 is a diagram conceptually showing another example (as viewed from below in the paper plane shown in Figure 1) of the layer structure of the multi-layered body shown in Figure 1 when viewing the A-A' cross section taken along the line A-A' in Figure 1. As described earlier, when the colored ink layer 12 and the near-infrared absorption ink layer 13 at least partially overlap with each other, which of the layers is to be positioned on top is arbitrary, and the multi-layered body 1 may have a layer structure shown in Figure 6 instead of the layer structure shown in Figure 5.

Figure 7 is a diagram conceptually showing yet another example (as viewed from below in the paper plane shown in Figure 1) of the layer structure of the multi-layered body shown in Figure 1 when viewing the A-A' cross section taken along the line A-A' in Figure 1. The colored ink layer 11 may be formed between the base material layer 9 and the laser color production layer 10, formed by printing or the like on the base material layer 9 as shown in Figure 7, or formed by printing or the like on the surface on the side of the base material layer 9 of the laser color production layer 10.

As an example of a manufacturing method of the multi-layered body 1 shown in Figure 1 to Figure 5, the multi-layered body 1 can be fabricated by a method including:

(1) Forming the colored ink layer 11 (the mark 4) by printing using a colored ink on the oversheet layer 14, forming the near-infrared absorption ink layer 13 (the print image 6) by printing using a near-infrared absorption ink on the oversheet layer 15, and forming the colored ink layer 12 (the mark 5) by printing using a colored ink on the base material layer 9.

(2) In addition to the respective layers described above, also preparing the laser color production layer 10, laminating the respective layers in the order shown in Figure 5, and fusing the layers by pressing.

(3) Performing laser marking with respect to the laser color production layer 10 from the surface on the side of the oversheet layer 14 of the obtained multi-layered body to draw the portrait image 2 and the person identification information 3.

(4) Performing laser marking with respect to the print image 6 (the near-infrared absorption ink layer 13) from the surface on the side of the oversheet layer 15 of the multi-layered body described above to draw the portrait image 7 and the person identification information 8.

When fabricating the multi-layered body 1 with the layer configuration shown in Figure 6, the near-infrared absorption ink layer 13 is formed by printing using a near-infrared absorption ink on the base material layer 9 instead of the oversheet layer 15 in (1) of the manufacturing method described above and the colored ink layer 12 is formed by printing using a colored ink on the oversheet layer 15 instead of the base material layer 9 (otherwise the manufacturing method is similar to the manufacturing method of the layer configuration shown in Figure 5). When fabricating the multi-layered body 1 with the layer configuration shown in Figure 7, printing using the colored ink having been performed with respect to the oversheet layer 14 in (1) above is performed with respect to the base material layer 9 (otherwise the manufacturing method is similar to the manufacturing method of the layer configuration shown in Figure 5).

(Authenticity determination method)

Authenticity determination of the multi-layered body 1 can be performed by comparing a visible light image and a near-infrared image of the multi-layered body 1 with each other. Specifically, when a person identified according to the portrait image 2 and the person identification information 3 which can be recognized as a visible light image (including images which is obtained by viewing with the naked eye. The same description applies to other embodiments.) and a person identified according to the portrait image 7 and the person identification information 8 which can be recognized as a near-infrared image coincide with each other, the multi-layered body 1 can be determined to be authentic as an identification card or the like, but when the person identified according to the portrait image 2 and the person identification information 3 which can be recognized as a visible light image and the person identified according to the portrait image 7 and the person identification information 8 which can be recognized as a near-infrared image do not coincide with each other, the multi-layered body 1 can be determined to be inauthentic (a counterfeit) as an identification card or the like.

Figure 8 is a diagram (near-infrared image) showing micro characters which become visible when enlarging a part of a print image using a near-infrared absorption ink shown in Figure 4. As is apparent from an enlarged display of a part 16 of the print image 6 shown in Figure 8, the print image 6 includes micro characters 17 (the micro characters 17 are omitted in Figure 4. Even in subsequent drawings, minute displays such as micro characters are omitted when appropriate). The print image 6 may be printed so as to include a security design such as a color pattern, a minute symbol, or a relief pattern instead of micro characters or the print image 6 may be printed by combining these security designs. An anti-counterfeiting effect of the multi-layered body 1 can be enhanced by performing printing (micro display printing) including micro display bodies such as micro characters which are difficult to reproduce with a copier or the like (display bodies which are too small to be visually recognized by the naked eye. In addition to micro characters, the display bodies may be fine characters, symbols, or graphics. Note that "micro characters" as used wherein are not limited to characters in μm units (characters of which a diameter, a width, or a height is less than 1 mm) and characters of which a diameter, a width, or a height is equal to or greater than 1 mm may be referred to as "micro characters". The same description applies to sizes of other micro display bodies). In particular, the anti-counterfeiting effect of the multi-layered body 1 can be dramatically enhanced by including micro characters and the like of which line widths and characters sizes are difficult to reproduce by laser marking (laser printing) to be described later.

Figure 9 is a diagram (near-infrared image) showing micro characters which respectively become visible when enlarging a part of a print image using a near-infrared absorption ink and a part of a portrait image generated by laser marking (laser drawing) shown in Figure 4. Micro characters 18 are micro characters formed during printing (micro display printing) using near-infrared absorption ink of the print image 6 and a part of the micro characters 18 remains even after performing laser marking of the portrait image 7. Micro characters 19 are micro characters formed during printing using near-infrared absorption ink of the print image 6. In an example, an entirety of the print image 6 is formed by at least one of micro characters, a color pattern, a fine symbol, a relief pattern, and the like (a security design. Note that while a size of an individual character or the like of micro characters, fine symbols, and the like is arbitrary, in an example, a maximum diameter, a maximum width, or a maximum height can be set to 1000 μm (micrometers)) and, therefore, pictures such as the portrait image 7 and the person identification information 8 having been drawn by laser marking are also security designs when viewed enlarged using a near-infrared camera or the like. Adopting such a configuration enables anti-falsification and anti-counterfeiting effects of the multi-layered body 1 to be further enhanced.

(Second embodiment)

Figure 10 is a diagram (near-infrared image) showing micro characters generated by laser marking (laser printing) of a rear surface of a multi-layered body according to a second embodiment of the present invention. A layer structure of a multi-layered body 1 shown in Figure 10 may be similar to that of the first embodiment (refer to Figure 5 to Figure 7) and the second embodiment only differs from the first embodiment in that micro characters 20 are written on the near-infrared absorption ink layer 13 by laser marking but laser marking of the person identification information 8 has not been performed as shown in Figure 4 (however, contents indicated by the micro characters 20 may be the same as the contents indicated by the person identification information 8 in Figure 4).

(Third embodiment)

Figure 11 is a diagram showing a near-infrared image of a rear surface of a multi-layered body according to a third embodiment of the present invention. Unlike the multi-layered body 1 according to the first embodiment, a mark 21 is printed by printing on the base material 9 using a near-infrared absorption ink so as to overlap with the mark 5 (refer to Figure 3) by colored ink printing (the near-infrared absorption ink layer 13. However, the mark 21 may be formed using a near-infrared absorption ink mixed with a colored ink. In this case, even a layer formed using an ink created by mixing other ingredients such as a colored ink with a near-infrared absorption ink will be referred to as a "near-infrared absorption ink layer". A similar description will apply to other embodiments). In addition, a portrait image 22 is drawn by laser marking on the mark 21. Otherwise, the multi-layered body according to the third embodiment is similar to the multi-layered body according to the first embodiment and layer structures may also be similar between the two embodiments.

(Fourth embodiment)

Figure 12 is a diagram showing an observation image under visible light (visible light image) of a front surface of a multi-layered body according to a fourth embodiment of the present invention, Figure 13 is a diagram showing an observation image by a near-infrared camera (near-infrared image) of the front surface of the multi-layered body, Figure 14 is a diagram showing an observation image under visible light (visible light image) of a rear surface of the multi-layered body (A surface which becomes visible when the multi-layered body is turned over by rotating the multi-layered body around an axis AX in Figure 12. A similar description applies to other embodiments.), and Figure 15 is a diagram showing an observation image by a near-infrared camera (near-infrared image) of the rear surface of the multi-layered body (A contour of the multi-layered body has been drawn in order to facilitate visualization of the diagram. A similar description applies to other drawings.) Figure 16 is a diagram conceptually showing an example (as viewed from the right in a paper plane shown in Figure 12) of a layer structure of the multi-layered body shown in Figure 12 when viewing a B-B' cross section taken along a line B-B' in Figure 12 (Each layer has been separately drawn in order to show the layer structure. In addition, while a colored ink layer (or a fluorescent ink layer or a hologram layer) 12 and a near-infrared absorption layer 13 on a side of the rear surface are not cut along the line B-B' to be exact, the layers have been drawn to facilitate understanding of the layer structure. The same description applies to other drawings that show a layer structure.), and Figure 17 is a diagram conceptually showing another example of such a layer structure.

As shown in Figure 16 and Figure 17, as a difference from the first embodiment described with reference to Figure 1 to Figure 7, a base material layer is constituted of a first base material layer 25 and a second base material layer 26 in a multi-layered body 1 according to the fourth embodiment (A material or the like may be similar to that of the base material layer 9. In addition, the base material layer 9 shown in Figure 5 and the like may also be constituted of sheets of a plurality of layers.), and a base material intermediate layer is provided as a layer (of which at least a part is) to be sandwiched between the first base material layer 25 and the second base material layer 26. A first portion 24 of the base material intermediate layer is positioned between the first base material layer 25 and the second base material layer 26, but a second portion 23 of the base material intermediate layer hangs out from between the first base material layer 25 and the second base material layer 26. The second portion 23 of the base material intermediate layer is positioned at an end of the multi-layered body 1, and a print product can be fabricated by machine binding while using the second portion 23 as a binding margin.

Such a base material intermediate layer can be provided by sandwiching (at least a part of) the base material intermediate layer between the first base material layer 25 and the second base material layer 26 and performing heat pressing to fuse the base material intermediate layer to the first base material layer 25 and the second base material layer 26. Alternatively, the base material intermediate layer may be provided by gluing the base material intermediate layer to the first base material layer 25 and the second base material layer 26 using an adhesive. A sheet made of any material such as paper, resin, cloth, or a non-woven fabric can be used as the base material intermediate layer and examples include a woven fabric having a reticular structure such as that described in International Publication No. WO 2018/151238.

As an example of a manufacturing method of the multi-layered body 1 shown in Figure 12 to Figure 16, the multi-layered body 1 can be fabricated by a method including:

(1) Forming the colored ink layer 11 (the mark 4) by printing using a colored ink on the oversheet layer 14, forming the near-infrared absorption ink layer 13 (the print image 6) by printing using a near-infrared absorption ink on the oversheet layer 15, and forming the colored ink layer 12 (the mark 5) by printing using a colored ink on the first base material layer 25.
(2) In addition to the respective layers described above, also preparing the second base material layer 26, base material intermediate layers (23 and 24), and the laser color production layer 10, laminating the respective layers in the order shown in Figure 16, and fusing the layers by pressing.
(3) Performing laser marking with respect to the laser color production layer 10 from the surface on the side of the oversheet layer 14 of the obtained multi-layered body to draw the portrait image 2 and the person identification information 3.
(4) Performing laser marking with respect to the print image 6 (the near-infrared absorption ink layer 13) from the surface on the side of the oversheet layer 15 of the multi-layered body described above to draw the portrait image 7 and the person identification information 8.

When fabricating the multi-layered body 1 with the layer configuration shown in Figure 17, the near-infrared absorption ink layer 13 is formed by printing using a near-infrared absorption ink on the first base material layer 25 instead of the oversheet layer 15 in (1) of the manufacturing method described above and the colored ink layer 12 is formed by printing using a colored ink on the oversheet layer 15 instead of the first base material layer 25 (otherwise the manufacturing method is similar to the manufacturing method of the layer configuration shown in Figure 16).

(Authenticity determination method)

Authenticity determination of the multi-layered body 1 can be performed by comparing a visible light image and a near-infrared image of the multi-layered body 1 with each other. Specifically, when a person identified according to the portrait image 2 and the person identification information 3 which can be recognized as a visible light image and a person identified according to the portrait image 7 and the person identification information 8 which can be recognized as a near-infrared image coincide with each other, the multi-layered body 1 can be determined to be authentic as an identification card or the like, but when the person identified according to the portrait image 2 and the person identification information 3 which can be recognized as a visible light image and the person identified according to the portrait image 7 and the person identification information 8 which can be recognized as a near-infrared image do not coincide with each other, the multi-layered body 1 can be determined to be inauthentic (a counterfeit) as an identification card or the like.

(Fifth embodiment)

Figure 18 is a diagram showing an observation image under visible light (visible light image) of a front surface of a multi-layered body according to a fifth embodiment of the present invention. (Despite being transparent, a lenticular lens has been drawn in order to facilitate visualization of the drawing. In addition, a display by laser marking on a laser color production layer 10 which is visible under the lenticular lens has been omitted.) Figure 19 is a diagram showing a visible light image of the front surface when viewing the multi-layered body from a direction of an arrow C in Figure 26 to be described later, Figure 19A is a diagram showing a near-infrared image of the front surface when viewing the multi-layered body from the direction of the arrow C in Figure 26 to be described later, Figure 20 is a diagram showing a visible light image of the front surface when viewing the multi-layered body from a direction of an arrow D in Figure 26, and Figure 20A is a diagram showing a near-infrared image of the front surface when viewing the multi-layered body from the direction of the arrow D in Figure 26. Figure 21 is a diagram showing an observation image under visible light (visible light image) of a rear surface of the multi-layered body. (Despite being transparent, a lenticular lens has been drawn in order to facilitate visualization of the drawing.) Figure 22 is a diagram showing a near-infrared image of the rear surface when viewing the multi-layered body from a direction of an arrow E in Figure 26, and Figure 23 is a diagram showing a near-infrared image of the rear surface when viewing the multi-layered body from a direction of an arrow F in Figure 26.

Figure 24 is a diagram conceptually showing an example (as viewed from below in a paper plane shown in Figure 18) of a layer structure of the multi-layered body when viewing an A-A' cross section taken along a line A-A' in Figure 18. (Each layer has been separately drawn in order to show the layer structure. In addition, while a colored ink layer (or a fluorescent ink layer or a hologram layer) 11 on a side of the front surface and a colored ink layer (or a fluorescent ink layer or a hologram layer) 12 on a side of the rear surface are not cut along the line A-A' to be exact, the layers have been drawn to facilitate understanding of the layer structure. The same description applies to other drawings that show a layer structure.), and Figure 25 is a diagram conceptually showing another example of the layer structure of the multi-layered body shown in Figure 18 when viewing the A-A' cross section taken along the line A-A' in Figure 18.

Unlike the first embodiment shown in Figure 1 and the like, a lenticular lens 27 is formed in one section of a surface on an opposite side to the laser color production layer 10 in the oversheet layer 14. In addition, a lenticular lens 31 is formed in a section which at least partially overlaps with the near-infrared absorption ink layer 13 of a surface on an opposite side to the near-infrared absorption ink layer 13 in the oversheet layer 15. The layer structure shown in Figure 24 and Figure 25 may be similar to the layer structure shown in Figure 5 and Figure 6 with the exception of the lenticular lenses 27 and 31 being formed. Furthermore, in all of the embodiments including the fifth embodiment, the colored ink layer 11 (or the fluorescent ink layer 11 or the hologram layer 11. A similar description also applies to other embodiments) may be provided between the base material layer and the laser color production layer 10 in a similar manner to Figure 7.

Figure 26 is a diagram conceptually showing an example (as viewed from the right in a paper plane shown in Figure 18) of the layer structure of the multi-layered body shown in Figure 18 when viewing a B-B' cross section taken along a line B-B' in Figure 18. (Each layer has been separately drawn in order to show the layer structure. In addition, while a colored ink layer (or a fluorescent ink layer or a hologram layer) 12, a near-infrared absorption layer 13, and a lenticular lens 31 on a side of the rear surface are not cut along the line B-B' to be exact, the layers and the lens have been drawn to facilitate understanding of the layer structure. The same description applies to other drawings that show a layer structure.) The lenticular lenses 27 and 31 as an example of the plurality of convex optical element portions have a shape in which a plurality of convex lens portions appear to be lined up (along an up-down direction (a line B-B') in a paper plane of Figure 18) when viewed from a direction exactly as shown in Figure 26. While seven convex lens portions are drawn so as to be lined up in both of the lenticular lenses 27 and 31 in Figure 26, this is a display for the sake of convenience in order to explain a structure of the lenticular lenses in a simplified manner and, in one example, the lenticular lenses 27 and 31 can be formed so as to include a larger number of convex lens portions such as around 100 convex lens portions (the numbers of convex lens portions in the lenticular lenses 27 and 31 may be the same or may differ from each other). Alternatively, the number of convex lens portions may be reduced and, generally, the lenticular lenses 27 and 31 can be formed so as to include any plurality of convex lens portions. A lenticular lens may be formed on only one of the oversheet layers 14 and 15. Note that as a method of respectively forming the lenticular lenses 27 and 31 on the oversheet layers 14 and 15, lenticular lenses 27 and 31 which have already been fabricated may be respectively glued onto the oversheet layers 14 and 15 by an adhesive or the like, the oversheet layers 14 and 15 may be respectively formed by heat and pressure so as to acquire a shape that enables the oversheet layers 14 and 15 to function as the lenticular lenses 27 and 31, or a base material of the lenticular lenses 27 and 31 may be respectively formed on the oversheet layers 14 and 15 by a printing method and then fixed by a method such as UV curing. The method of forming the lenticular lens 27 may be the same as or may differ from the method of forming the lenticular lens 31.

When viewing (visually recognizing), using visible light, a display of a picture, characters, or the like drawn by laser marking in a section which at least partially overlaps with the lenticular lens 27 in the laser color production layer 10, a different display (visible light image) can be viewed depending on what direction the display is viewed from. A visible light image shown in Figure 19 can be viewed when viewed in a direction of the arrow C in Figure 26, and a visible light image shown in Figure 20 can be viewed when viewed in a direction of the arrow D in Figure 26. In the examples shown in Figure 19 and Figure 20, a portrait image 28 shown in Figure 19 is drawn on the laser color production layer 10 by laser marking which involves emitting near-infrared laser light in the direction (angle) of the arrow C in Figure 26 and person identification information 29 shown in Figure 20 is drawn on the laser color production layer 10 by laser marking which involves emitting near-infrared laser light in the direction (angle) of the arrow D in Figure 26, and the portrait image 28 can be recognized by viewing the laser color production layer 10 using a visible light camera or an infrared camera, or the like from the direction of the arrow C in Figure 26 while the person identification information 29 can be recognized by viewing the laser color production layer 10 using a visible light camera or an infrared camera, or the like from the direction of the arrow D in Figure 26. In other words, a latent picture can be visually recognized by changing observation angles and a visible light-absorbing MLI (Multiple Laser Image) is realized.

In addition, when viewing, using a near-infrared camera or the like, a display of a picture, characters, or the like drawn by laser marking on the near-infrared absorption ink layer 13, a different display (near-infrared image) can be viewed depending on what direction the display is viewed from. A near-infrared image shown in Figure 22 can be viewed when viewed in a direction of the arrow E in Figure 26, and a near-infrared image shown in Figure 23 can be viewed when viewed in a direction of the arrow F in Figure 26. In the examples shown in Figure 22 and Figure 23, a print image 32 has been printed (the near-infrared absorption ink layer 13) using near-infrared absorption ink on the base material layer 9 or on the oversheet layer 15 so as to overlap with the lenticular lens 31, a portrait image 33 shown in Figure 22 is drawn on the near-infrared absorption ink layer 13 by laser marking which involves emitting near-infrared laser light in the direction (angle) of the arrow E in Figure 26 and person identification information 34 shown in Figure 23 is drawn on the near-infrared absorption ink layer 13 by laser marking which involves emitting near-infrared laser light in the direction (angle) of the arrow F in Figure 26, and the portrait image 33 can be recognized by viewing the near-infrared absorption ink layer 13 using a near-infrared camera or the like from the direction of the arrow E in Figure 26 while the person identification information 34 can be recognized by viewing the near-infrared absorption ink layer 13 using a near-infrared camera or the like from the direction of the arrow F in Figure 26. In other words, a latent picture can be recognized by changing observation angles and a near-infrared radiation-absorbing MLI is realized.

Figure 27 is a diagram conceptually illustrating a lenticular principle (which need not be consistent with specific configurations explained with reference to Figure 18 to Figure 26). When viewing the laser color production layer 10 through the lenticular lens 27 with a visible light camera, by visual observation, or the like from a first position P1, respective pictures or the like drawn in a plurality of print portions IM1 are combined and a first display (picture) such as the portrait image 28 can be recognized. When viewing the laser color production layer 10 through the lenticular lens 27 with a visible light camera, by visual observation, or the like from a second position P2, respective pictures or the like drawn in a plurality of print portions IM2 are combined and a second display (characters) such as the person identification information 29 can be recognized. A similar situation occurs in a case of near-infrared radiation display and when viewing the near-infrared absorption ink layer 13 through the lenticular lens 31 with a near-infrared camera or the like from the first position P1, respective pictures or the like drawn in the plurality of print portions IM1 are combined and a first display (picture) such as the portrait image 33 can be recognized. When viewing the near-infrared absorption ink layer 13 through the lenticular lens 31 with a near-infrared camera or the like from the second position P2, respective pictures or the like drawn in the plurality of print portions IM2 are combined and a second display (characters) such as the person identification information 34 can be recognized.

As an example of a manufacturing method of the multi-layered body 1 shown in Figure 18 to Figure 24, the multi-layered body 1 can be fabricated by a method including:

(1) Forming the colored ink layer 11 (the mark 4) by printing using a colored ink on the oversheet layer 14, forming the near-infrared absorption ink layer 13 (the print image 32) by printing using a near-infrared absorption ink on the oversheet layer 15, and forming the colored ink layer 12 (the mark 30) by printing using a colored ink on the base material layer 9.

(2) In addition to the respective layers described above, also preparing the laser color production layer 10, laminating the respective layers in the order shown in Figure 24, and fusing the layers by heat pressing using a press plate with irregularities which enable a lenticular lens to be formed to form the lenticular lenses 27 and 31.

(3) Performing laser marking with respect to the laser color production layer 10 from the surface on the side of the oversheet layer 14 of the obtained multi-layered body to draw the portrait image 2 and the person identification information 3. Furthermore, drawing the portrait image 28 on the laser color production layer 10 by laser marking which involves emitting near-infrared laser light in the direction (angle) of the arrow C in Figure 26, and drawing the person identification information 29 on the laser color production layer 10 by laser marking which involves emitting near-infrared laser light in the direction (angle) of the arrow D in Figure 26.

(4) From a surface on the side of the oversheet layer 15 of the multi-layered body described above, drawing the portrait image 33 on the near-infrared absorption ink layer 13 (the print image 32) by laser marking which involves emitting near-infrared laser light in the direction (angle) of the arrow E in Figure 26, and drawing the person identification information 34 on the near-infrared absorption ink layer 13 (the print image 32) by laser marking which involves emitting near-infrared laser light in the direction (angle) of the arrow F in Figure 26.

When fabricating the multi-layered body 1 with the layer configuration shown in Figure 25, the near-infrared absorption ink layer 13 is formed by printing using a near-infrared absorption ink on the base material layer 9 instead of the oversheet layer 15 in (1) of the manufacturing method described above and the colored ink layer 12 is formed by printing using a colored ink on the oversheet layer 15 instead of the base material layer 9 (otherwise the manufacturing method is similar to the manufacturing method of the layer configuration shown in Figure 24).

(Authenticity determination method)

Authenticity determination of the multi-layered body 1 can be performed by comparing a visible light image and a near-infrared image of the multi-layered body 1 with each other. Specifically, when a person identified according to the portrait image 2 and the person identification information 3 which can be recognized as a visible light image, a person identified according to the portrait image 33 and the person identification information 34 which can be recognized as a near-infrared image, and a person identified according to the portrait image 28 and the person identification information 29 which can be recognized as a visible light image all coincide with each other, the multi-layered body 1 can be determined to be authentic as an identification card or the like, but when the person identified according to the portrait image 2 and the person identification information 3 which can be recognized as a visible light image, the person identified according to the portrait image 33 and the person identification information 34 which can be recognized as a near-infrared image, and the person identified according to the portrait image 28 and the person identification information 29 which can be recognized as a visible light image do not at least partially coincide with each other, the multi-layered body 1 can be determined to be inauthentic (a counterfeit) as an identification card or the like.

(Sixth embodiment)

Figure 28 is a diagram showing an observation image under visible light (visible light image) of a front surface of a multi-layered body according to a sixth embodiment of the present invention, Figure 29 is a diagram showing an observation image by a near-infrared camera (near-infrared image) of the front surface of the multi-layered body, Figure 30 is a diagram showing an observation image under visible light (visible light image) of a rear surface of the multi-layered body (A surface which becomes visible when the multi-layered body is turned over by rotating the multi-layered body around an axis AX in Figure 28. A similar description applies to other embodiments.), Figure 31 is a diagram showing an observation image by a near-infrared camera (near-infrared image) of the rear surface of the multi-layered body, Figure 32 is a diagram conceptually showing an example (as viewed from below in a paper plane shown in Figure 28) of a layer structure of the multi-layered body shown in Figure 28 when viewing an A-A' cross section taken along a line A-A' in Figure 28. (Each layer has been separately drawn in order to show the layer structure. In addition, while a colored ink layer (or a fluorescent ink layer or a hologram layer) 11 on a side of the front surface and a colored ink layer (or a fluorescent ink layer or a hologram layer) 12 on a side of the rear surface are not cut along the line A-A' to be exact, the layers have been drawn to facilitate understanding of the layer structure. The same description applies to other drawings that show a layer structure.), and Figure 33 is a diagram conceptually showing another example of the layer structure of the multi-layered body shown in Figure 28 when viewing the A-A' cross section taken along the line A-A' in Figure 28. A clear window 35 which is fabricated from a transparent material such as PVC (polyvinyl chloride), PET-G (amorphous polyester), PC (polycarbonate), PET (polyethylene terephthalate), or PP (polypropylene) is formed on the base material layer 9 (for a two-dimensional shape thereof, refer to Figure 28. Note that, in the configuration shown in Figure 32 and Figure 33, the clear window 35 penetrates the base material layer 9 and the laser color production layer 10). In one example, the clear window 35 may be fabricated by opening parts of the base material layer 9 and the laser color production layer 10 in accordance with a shape of the clear window 35, pouring a liquid transparent resin with visible light transparency and near-infrared transparency into a created space, and curing the liquid transparent resin. Alternatively, the clear window 35 may be fabricated by fitting a piece of solid transparent resin with visible light transparency and near-infrared transparency of a same size as the opened portions of the base material layer 9 and the laser color production layer 10. A configuration of the multi-layered body according to the sixth embodiment other than the configuration related to the clear window 35 may be similar to that of the multi-layered body according to the

first embodiment. In addition, a similar laser color production layer 10 may be provided on a first surface and a second surface of the base material layer 9 (both the surface on the side of the oversheet layer 14 and the surface on the side of the oversheet layer 15 in the base material layer 9). In this case, the opening penetrates the base material layer 9, the laser color production layer 10 on the side of the first surface, and the laser color production layer 10 on the side of the second surface, and the clear window 35 provided in the opening also penetrates the base material layer 9 and the two laser color production layers 10. Since adopting such a configuration enables printing by laser color production to be performed on both the front surface and the rear surface of the multi-layered body 1, information which can be written increases. In addition, providing the clear window portion makes counterfeiting more difficult. Furthermore, by providing the clear window portion by, for example, opening a part of the laser color production layer 10 and providing the clear window portion having the near-infrared absorption ink layer 13 in a space created by the opening, in one example, since the near-infrared absorption ink layer 13 and the laser color production layer 10 are present on a same surface, laser marking (drawing, printing, and the like) can be performed simultaneously and manufacturing steps are simplified.

In the multi-layered body 1 according to the sixth embodiment, the near-infrared absorption ink layer 13 is formed so as to overlap with the clear window 35 (Figure 32 and Figure 33). Therefore, when viewing the clear window 35 from above using a near-infrared camera or the like (a direction from the oversheet layer 15 to the oversheet layer 14 in the layer structure shown in Figure 32 and Figure 33 will be defined as an "upward direction" and an opposite direction thereof will be defined as a "downward direction" (a similar definition applies to other embodiments). Refer to Figure 28. In this case, the clear window 35 is viewed from further above the oversheet layer 14), the print image 6 printed as the near-infrared absorption ink layer 13 and the portrait image 7 drawn by laser marking on the print image 6 can be recognized (Figure 29 and Figure 31). Note that the hologram layer described above or some kind of a display object having security may be arranged as an embedded hologram in a space which is created by cutting out parts of the base material layer 9 and the laser color production layer 10 and in which the clear window 35 is to be formed (the hologram layer or the display object also penetrates the base material layer 9 and the laser color production layer 10).

As an example of a manufacturing method of the multi-layered body 1 shown in Figure 28 to Figure 32, the multi-layered body 1 can be fabricated by a method including:

(1) Forming the colored ink layer 11 (the mark 4) by printing using a colored ink on the oversheet layer 14, and forming the colored ink layer 12 (the mark 5) by printing using a colored ink on the oversheet layer 15.
(2) Fusing the base material layer 9 and the laser color production layer 10 to each other by pressing, cutting out a portion where the clear window 35 is to be formed, and fitting a transparent resin into a space created by cutting out the portion to provide the clear window 35. In addition, forming the near-infrared absorption ink layer 13 (the print image 6) by printing using a near-infrared absorption ink on an exposed surface of the clear window 35 on a side of the laser color production layer 10.
(3) Laminating the respective layers in the order shown in Figure 32, and fusing the layers by pressing.
(4) Performing laser marking with respect to the laser color production layer 10 from the surface on the side of the oversheet layer 14 of the obtained multi-layered body to draw the portrait image 2 and the person identification information 3.
(5) Performing laser marking with respect to the print image 6 (the near-infrared absorption ink layer 13) from the surface on the side of the oversheet layer 14 or the surface on the side of the oversheet layer 15 of the multi-layered body described above to draw the portrait image 7.

When fabricating the multi-layered body 1 with the layer configuration shown in Figure 33, the near-infrared absorption ink layer 13 is formed by printing using a near-infrared absorption ink on the exposed surface on the side of the base material layer 9 instead of the side of the laser color production layer 10 of the clear window 35 in (2) of the manufacturing method described above (otherwise the manufacturing method is similar to the manufacturing method of the layer configuration shown in Figure 32).

(Authenticity determination method)

Authenticity determination of the multi-layered body 1 can be performed by comparing a visible light image and a near-infrared image of the multi-layered body 1 with each other. Specifically, when a person identified according to the portrait image 2 and the person identification information 3 which can be recognized as a visible light image and a person identified according to the portrait image 7 which can be recognized as a near-infrared image coincide with each other, the multi-layered body 1 can be determined to be authentic as an identification card or the like, but when the person identified according to the portrait image 2 and the person identification information 3 which can be recognized as a visible light image and the person identified according to the portrait image 7 which can be recognized as a near-infrared image do not coincide with each other, the multi-layered body 1 can be determined to be inauthentic (a counterfeit) as an identification card or the like.

(Seventh embodiment)

Figure 34 is a diagram showing an observation image under visible light (visible light image) of a front surface of a multi-layered body according to a seventh embodiment of the present invention, Figure 35 is a diagram showing an observation image by a near-infrared camera (near-infrared image) of the front surface of the multi-layered body according to the seventh embodiment of the present invention (a contour of the multi-layered body has been drawn in order to facilitate visualization of the drawing. A similar description applies to other drawings), Figure 36 is a diagram showing an observation image under visible light (visible light image) of a rear surface of the multi-layered body according to the seventh embodiment of the present invention (A surface which becomes visible when the multi-layered body is turned over by rotating the multi-layered body around an axis AX in Figure 34. A similar description applies to other embodiments), Figure 37 is a diagram showing an observation image by a near-infrared camera (near-infrared image) of the rear surface of the multi-layered body according to the seventh embodiment of the present invention (a contour of the multi-layered body has been drawn in order to facilitate visualization of the drawing. A similar description applies to other drawings), Figure 38 is a diagram conceptually showing an example (as viewed from the right in a paper plane shown in Figure 34) of a layer structure of the multi-layered body shown in Figure 34 when viewing a B-B' cross section taken along a line B-B' in Figure 34. (Each layer has been separately drawn in order to show the layer structure. In addition, while colored ink layers (or fluorescent ink layers or hologram layers) 11 and 12 on a side of the front surface and a side of the rear surface are not cut along the line B-B' to be exact, the layers have been drawn to facilitate understanding of the layer structure. The same description applies to other drawings that show a layer structure.), and Figure 39 is a diagram showing a print product fabricated using the multi-layered body according to the seventh embodiment of the present invention.

While the multi-layered body 1 shown in Figure 34 also includes a base material intermediate layer in a similar manner to the multi-layered body 1 described with reference to Figure 12 and the like, a partial section of a multi-layered structure made up of the first base material layer 25, the base material intermediate layers (23 and 24), the second base material layer 26, and the laser color production layer 10 has been cut out and the clear window 35 has been provided in a space created by cutting out the partial section as shown in Figure 38. The multi-layered body 1 (sheet) is bound with other sheets 38, 39, and 40 using the second portion 23 of the base material intermediate layers (which hangs out from between the first base material layer 25 and the second base material layer 26) as a binding margin and, accordingly, a print product 100 is constructed. In addition, in a region overlapping with the clear window 35, the print image 6 is formed by printing with a near-infrared absorption ink (the near-infrared absorption ink layer 13 in Figure 38. In the present example, it is assumed that the print image 6 is created by solid-printing using a near-infrared absorption ink in a uniform manner in the region overlapping with the clear window 35), and the portrait image 7 is then drawn by laser marking.

As an example of a manufacturing method of the multi-layered body 1 shown in Figure 34 to Figure 38, the multi-layered body 1 can be fabricated by a method including:

(1) Forming the colored ink layer 11 (the mark 4) by printing using a colored ink on the oversheet layer 14, and forming the colored ink layer 12 (the mark 5) by printing using a colored ink on the oversheet layer 15.

(2) Laminating the first base material layer 25, the second base material layer 26, the base material intermediate layers (23 and 24), and the laser color production layer 10 in an order shown in Figure 38, fusing the layers by pressing, cutting out a portion where the clear window 35 is to be formed, and fitting a transparent resin into a space created by cutting out the portion to provide the clear window 35. In addition, forming the near-infrared absorption ink layer 13 (the print image 6) by printing using a near-infrared absorption ink on an exposed surface of the clear window 35 on a side of the laser color production layer 10.

(3) Laminating the respective layers in the order shown in Figure 38, and fusing the layers by pressing.

(4) Performing laser marking with respect to the laser color production layer 10 from the surface on the side of the oversheet layer 14 of the obtained multi-layered body to draw the portrait image 2 and the person identification information 3.

(5) Performing laser marking with respect to the print image 6 (the near-infrared absorption ink layer 13) from the surface on the side of the oversheet layer 14 or the side of the oversheet layer 15 of the multi-layered body described above to draw the portrait image 7.

The print product 100 can be fabricated by binding the multi-layered body with other sheets using the second portion 23 of the base material intermediate layers as a binding margin.

(Authenticity determination method)

Authenticity determination of the multi-layered body 1 can be performed by comparing a visible light image and a near-infrared image of the multi-layered body 1 with each other. Specifically, when a person identified according to the portrait image 2 and the person identification information 3 which can be recognized as a visible light image and a person identified according to the portrait image 7 which can be recognized as a near-infrared image coincide with each other, the multi-layered body 1 can be determined to be authentic as an identification card or the like, but when the person identified according to the portrait image 2 and the person identification information 3 which can be recognized as a visible light image and the person identified according to the portrait image 7 which can be recognized as a near-infrared image do not coincide with each other, the multi-layered body 1 can be determined to be inauthentic (a counterfeit) as an identification card or the like.

Figure 40 is a diagram schematically showing a configuration of a laser marker apparatus for performing laser marking (drawing, printing, and the like) heretofore described. A laser marker apparatus 45 includes a control unit 46, a storage unit 47, a drive (scan) unit 48, a laser light irradiating unit 49, and the like. By irradiating the near-infrared absorption layer with near-infrared laser light from a head of the laser light irradiating unit 49 while driving the head with the drive unit 48, the laser marking described above with respect to the near-infrared absorption layer (near-infrared absorption ink layer 13) or with respect to the laser color production layer 10 is performed. In such an operation of the laser marker apparatus 45, the laser light irradiating unit 49 (in an example, a laser light irradiation apparatus which includes an Nd:YAG laser being an apparatus that generates laser light with a laser wavelength of 1064 nm and which includes various devices such as a head for irradiating a target with laser light) irradiates a near-infrared absorption layer or the laser color production layer 10 with near-infrared laser light (which may be a near-infrared laser beam) from the head while the drive unit 48 drives the head (moves (scans) the head) toward the near-infrared absorption ink layer 13 or the laser color production layer 10 as already described, the drive unit 48 being a drive apparatus which includes a motor or the like and which is controlled by the control unit 46 including various control circuits or the like such as a CPU or an incorporated control circuit (a separate computer which is present outside the laser marker apparatus 45 can also function as the control unit 46). Note that the storage unit 47 including a storage apparatus such as a semiconductor memory or a magnetic disk stores various kinds of data to be appropriately read and used by the control unit 46 to control operations of the laser marker apparatus 45 including characters or images to be drawn by laser marking, and the laser marker apparatus 45 draws characters, images, or the like stored in the storage unit 47 on the near-infrared absorption layer or the laser color production layer 10. Since a large number of known laser marker apparatuses are available, a more detailed description will not be provided.

(Examples of near-infrared absorption ink)

Hereinafter, results of experiments involving various multi-layered bodies (offset-printed matter) having been fabricated using cesium tungsten oxide-containing ink and lanthanum hexaboride-containing ink as near-infrared absorption ink which can be used in the present invention will be described by comparing the results with results of experiments involving offset-printed matter fabricated using ytterbium oxide-containing ink as a comparative example.

(First comparative example)

An ink with a content by percentage of ytterbium oxide of 25 weight% was prepared by mixing ytterbium (III) oxide 3N5 powder with an ink medium containing monomers, synthetic resins, and other non-infrared absorption material so that a weight ratio of ytterbium oxide to the ink medium was 25:75. Using the ytterbium oxide-containing ink prepared in this manner, printing was performed using an offset printing machine (IGT C1 Printability Tester for Offset Inks (manufactured by IGT Testing Systems)) in a partial section of high-quality paper being a base material. The obtained printed matter was adopted as a multi-layered body of the first comparative example and was photographed by VSC8000 (manufactured by Foster + Freeman Ltd.), an infrared visualization apparatus, while attaching a filter for shielding light with wavelengths of 925 nm or shorter to a camera lens of the apparatus.

(First example)

An ink with a content by percentage of cesium tungsten oxide of 2 weight% was prepared by mixing a dispersion liquid containing cesium tungsten oxide $Cs_{0.33}WO_3$ with an ink medium which contains monomers, synthetic resins, and other non-infrared absorption material and which is similar to that used in the first comparative example so that a weight ratio of cesium tungsten oxide to all other ingredients was 2:98. Using the cesium tungsten oxide-containing ink prepared in this manner, printing was performed using an offset printing machine (IGT C1 Printability Tester for Offset Inks (manufactured by IGT Testing Systems)) in a partial section of high-quality paper being a base material. The obtained printed matter was adopted as a multi-layered body of the first example and was photographed by VSC8000 (manufactured by Foster + Freeman Ltd.), an infrared visualization apparatus, while attaching a filter for shielding light with wavelengths of 925 nm or shorter to the camera lens of the apparatus.

Figure 41 shows infrared photographs of the ytterbium oxide-containing ink and the cesium tungsten oxide-containing ink prepared in the first comparative example and the first example respectively taken by the infrared camera described above and infrared photographs of printed matter respectively printed by offset printing as described above using the respective inks as taken by the infrared camera described above. While the photographs of the respective inks revealed that both the ytterbium oxide-containing ink and the cesium tungsten oxide-containing ink show near-infrared absorbency, near-infrared absorbency was not visually recognizable in the printed matter obtained by offset printing using the ytterbium oxide-containing ink. On the other hand, in a printed matter obtained by offset printing of a cesium tungsten oxide-containing ink with a low cesium tungsten oxide content, a difference between light and dark was visually recognizable between a section where printing was not performed and a section where printing was performed, thereby confirming that the printed section had near-infrared absorbency.

The results of the experiments described above are summarized in the following table.

[Table 1]

| | First comparative example | First example |
|---|---|---|
| Pigment | Ytterbium oxide | Cesium tungsten oxide |
| Content | 25 weight% | 2 weight% |
| Film thickness | Approx. 1 μm to approx. 3 μm | Approx. 1 μm to approx. 3 μm |
| Infrared absorptance | Unknown (visually unrecognizable) | 30% to 40% |

In the table presented above, while "film thickness" refers to film thickness of the ytterbium oxide-containing ink layer or the cesium tungsten oxide-containing ink layer formed by offset printing, the film thickness is not a measured value but, rather, a reference value that assumes a typical thickness of a film formed in offset printing. The film thickness of the film formed in offset printing in the respective examples described later is also estimated to be approximately 1 μm to approximately 3 μm. Note that experiments are conducted under similar conditions such as print density with respect to all examples in the present specification and, theoretically, the film thicknesses are conceivably the same. In addition, "infrared absorptance" as referred to in the first example is a value obtained using reflectance (a ratio of intensity of reflected light when irradiated light is reflected by a surface of printed matter which is a ratio of intensity of reflected light from a surface of a target printed matter to intensity of reflected light from a surface of a base material to be a reference (reference portion)) measured using JASCO V-670 UV-Vis/NIR Spectrophotometer (manufactured by JASCO Corporation) (absorptance (%) = 100 - reflectance (%)).

Next, offset printing was performed on various base material sheets using a near-infrared absorption ink with a cesium tungsten oxide ($Cs_{0.33}WO_3$) content (content by percentage) of 2 weight%, laser printing was performed with a laser marker apparatus with respect to each fabricated printed matter, and reflectance of electromagnetic waves in a wavelength range of visible light to near-infrared radiation in a portion where laser printing was performed and a portion where laser printing was not performed was respectively measured. Note that "reflectance" as referred to in the following examples is a ratio of intensity of reflected light when irradiated light is reflected by a surface of printed matter which is a ratio of intensity of reflected light from a surface of a target printed matter to intensity of reflected light from a surface of a base material to be a reference (reference portion) (a value obtained by a measurement using JASCO V-670 UV-Vis/NIR Spectrophotometer (manufactured by JASCO Corporation)) in a similar manner to the first example.

"Reflectance" as referred to in the first example described above and in the second to eleventh examples to be described below can be generally defined by the following equation.

Reflectance of target portion (target surface) (%) = {(intensity of reflected light from target portion (target surface))/(intensity of reflected light from reference portion (reference surface))} × 100

(Second example)

An ink with a content by percentage of cesium tungsten oxide of 2 weight% was prepared by mixing a dispersion liquid containing cesium tungsten oxide $Cs_{0.33}WO_3$ with monomers, synthetic resins, auxiliary agents, and the like so that a weight ratio of cesium tungsten oxide to all other ingredients was 2:98. Using the cesium tungsten oxide-containing ink prepared in this manner, printing was performed using an offset printing machine (IGT C1 Printability Tester for Offset Inks (manufactured by IGT Testing Systems)) on a PC (polycarbonate) sheet being a base material. The obtained printed matter was adopted as a multi-layered body of the second example and reflectance of visible light to near-infrared radiation in a wavelength range of 400 nm to 2000 nm of a print surface prior to laser printing was measured using JASCO V-670 UV-Vis/NIR Spectrophotometer (manufactured by JASCO Corporation). Furthermore, IDENTIFIER 60 (manufactured by the Mühlbauer Group) was used as a laser marker apparatus and laser printing was performed on the print surface by laser light created by an Nd:YAG laser with a wavelength of 1064 nm. Reflectance of visible light to near-infrared radiation in a wavelength range of 400 nm to 2000 nm of the portion where laser printing was performed was measured using JASCO V-670 UV-Vis/NIR Spectrophotometer (manufactured by JASCO Corporation).

(Third example)

An ink with a content by percentage of cesium tungsten oxide of 2 weight% was prepared by mixing a dispersion liquid containing cesium tungsten oxide $Cs_{0.33}WO_3$ with monomers, synthetic resins, auxiliary agents, and the like so that a weight ratio of cesium tungsten oxide to all other ingredients was 2:98. Using the cesium tungsten oxide-containing ink prepared in this manner, printing was performed using an offset printing machine (IGT C1 Printability Tester for Offset Inks (manufactured by IGT Testing Systems)) on a PET-G (copolyester) sheet being a base material. The obtained printed matter was adopted as a multi-layered body of the third example and reflectance of visible light to near-infrared radiation in a wavelength range of 400 nm to 2000 nm of a print surface prior to laser printing was measured using JASCO V-670 UV-Vis/NIR Spectrophotometer (manufactured by JASCO Corporation). Furthermore, IDENTIFIER 60 (manufactured by the Mühlbauer Group) was used as a laser marker apparatus and laser printing was performed on the print surface by laser light created by an Nd:YAG laser with a wavelength of 1064 nm. Reflectance of visible light to near-infrared radiation in a wavelength range of 400 nm to 2000 nm of the portion where laser printing was performed was measured using JASCO V-670 UV-Vis/NIR Spectrophotometer (manufactured by JASCO Corporation).

(Fourth example)

An ink with a content by percentage of cesium tungsten oxide of 2 weight% was prepared by mixing a dispersion liquid containing cesium tungsten oxide $Cs_{0.33}WO_3$ with monomers, synthetic resins, auxiliary agents, and the like so that a weight ratio of cesium tungsten oxide to all other ingredients was 2:98. Using the cesium tungsten oxide-containing ink prepared in this manner, printing was performed using an offset printing machine (IGT C1 Printability Tester for Offset Inks (manufactured by IGT Testing Systems)) on a PVC (polyvinyl chloride) sheet being a base material. The obtained printed matter was adopted as a multi-layered body of the fourth example and reflectance of visible light to near-infrared radiation in a wavelength range of 400 nm to 2000 nm of a print surface prior to laser printing was measured using JASCO V-670 UV-Vis/NIR Spectrophotometer (manufactured by JASCO Corporation). Furthermore, IDENTIFIER 60 (manufactured by the Mühlbauer Group) was used as a laser marker apparatus and laser printing was performed on the print surface by laser light created by an Nd:YAG laser with a wavelength of 1064 nm. Reflectance of visible light to near-infrared radiation in a wavelength range of 400 nm to 2000 nm of the portion where laser printing was performed was measured using JASCO V-670 UV-Vis/NIR Spectrophotometer (manufactured by JASCO Corporation).

Figure 42 shows results of measurements of reflectance performed in the second to fourth examples described above. In addition, Figure 43 shows a result of a measurement of reflectance performed in the second example, Figure 44 shows a result of a measurement of reflectance performed in the third example, and Figure 45 shows a result of a measurement of reflectance performed in the fourth example by respectively extracting the results from the graph shown in Figure 42. In the graphs shown in Figure 42 to Figure 45, a value of an axis of abscissa represents a wavelength (nm) of an electromagnetic wave and a value of an axis of ordinate represents a reflectance (%) on a print surface or in a portion where laser printing was performed of an electromagnetic wave with the wavelength indicated by the value of the axis of abscissa.

As is apparent from the graphs shown in Figure 42 to Figure 45, regardless of the base material used, reflectance increases (absorptance decreases) in a near-infrared region by performing laser printing. It is shown that, while a margin of increase differs depending on a wavelength represented by the axis of abscissa, the reflectance increases due to laser printing in the near-infrared region of 780 nm to 2000 nm by at least 5% or more, generally by 10% to 15%, or by even more. In addition, as an overall trend, since a change in reflectance before and after laser printing in the wavelength range of visible light is small as compared to a change in reflectance before and after laser printing in the near-infrared region, it is conceivable that laser printing enables characters, images, and the like which are relatively difficult to visually recognize by the naked eye or a general camera to be drawn.

Next, offset printing was respectively performed on high-quality paper as a base material sheet using six kinds of near-infrared absorption ink with mutually different cesium tungsten oxide ($Cs_{0.33}WO_3$) contents (contents by percentage) ranging from 0.5 weight% to 6 weight%, and reflectance of electromagnetic waves in a wavelength range of visible light to near-infrared radiation on a print surface (near-infrared absorption ink layer) in each fabricated printed matter was measured. Note that the definition of reflectance and the device used to measure reflectance are the same as those in the first to fourth examples described above.

(Fifth to tenth examples)

Six kinds of ink with contents by percentage of cesium tungsten oxide ranging from 0.5 weight% to 6 weight% were prepared by mixing a dispersion liquid containing cesium tungsten oxide $Cs_{0.33}WO_3$ with monomers, synthetic resins, auxiliary agents, and the like so that a weight ratio of cesium tungsten oxide to all other ingredients were as follows:

(Fifth example) 0.5:99.5
(Sixth example) 1:99
(Seventh example) 1.3:98.7
(Eighth example) 2:98
(Ninth example) 3:97
(Tenth example) 6:94

Using each of the cesium tungsten oxide-containing inks prepared in this manner, printing was performed using an offset printing machine (IGT C1 Printability Tester for Offset Inks (manufactured by IGT Testing Systems)) on a sheet of the high-quality paper described above being a base material. The six kinds of obtained printed matter were adopted as multi-layered bodies of the fifth to tenth examples and reflectance of visible light to near-infrared radiation in a wavelength range of 400 nm to 2000 nm was measured using JASCO V-670 UV-Vis/NIR Spectrophotometer (manufactured by JASCO Corporation).

Figure 46 shows results of measurements of reflectance performed in the fifth to tenth examples described above. In the graph shown in Figure 46, a value of an axis of abscissa represents a wavelength (nm) of an electromagnetic wave and a value of an axis of ordinate represents a reflectance (%) on a print surface of an electromagnetic wave with the wavelength indicated by the value of the axis of abscissa. It is shown that, at least in the near-infrared wavelength range, the higher the content of cesium tungsten oxide, the lower the reflectance at a same wavelength. A similar trend is observed in the visible light wavelength range. In other words, while increasing the content of cesium tungsten oxide in ink makes an image or the like obtained by offset printing using the ink more readily recognizable using a near-infrared camera or the like, since visible light reflectance also decreases and the possibility of visual recognition by the naked eye, a general camera, and the like also increases in this case, it is conceivably preferable to select a suitable cesium tungsten oxide content when taking security into consideration.

Next, offset printing was performed on PC (polycarbonate) as a base material sheet using a near-infrared absorption ink with a lanthanum hexaboride ($LaB_6$) content (content by percentage) of 0.3 weight%, laser printing was performed with a laser marker apparatus with respect to the fabricated printed matter, and reflectance of electromagnetic waves in a wavelength range of visible light to near-infrared radiation in a portion where laser printing was performed and a portion where laser printing was not performed was respectively measured. Even in this example, reflectance means a ratio of intensity of reflected light when irradiated light is reflected by a surface of printed matter which is a ratio of intensity of reflected light from a surface of a target printed matter to intensity of reflected light from a surface of a base material to be a reference (reference portion) (a value obtained by a measurement using JASCO V-670 UV-Vis/NIR Spectrophotometer (manufactured by JASCO Corporation)).

(Eleventh example)

An ink with a content by percentage of lanthanum hexaboride of 0.3 weight% was prepared by mixing a dispersion liquid containing lanthanum hexaboride ($LaB_6$) with monomers, synthetic resins, auxiliary agents, and the like so that a weight ratio of lanthanum hexaboride to all other ingredients was 0.3:99.7. Using the lanthanum hexaboride-containing ink prepared in this manner, printing was performed using an offset printing machine (IGT C 1 Printability Tester for Offset Inks (manufactured by IGT Testing Systems)) on a PC (polycarbonate) sheet being a base material. The obtained printed matter was adopted as a multi-layered body of the eleventh example and reflectance of visible light to near-infrared radiation in a wavelength range of 400 nm to 2000 nm of a print surface prior to laser printing was measured using JASCO V-670 UV-Vis/NIR Spectrophotometer (manufactured by JASCO Corporation). Furthermore, IDENTIFIER 60 (manufactured by the Mühlbauer Group) was used as a laser marker apparatus and laser printing was performed on the print surface by laser light created by an Nd:YAG laser with a wavelength of 1064 nm. Reflectance of visible light to near-infrared radiation in a wavelength range of 400 nm to 2000 nm of the portion where laser printing was performed was measured using JASCO V-670 UV-Vis/NIR Spectrophotometer (manufactured by JASCO Corporation).

Figure 47 shows results of a measurement of reflectance performed in the eleventh example described above. In the graph shown in Figure 47, a value of an axis of abscissa represents a wavelength (nm) of an electromagnetic wave and a value of an axis of ordinate represents a reflectance (%) on a print surface or in a portion where laser printing was performed of an electromagnetic wave with the wavelength indicated by the value of the axis of abscissa.

As is apparent from the graph shown in Figure 47, reflectance increases (absorptance decreases) in a near-infrared region by performing laser printing. It is shown that, while a margin of increase differs depending on a wavelength represented by the axis of abscissa, the reflectance increases due to laser printing in the near-infrared region of 780 nm to 1400 nm by generally 5% to around 14%. In addition, as an overall trend, since a change in reflectance before and after laser printing in the wavelength range of visible light is small as compared to a change in reflectance before and after laser printing in the near-infrared range of 800 nm to around 1200 nm, it is conceivable that laser printing enables characters, images, and the like which are relatively difficult to visually recognize by the naked eye or a general camera to be drawn.

(Example of application)

In one example, the multi-layered bodies according to the respective embodiments and examples described above can be used as printed matter such as an identity document with high security. In Figure 1, by comparing the portrait image 2 and the person identification information 3 (visually recognizable with the naked eye) which are printed using a colored ink and the portrait image 7 and the person identification information 8 (recognizable by an infrared camera or the like) which are drawn by laser marking in the print image 6 printed by a near-infrared absorption ink and determining whether or not a person (visible information) indicated by the portrait image 2 and the person identification information 3 and a person (infrared information) indicated by the portrait image 7 and the person identification information 8 coincide with each other, authenticity determination of an identity document or the like can be performed (the identity document or the like can be determined to be authentic when the persons coincide with each other but the identity document or the like can be determined to be inauthentic when the persons do not coincide with each other), and in a case of counterfeiting, the counterfeiting can be detected. A picture to be drawn by a laser is not limited to monotonous patterns such as a barcode, a number, and a two-dimensional code and may be a portrait image or the like as described above. In addition, security of infrared absorption printed matter can be further enhanced by combining with security techniques involving micro display printing such as micro characters.

Industrial Applicability

While the present invention can be used in ID certificates such as identity documents, cards such as credit cards and cash cards, bank bills, and the like, the present invention is not limited thereto and can be used in any multi-layered bodies.

Reference Signs List

| | |
|---|---|
| 1 | multi-layered body (printed matter) |
| 2 | portrait image (laser marking) |
| 3 | person identification information (laser marking) |
| 4 | mark (colored ink printing, fluorescent ink printing, or hologram) |
| 5 | mark (colored ink printing, fluorescent ink printing, or hologram) |
| 6 | print image (near-infrared absorption ink printing) |
| 7 | portrait image (laser marking) |
| 8 | person identification information (laser marking) |
| 9 | base material layer (white sheet) |
| 10 | laser color production layer |
| 11, 12 | colored ink layer, fluorescent ink layer, or hologram layer |
| 13 | near-infrared absorption ink layer |
| 14, 15 | oversheet layer (transparent sheet) |
| 16 | part of print image (near-infrared absorption ink printing) |
| 17 | micro character included in print image (near-infrared absorption ink printing) |
| 18 | micro character (near-infrared absorption ink printing) |
| 19 | micro character (near-infrared absorption ink printing) |
| 20 | micro character (laser marking) |
| 21 | mark (near-infrared absorption ink printing) |
| 22 | portrait image (laser marking) |
| 23 | base material intermediate layer (second portion) |
| 24 | base material intermediate layer (first portion) |
| 25 | first base material layer (white sheet) |
| 26 | second base material layer (white sheet) |

| | |
|---|---|
| 27 | lenticular lens |
| 28 | portrait image (laser marking) |
| 29 | person identification information (laser marking) |
| 30 | mark (colored ink printing, fluorescent ink printing, or hologram) |
| 31 | lenticular lens |
| 32 | print image (near-infrared absorption ink printing) |
| 33 | portrait image (laser marking) |
| 34 | person identification information (laser marking) |
| 35 | clear window (transparent resin) |
| 36, 37 | portrait image (colored ink printing, fluorescent ink printing, or hologram) |
| 38, 39, 40 | sheet |
| 41, 42 | portrait image (black ink printing or the like, visible light and near-infrared absorbency) |
| 43 | portrait image (laser marking) |
| 44 | black ink layer |
| 45 | laser marker apparatus |
| 46 | control unit |
| 47 | storage unit |
| 48 | drive (scan) unit |
| 49 | laser light irradiating unit |
| 100 | print product |
| IM1 | print portion (laser marking) |
| IM2 | print portion (laser marking) |

## Claims

**1.** A multi-layered body comprising:

a base material layer;
a near-infrared absorption layer which is formed on a side of a first surface of the base material layer and which contains a near-infrared absorption ink composition containing a near-infrared absorption material; and
a laser color production layer which is formed on a side of a second surface of the base material layer, which contains a laser color production agent, and which produces color when irradiated with laser light, wherein
the near-infrared absorption material contains cesium tungsten oxide or lanthanum hexaboride, and when a target portion of the near-infrared absorption layer is irradiated with laser light, near-infrared absorbency in at least a predetermined wavelength range of the target portion declines.

2. The multi-layered body according to claim 1, further comprising a first surface-side printing layer which is formed on a side of the first surface of the base material layer and which contains a colored ink composition or a fluorescent ink composition with near-infrared transparency.

3. The multi-layered body according to claim 1 or 2, further comprising a first surface-side hologram layer which is formed on a side of the first surface of the base material layer and which has near-infrared transparency.

4. The multi-layered body according to any one of claims 1 to 3, further comprising a second surface-side printing layer which is formed on a side of the second surface of the base material layer so as to overlap with the laser color production layer and which contains a colored ink composition or a fluorescent ink composition.

5. The multi-layered body according to any one of claims 1 to 4, further comprising a second surface-side hologram layer which is formed on a side of the second surface of the base material layer so as to overlap with the laser color production layer.

6. The multi-layered body according to any one of claims 1 to 5, further comprising a first surface-side transparent layer which is formed on a side of the first surface of the base material layer as an outermost layer on a side of the first surface in the multi-layered body and which has visible light transparency and near-infrared transparency.

7. The multi-layered body according to any one of claims 1 to 6, further comprising a second surface-side transparent layer which is formed on a side of the second surface of the base material layer as an outermost layer on a side of the second surface in the multi-layered body and which has visible light transparency and near-infrared transparency.

8. The multi-layered body according to claim 6, wherein a plurality of convex optical element portions are formed in a section which at least partially overlaps with the near-infrared absorption layer on a surface on an opposite side to the near-infrared absorption layer in the first surface-side transparent layer.

9. The multi-layered body according to claim 7, wherein a plurality of convex optical element portions are formed in a partial section on a surface on an opposite side to the laser color production layer in the second surface-side transparent layer.

10. The multi-layered body according to any one of claims 1 to 9, further comprising a window portion which is formed so as to penetrate the base material layer and the laser color production layer and at least partially overlap with the near-infrared absorption layer and which has visible light transparency and near-infrared transparency.

11. The multi-layered body according to any one of claims 1 to 10, further comprising

a base material intermediate layer, the base material intermediate layer including a first portion and a second portion, wherein
the base material layer includes a first base material layer and a second base material layer, and the first portion of the base material intermediate layer is positioned between the first base material layer and the second base material layer, and
the second portion of the base material intermediate layer is positioned at an end of the base material intermediate layer and not positioned between the first base material layer and the second base material layer.

12. The multi-layered body according to any one of claims 1 to 11, wherein

the near-infrared absorption layer includes a near-infrared information display unit which displays information using a change in near-infrared absorption characteristics inside the near-infrared absorption layer caused by irradiating the near-infrared absorption layer with laser light,
the laser color production layer includes a visible information display unit which displays information using a change in visible light absorption characteristics inside the laser color production layer caused by irradiating the laser color production layer with laser light, and
the information displayed by the near-infrared information display unit and the information displayed by the visible information display unit contains a same piece of information.

13. A print product in which a plurality of sheets are bound together, wherein at least one sheet among the plurality of the sheets is the multi-layered body according to claim 11, and the multi-layered body is bound with the other sheets in the second portion of the base material intermediate layer.

**14.** A multi-layered body comprising:

a base material layer;
a near-infrared absorption layer which is formed on a side of a first surface of the base material layer and which contains a near-infrared absorption ink composition containing a near-infrared absorption material; and
a laser color production layer which is formed on a side of the first surface of the base material layer, which contains a laser color production agent, and which produces color when irradiated with laser light; and
a window portion which is formed so as to penetrate the base material layer and the laser color production layer and at least partially overlap with the near-infrared absorption layer and which has visible light transparency and near-infrared transparency, wherein
the near-infrared absorption material contains cesium tungsten oxide or lanthanum hexaboride, and when a target portion of the near-infrared absorption layer is irradiated with laser light, near-infrared absorbency in at least a predetermined wavelength range of the target portion declines.

**15.** The multi-layered body according to claim 14, wherein

the near-infrared absorption layer includes a near-infrared information display unit which displays information using a change in near-infrared absorption characteristics inside the near-infrared absorption layer caused by irradiating the near-infrared absorption layer with laser light,
the laser color production layer includes a visible information display unit which displays information using a change in visible light absorption characteristics inside the laser color production layer caused by irradiating the laser color production layer with laser light, and
the information displayed by the near-infrared information display unit and the information displayed by the visible information display unit contains a same piece of information.

**16.** A method of irradiating a target portion of a near-infrared absorption layer in a multi-layered body with laser light so as to lower near-infrared absorbency in at least a predetermined wavelength range of the target portion, the multi-layered body including:

a base material layer;
the near-infrared absorption layer which is formed on a side of a first surface of the base material layer and which contains a near-infrared absorption ink composition containing a near-infrared absorption material, the near-infrared absorption material containing cesium tungsten oxide or lanthanum hexaboride; and
a laser color production layer which is formed on a side of a second surface of the base material layer, which contains a laser color production agent, and which produces color when irradiated with laser light.

**17.** A method of determining authenticity of a multi-layered body by comparing a displayed content of a near-infrared information display unit and a displayed content of a visible information display unit with each other, the multi-layered body including:

a base material layer;
a near-infrared absorption layer which is formed on a side of a first surface of the base material layer and which contains a near-infrared absorption ink composition containing a near-infrared absorption material, the near-infrared absorption material containing cesium tungsten oxide or lanthanum hexaboride, and which includes the near-infrared information display unit which displays information using a change in near-infrared absorption characteristics inside the near-infrared absorption layer; and
a laser color production layer which is formed on a side of a second surface of the base material layer, which contains a laser color production agent, which produces color when irradiated with laser light, and which includes the visible information display unit which displays information using a change in visible light absorption characteristics inside the laser color production layer.

**18.** A method of determining authenticity of a multi-layered body by comparing a displayed content of a near-infrared information display unit and a displayed content of a visible information display unit with each other, the multi-layered body including:

a base material layer;

a near-infrared absorption layer which is formed on a side of a first surface of the base material layer and which contains a near-infrared absorption ink composition containing a near-infrared absorption material, the near-infrared absorption material containing cesium tungsten oxide or lanthanum hexaboride, and which includes the near-infrared information display unit which displays information using a change in near-infrared absorption characteristics inside the near-infrared absorption layer;
a laser color production layer which is formed on a side of the first surface of the base material layer, which contains a laser color production agent, which produces color when irradiated with light, and which includes the visible information display unit which displays information using a change in visible light absorption characteristics inside the laser color production layer; and
a window portion which is formed so as to penetrate the base material layer and the laser color production layer and at least partially overlap with the near-infrared absorption layer and which has visible light transparency and near-infrared transparency.

FIG.1

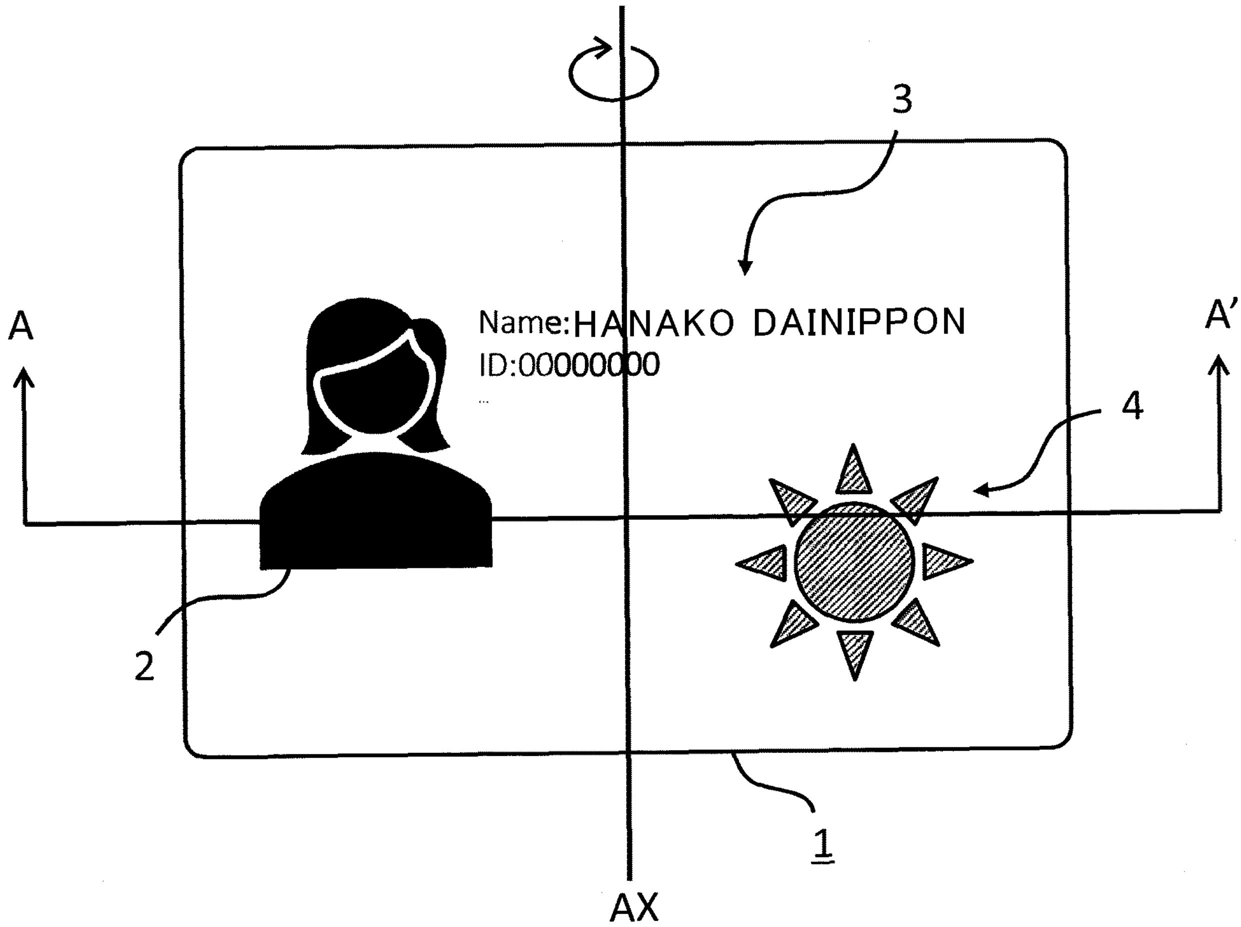

FIG.2

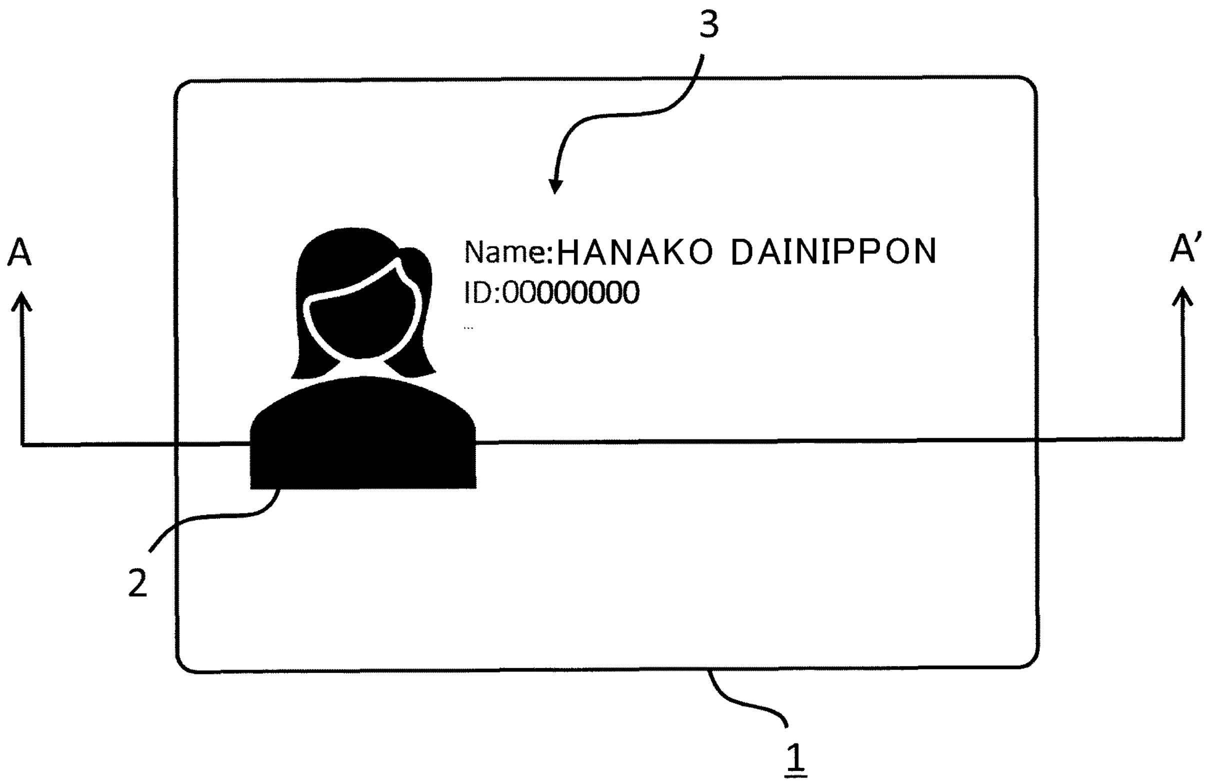


FIG.3

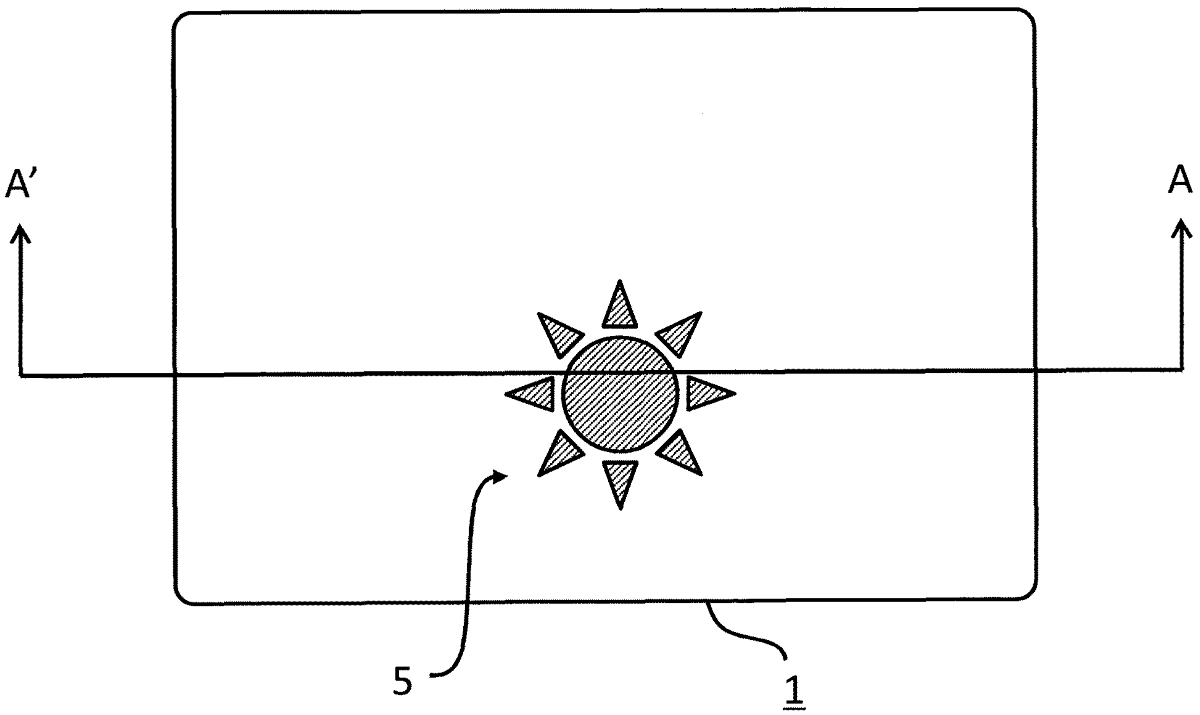

FIG.4

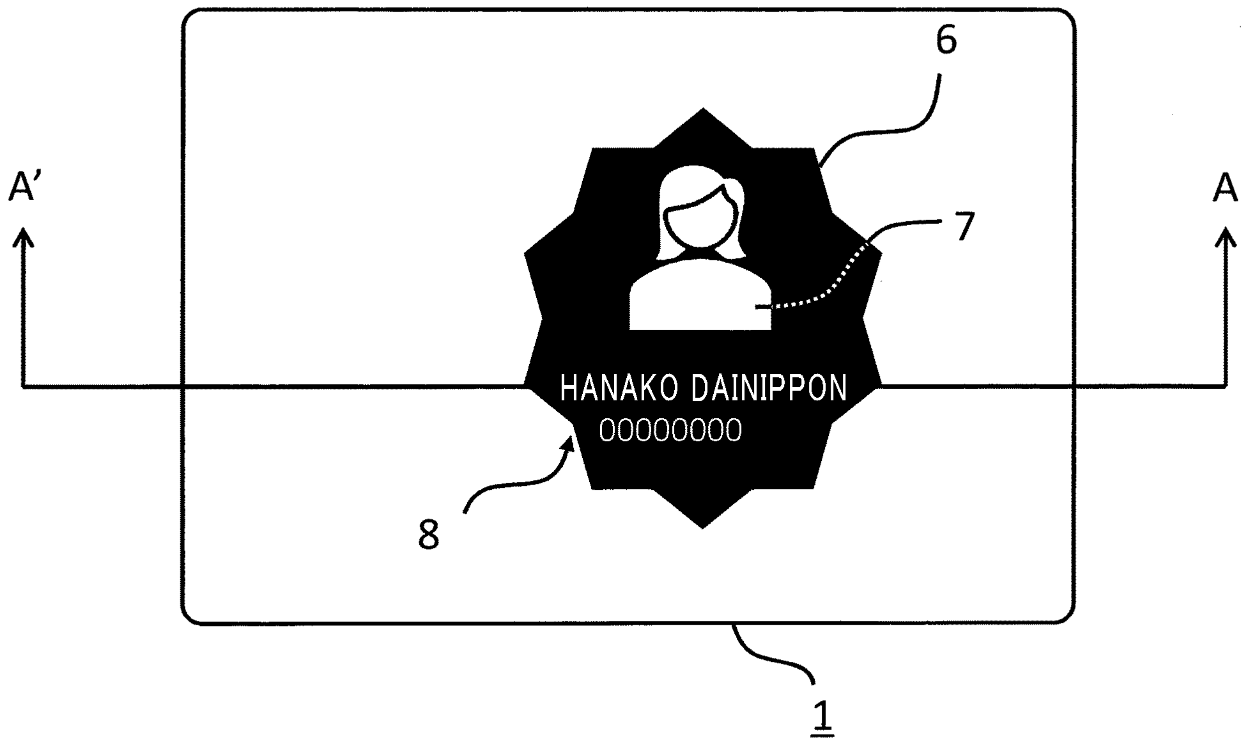

FIG.5

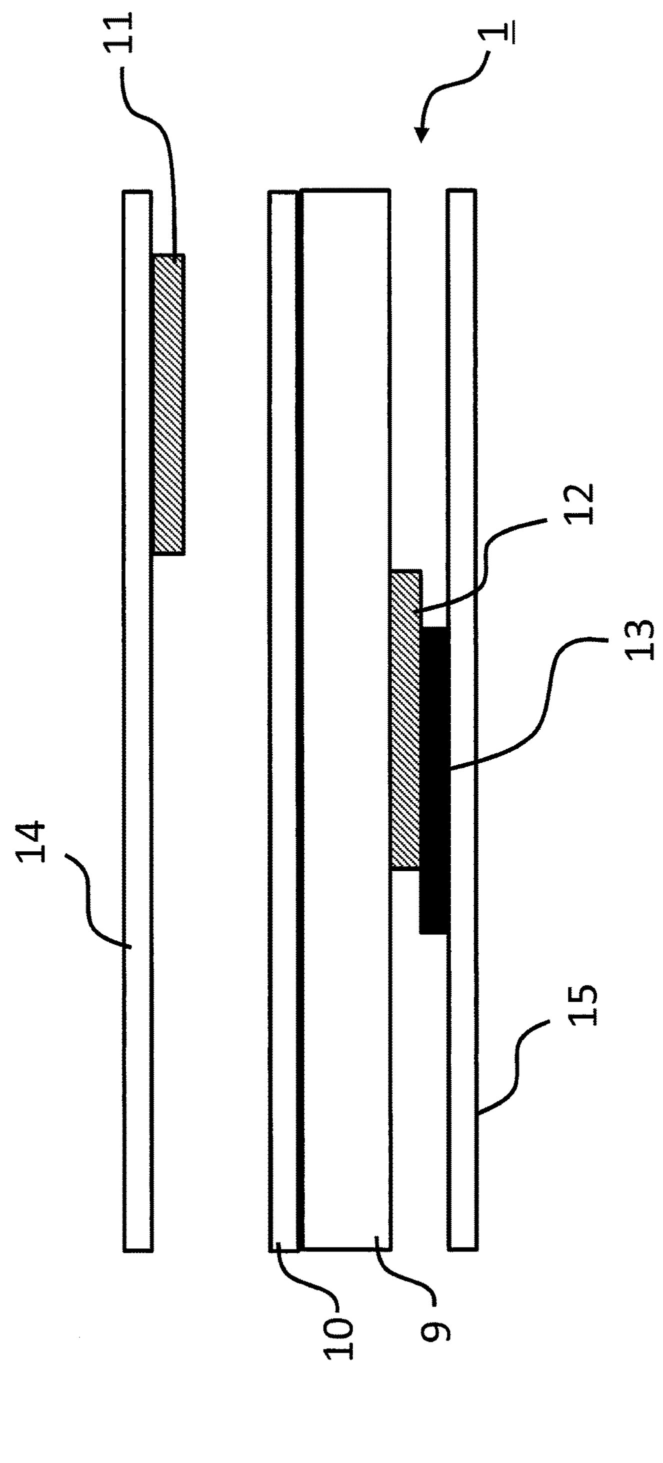

FIG.6

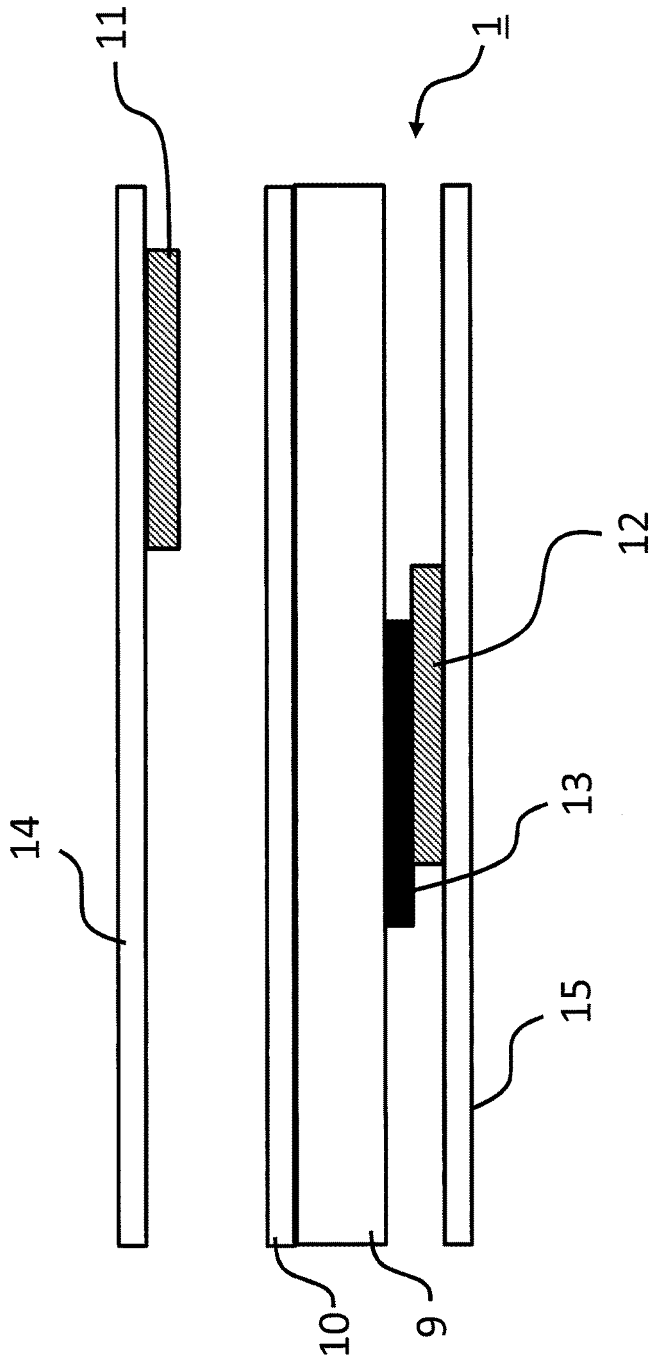

FIG.7

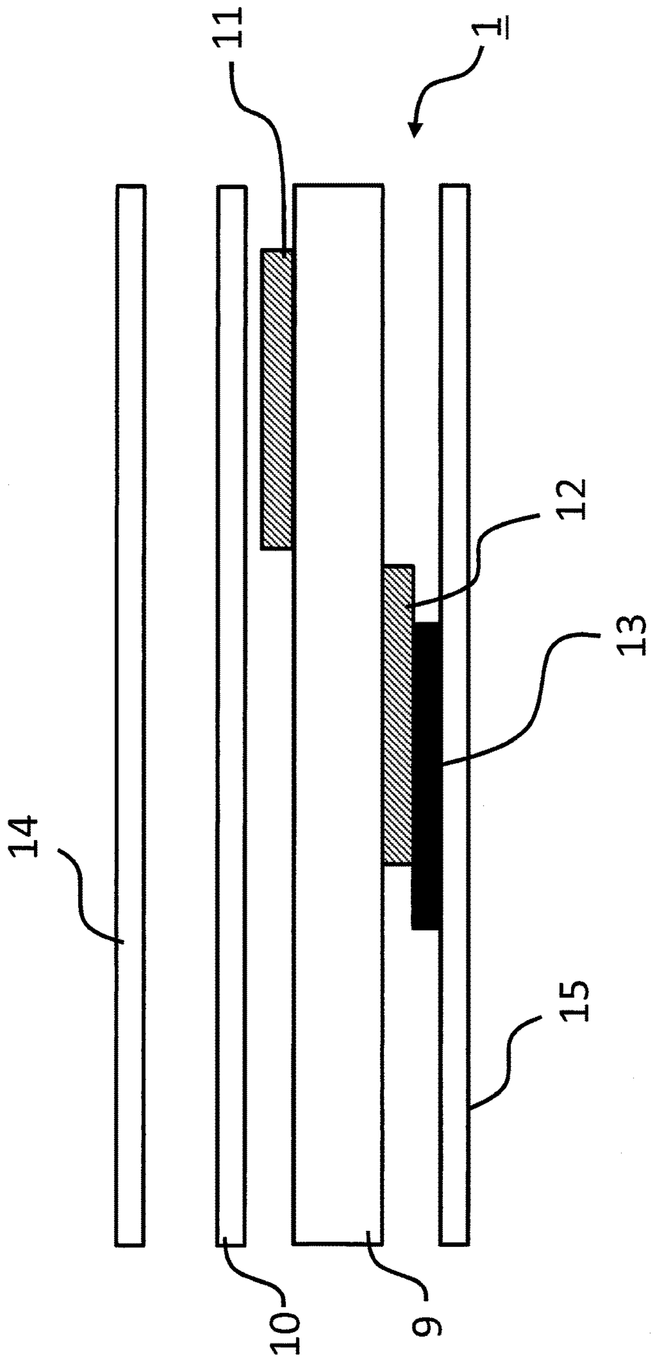

FIG.8

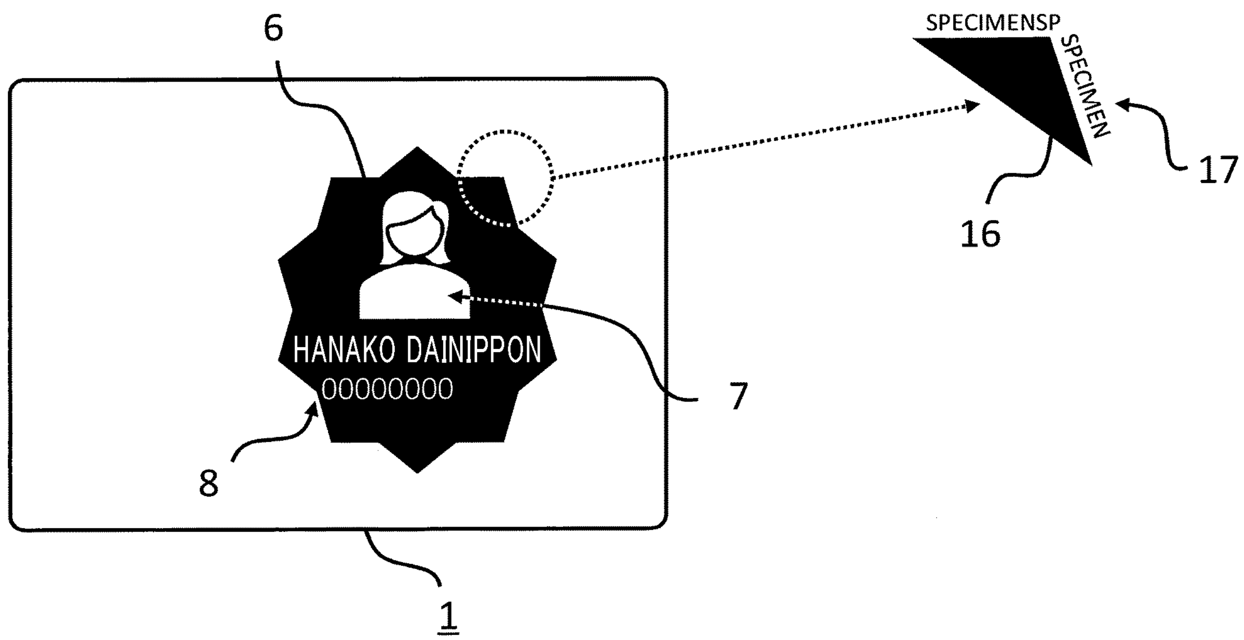
6
SPECIMENSP
SPECIMEN
17
16
HANAKO DAINIPPON
00000000
7
8
1

FIG.9

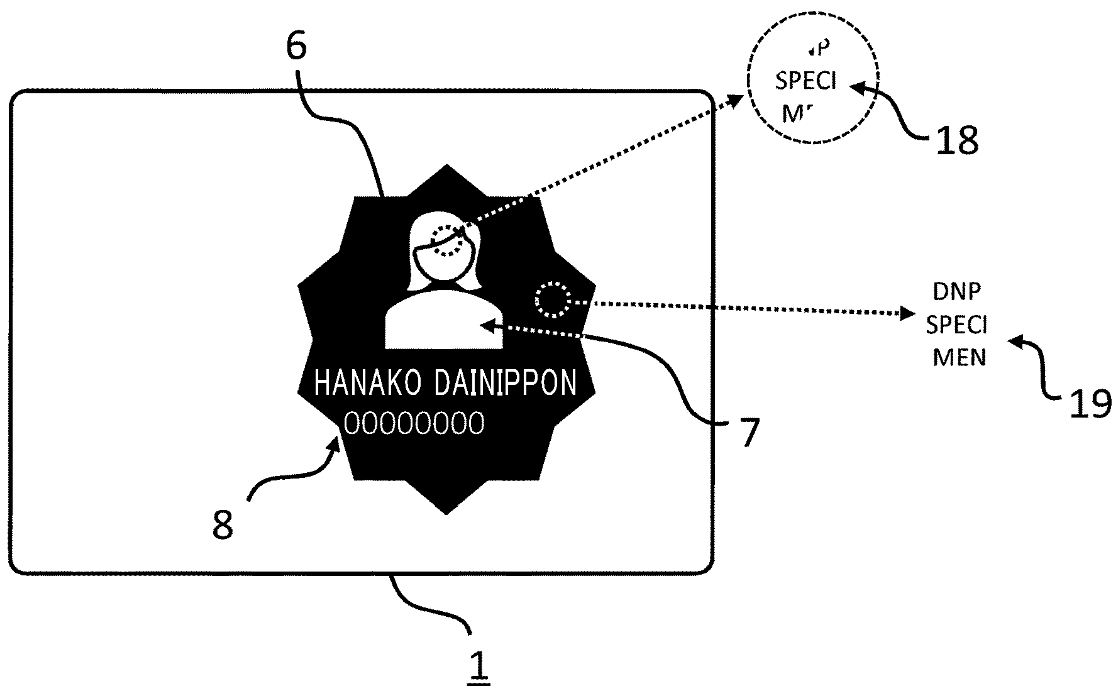
6
SPECI
18
DNP
SPECI
MEN
19
HANAKO DAINIPPON
00000000
7
8
1

FIG.10

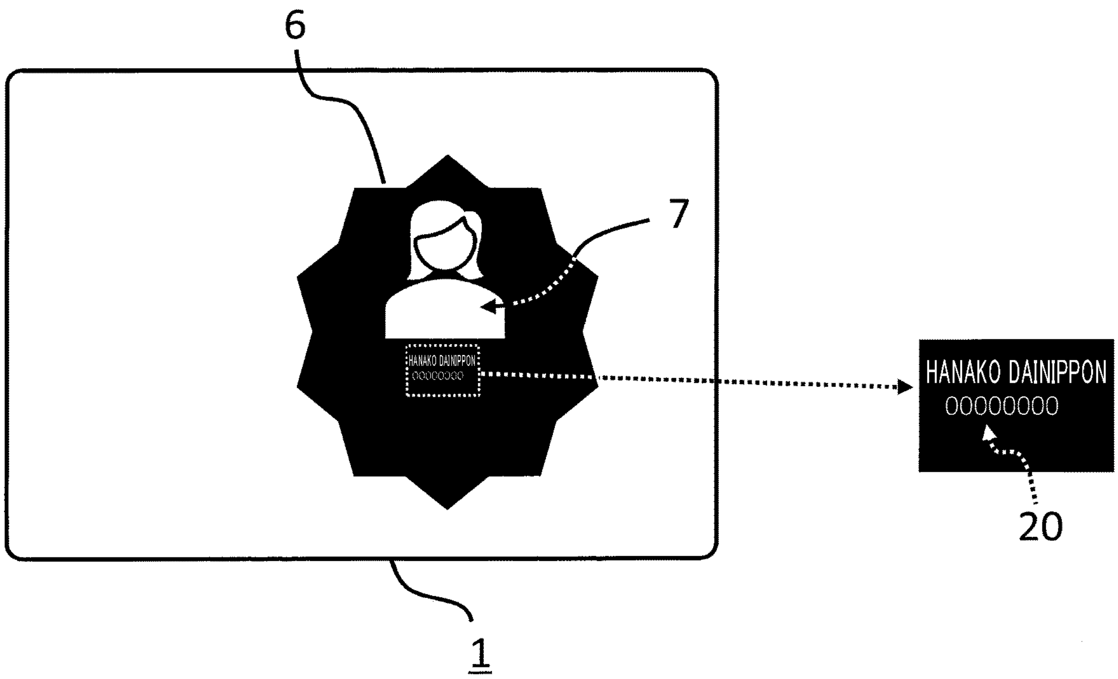
6
7
HANAKO DAINIPPON
00000000
HANAKO DAINIPPON
00000000
20
1

FIG.11

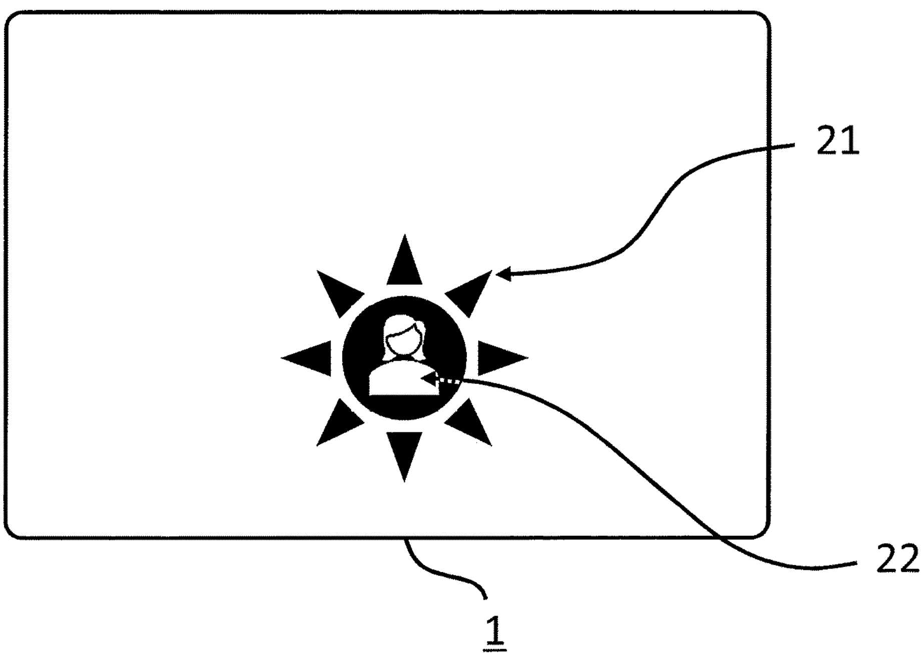
21
22
1

FIG.12

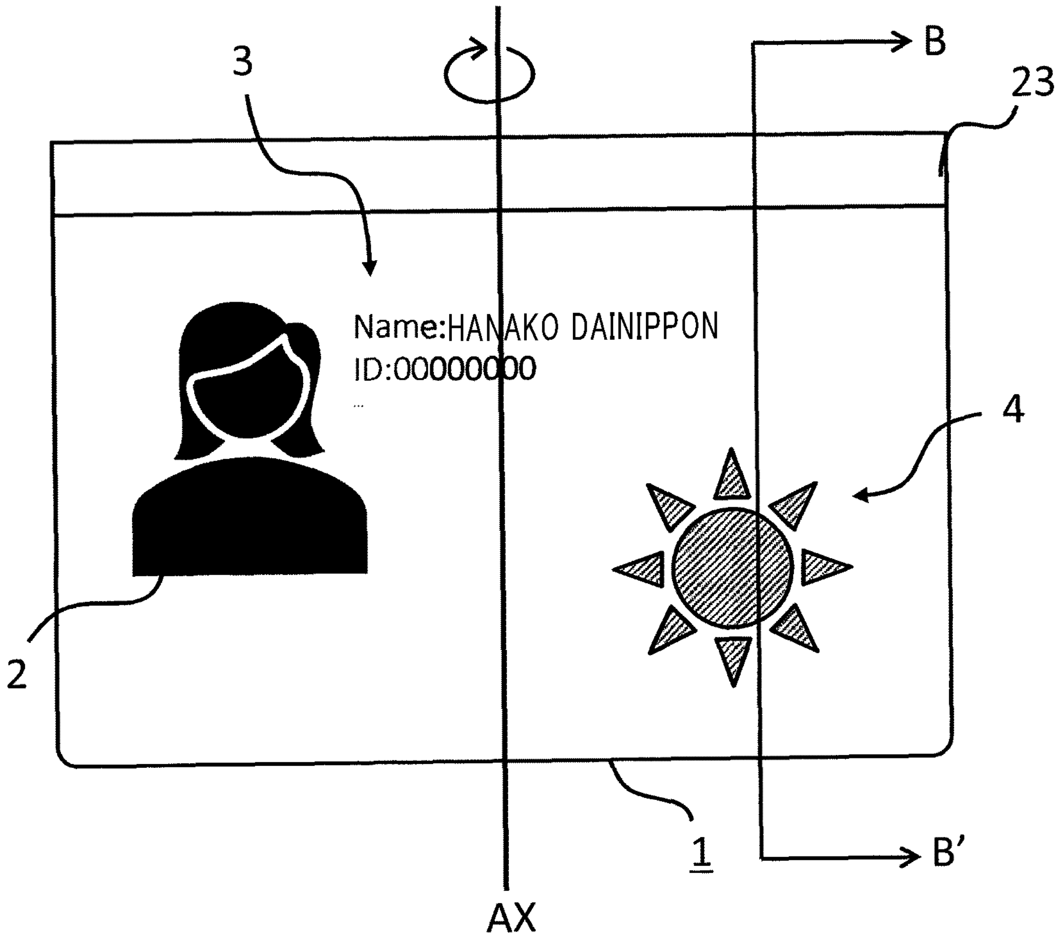

FIG.13

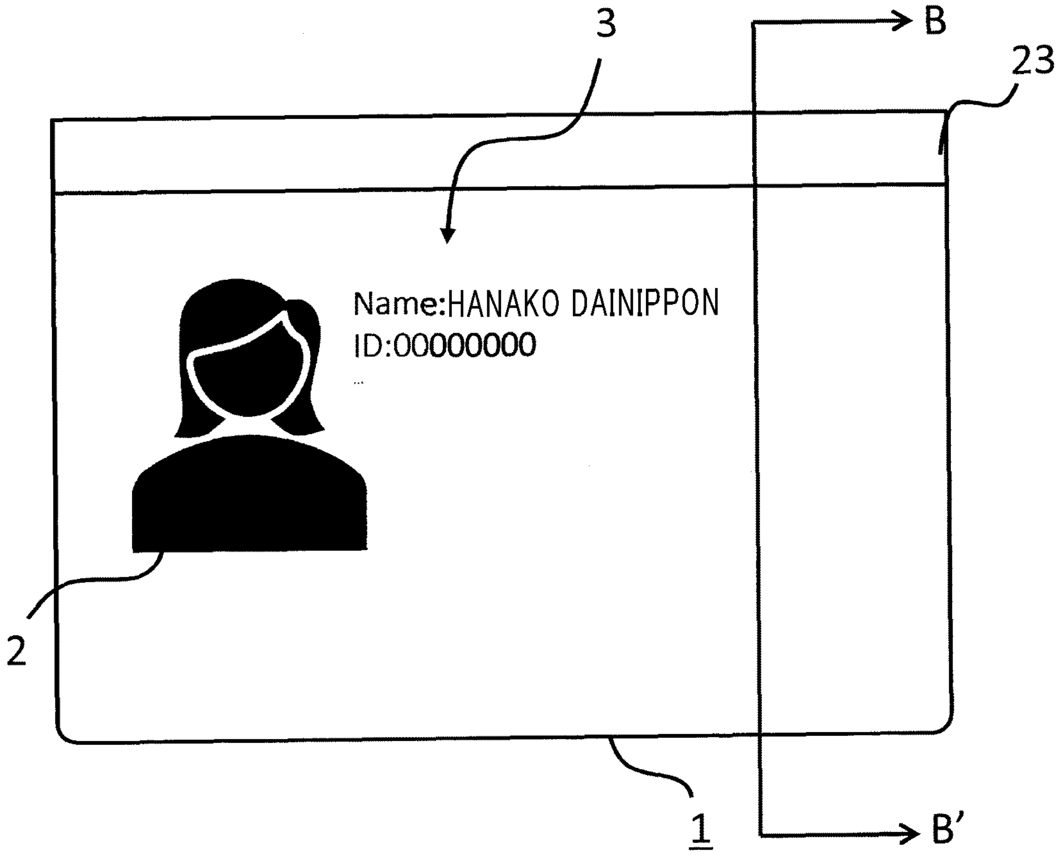

FIG.14

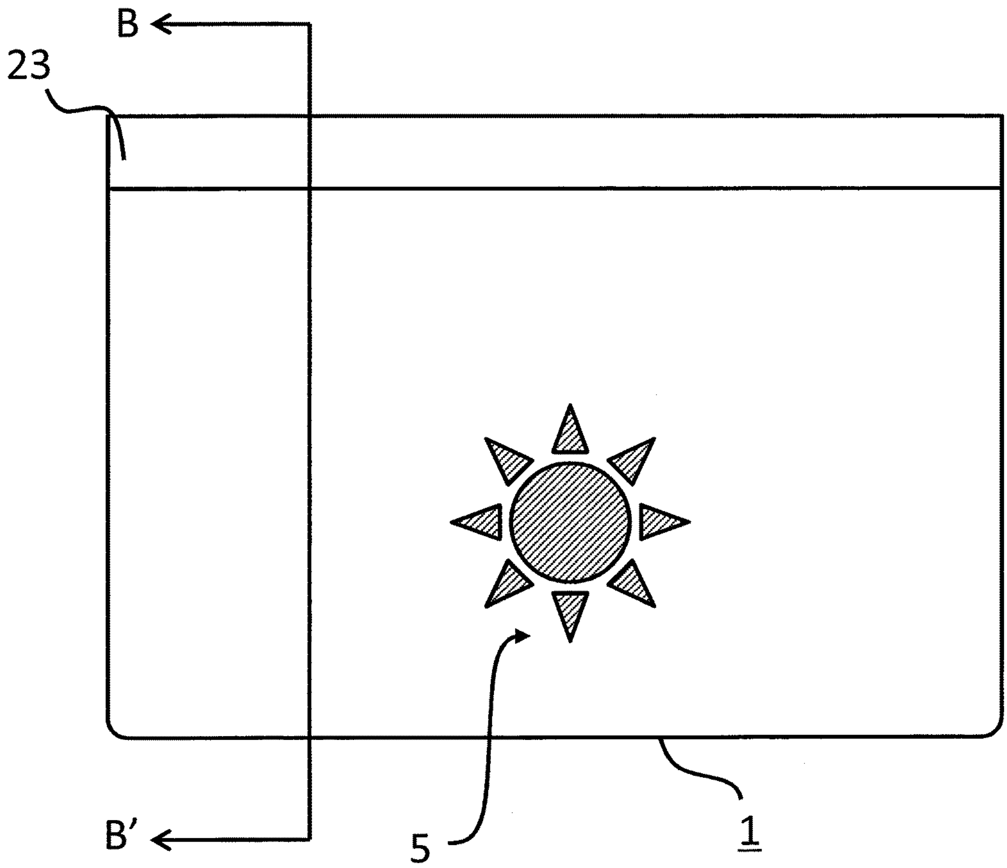

FIG.15

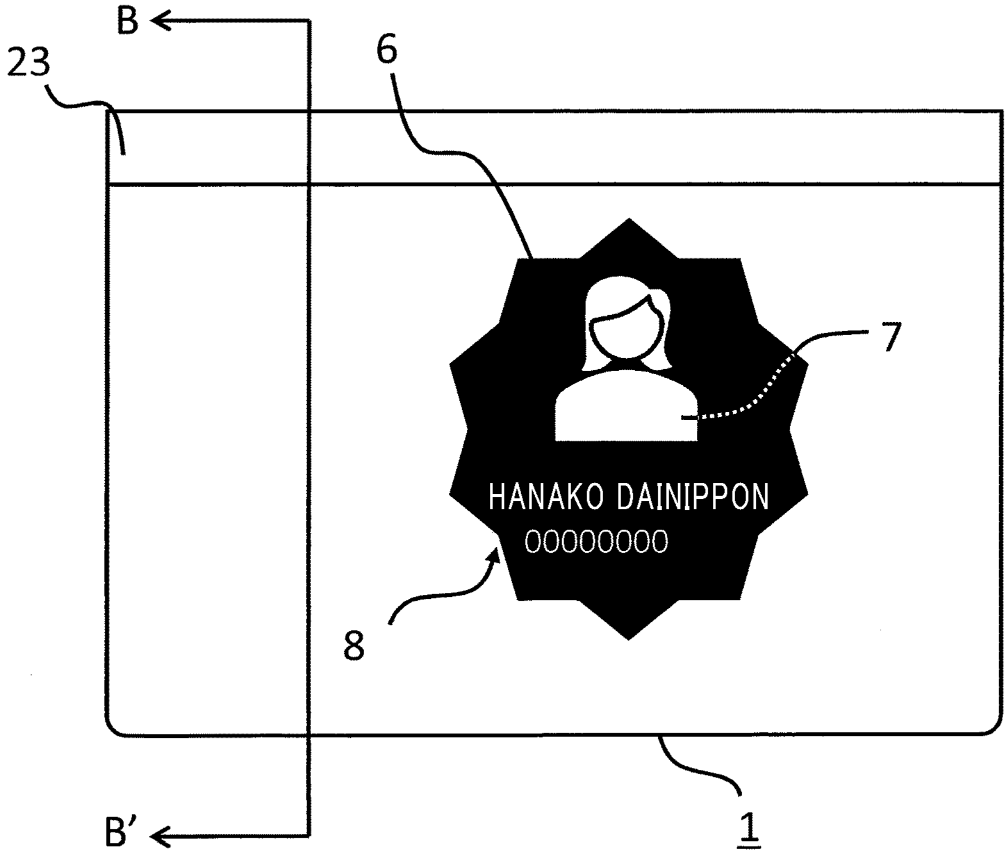

FIG.16

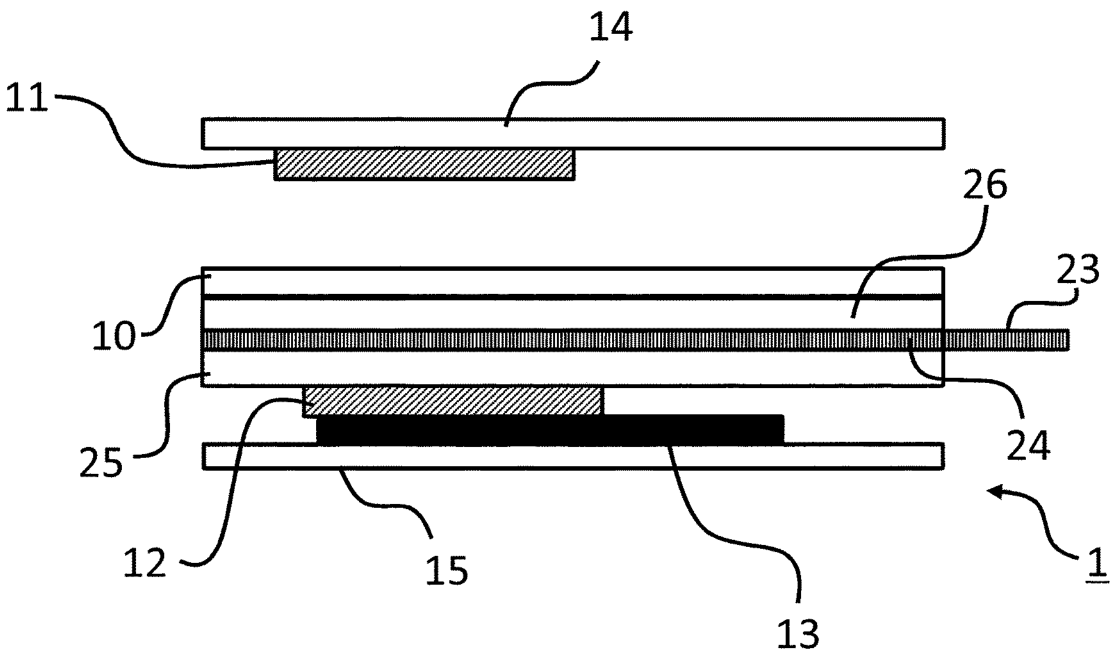


FIG.17

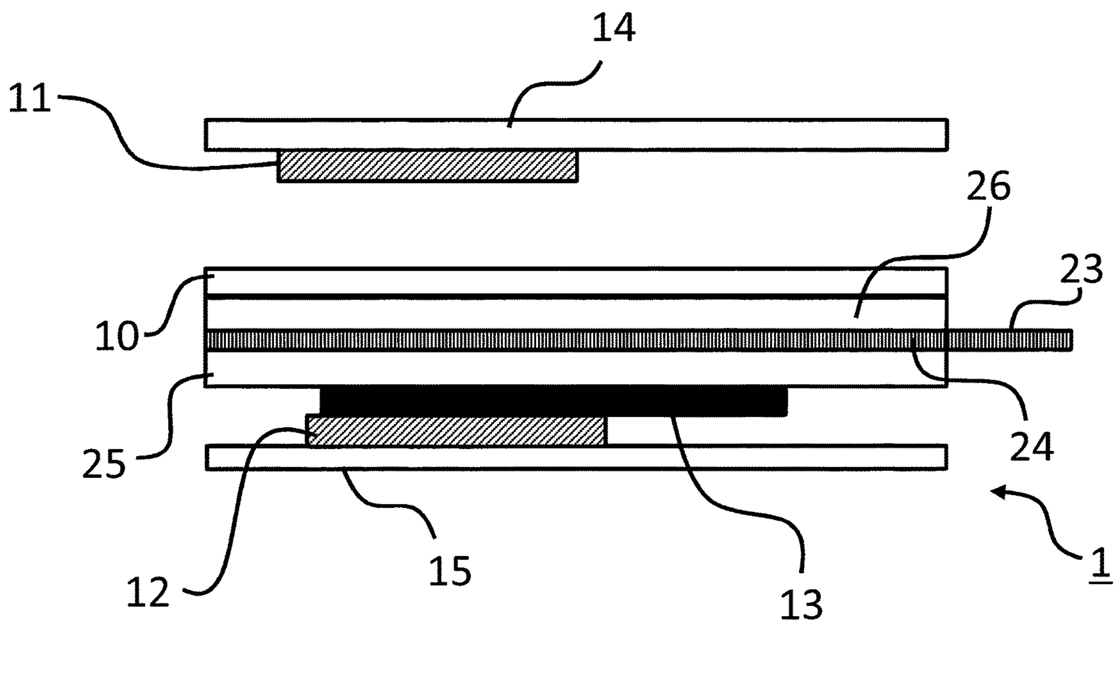

FIG.18

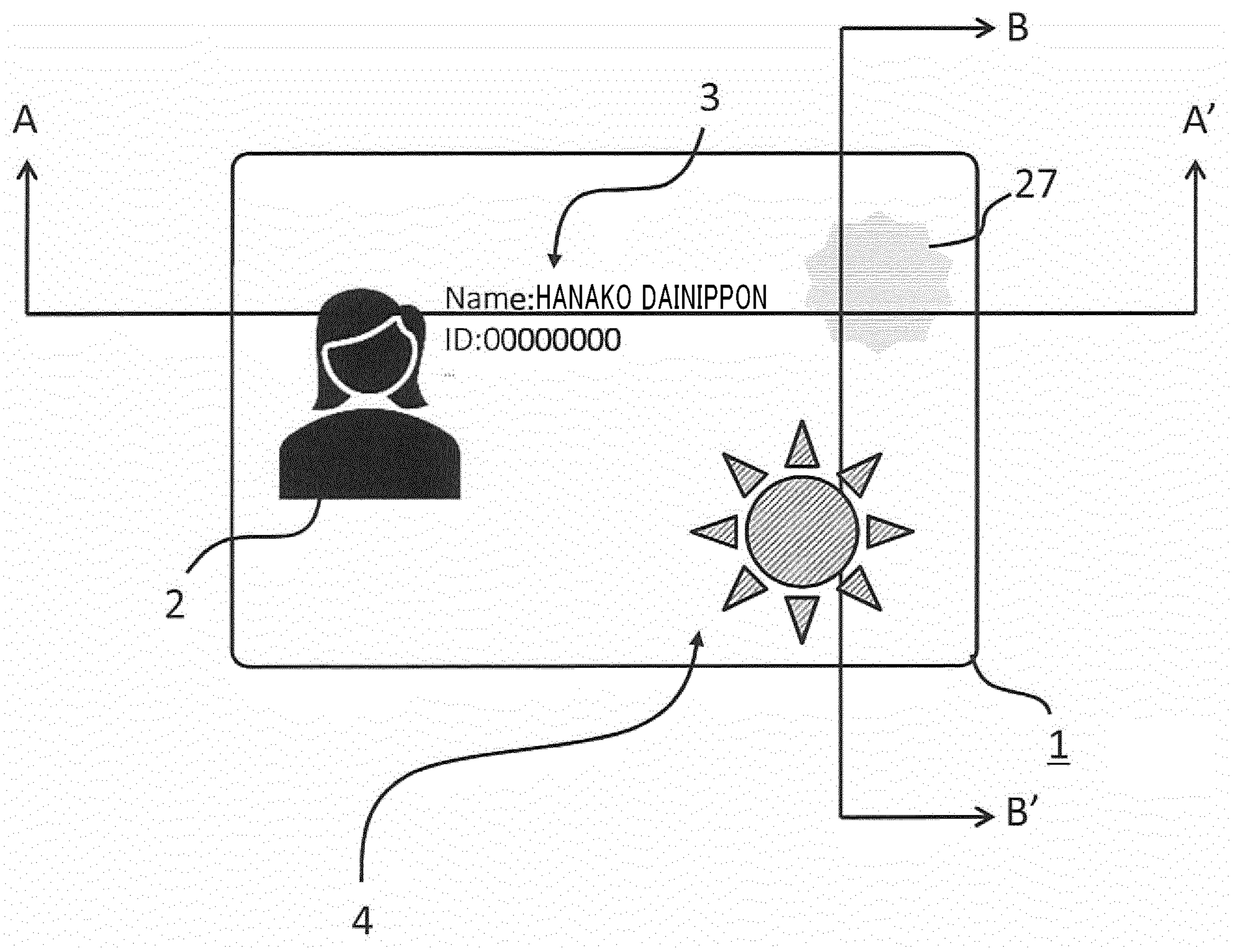

FIG.19

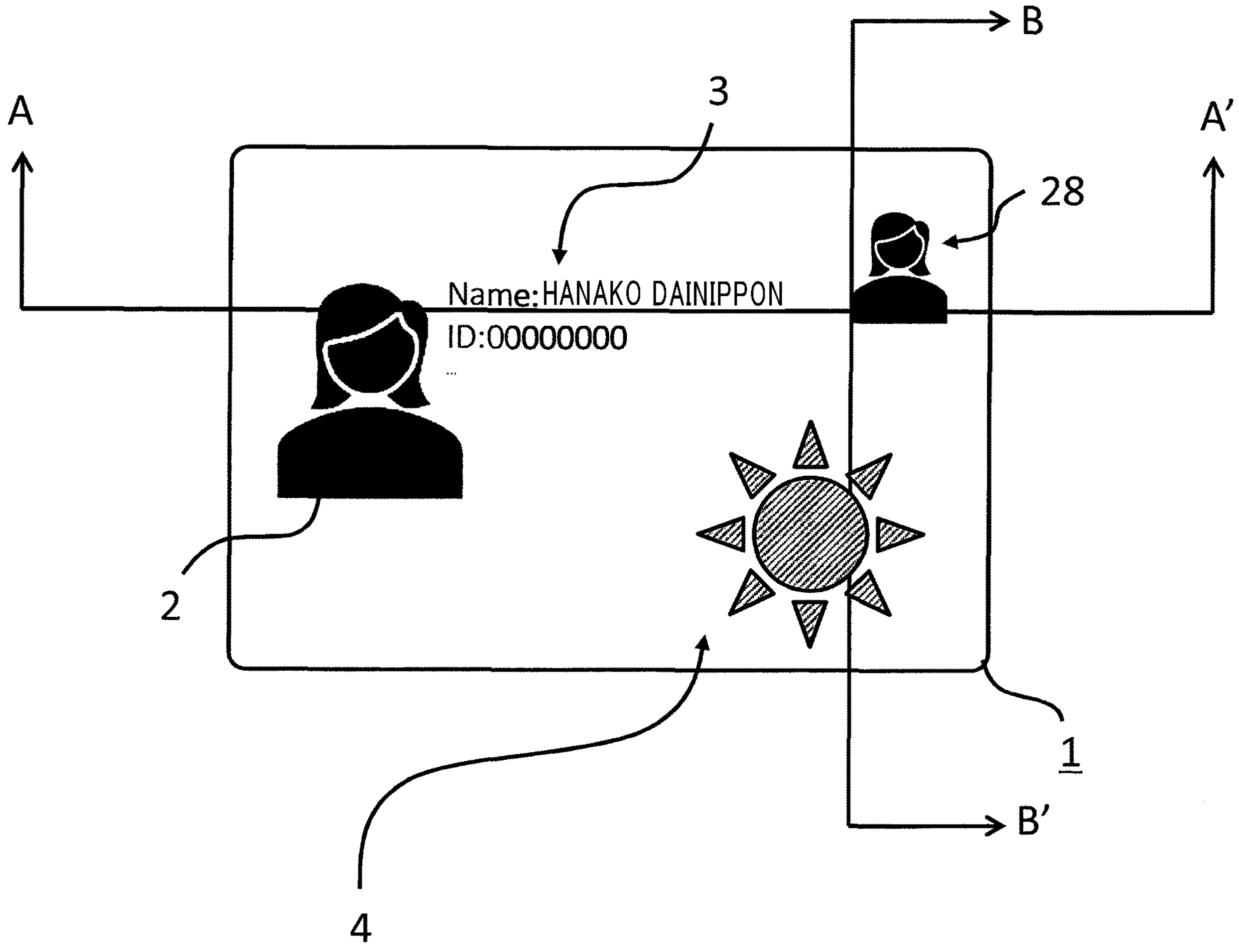

FIG.19A

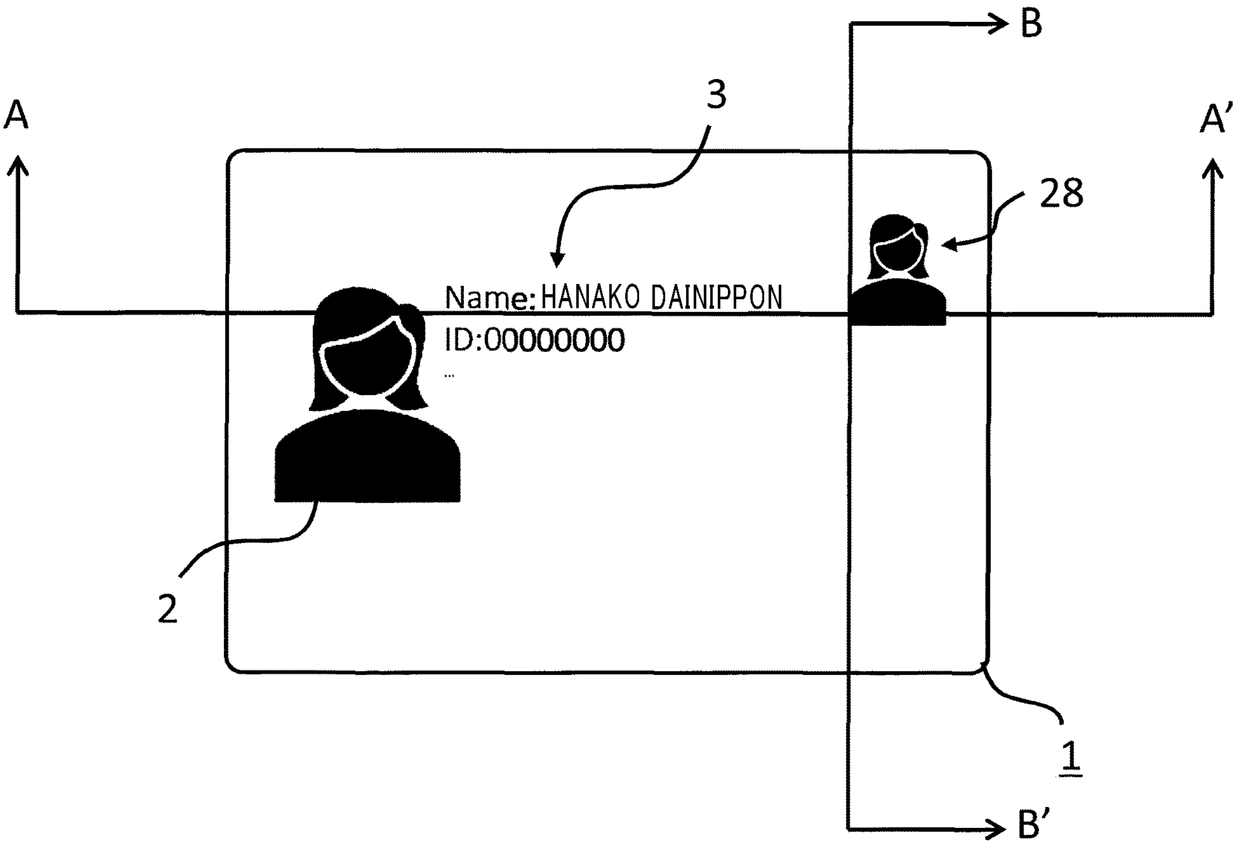

FIG.20

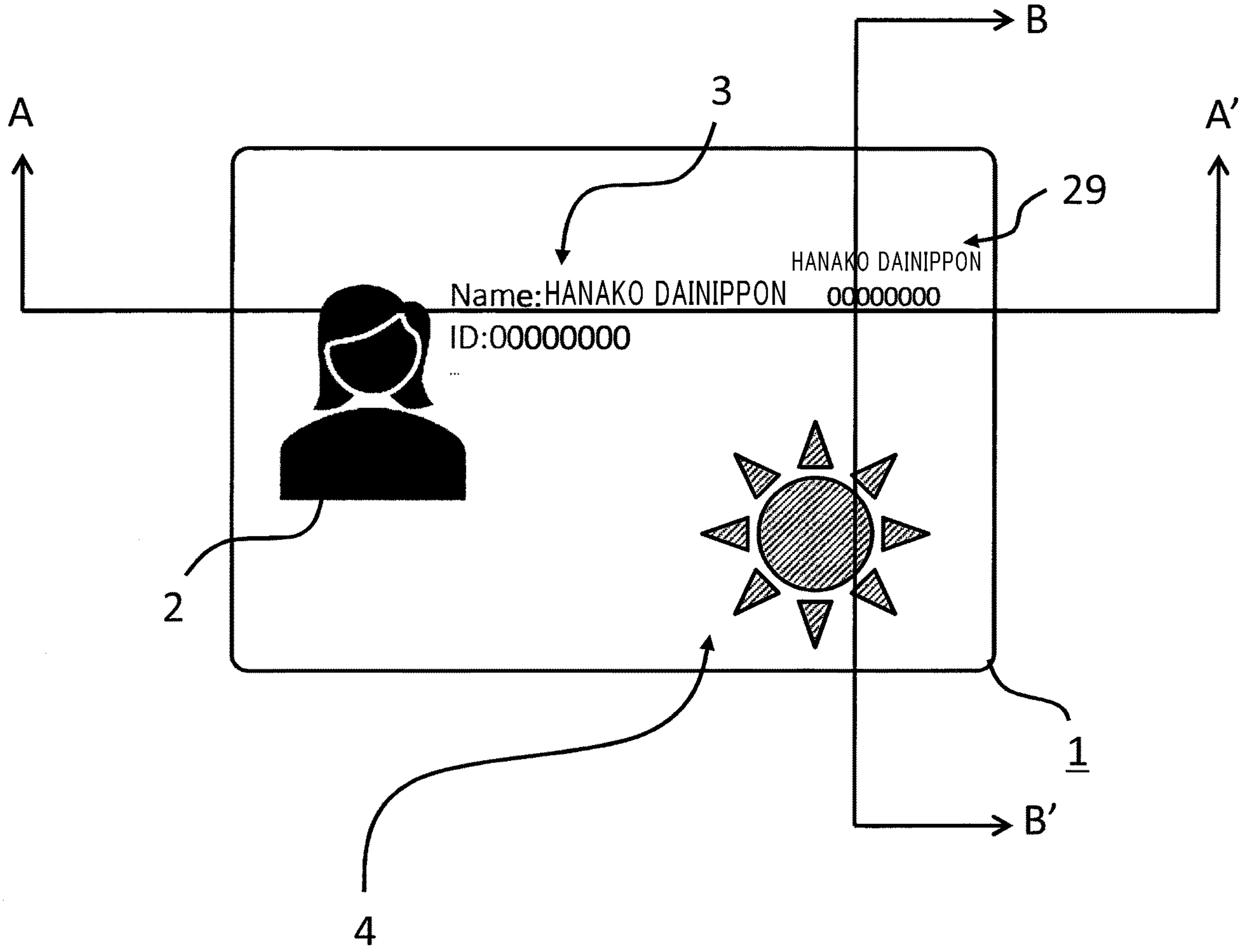
A
A'
B
B'
3
29
Name:HANAKO DAINIPPON
ID:00000000
HANAKO DAINIPPON
00000000
2
4
1

FIG. 20A

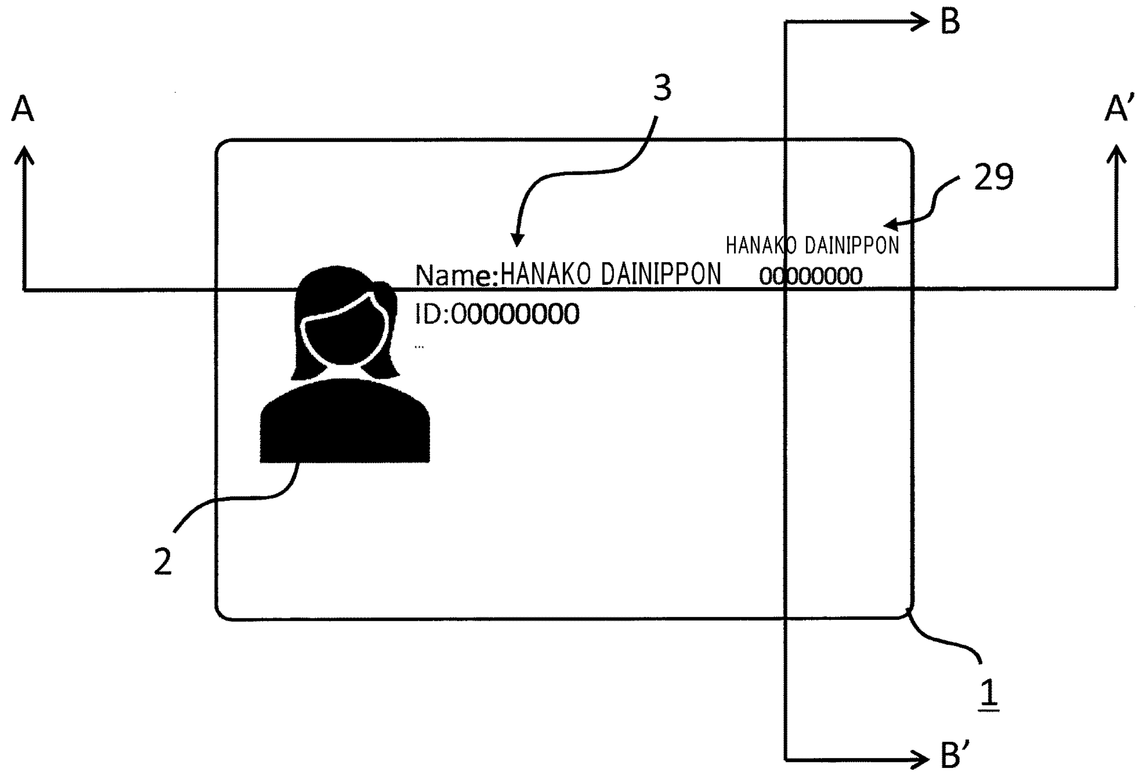


FIG. 21

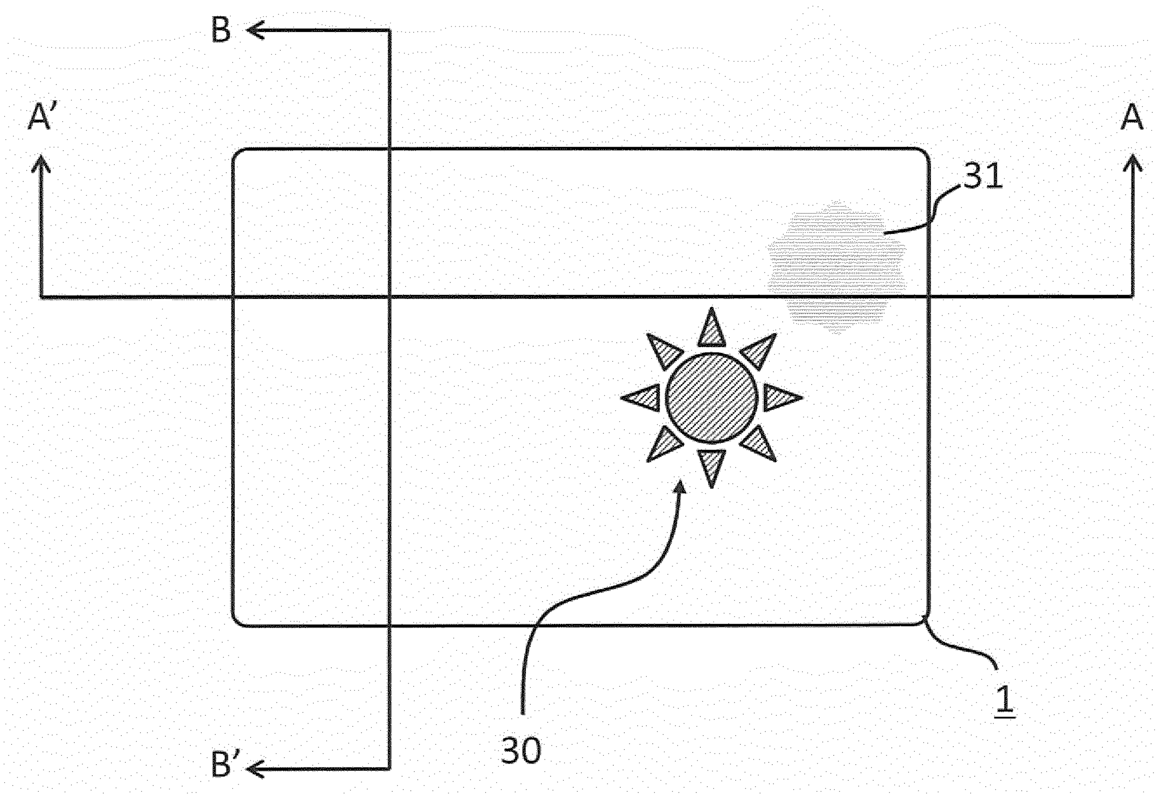

FIG. 22

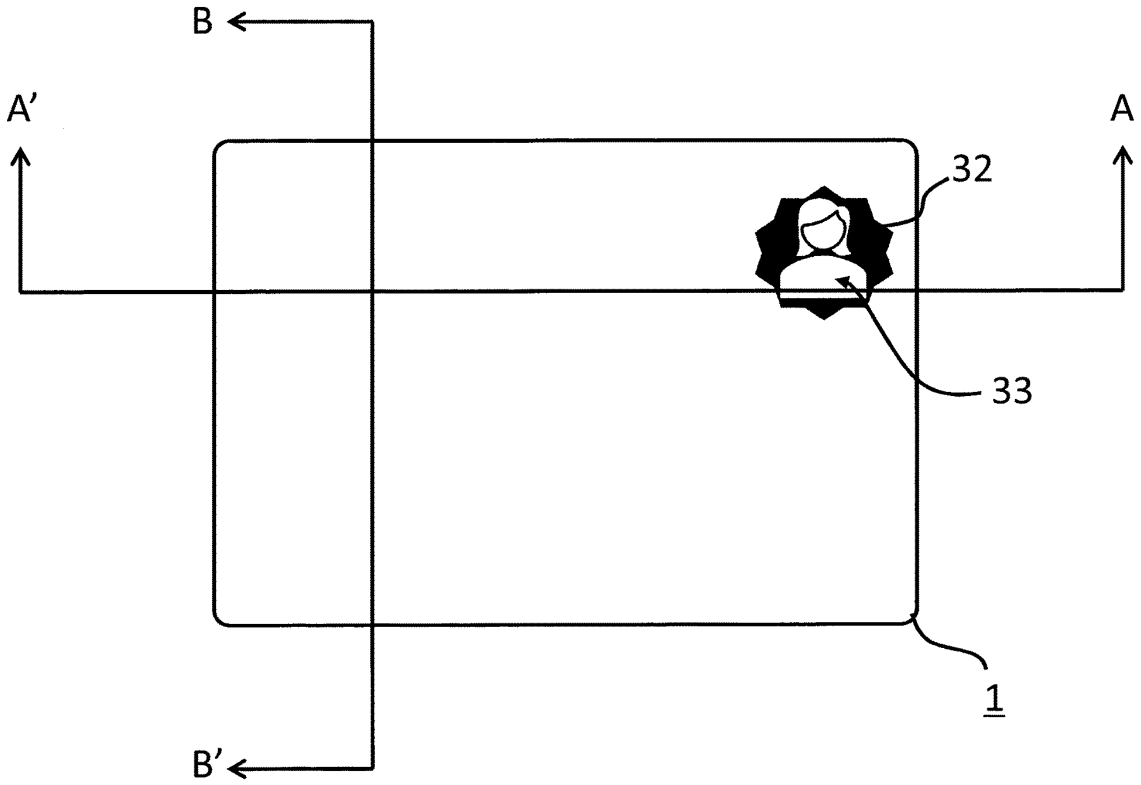


FIG. 23

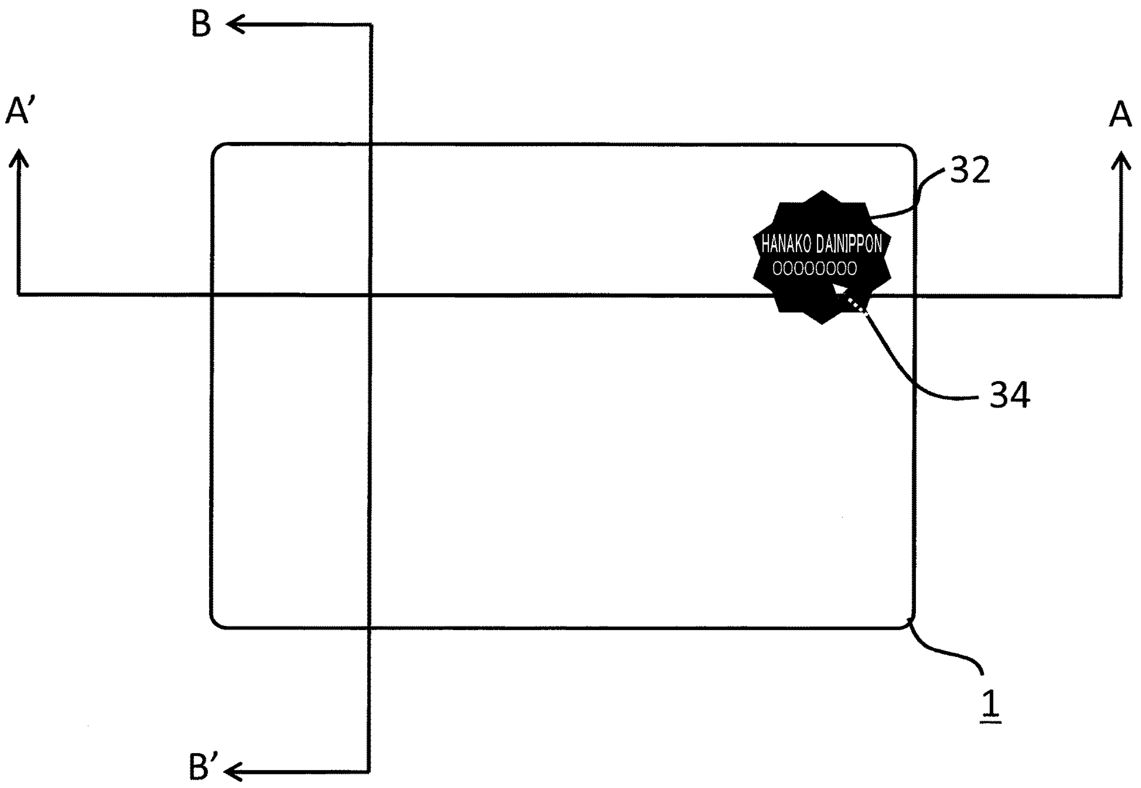

FIG. 24

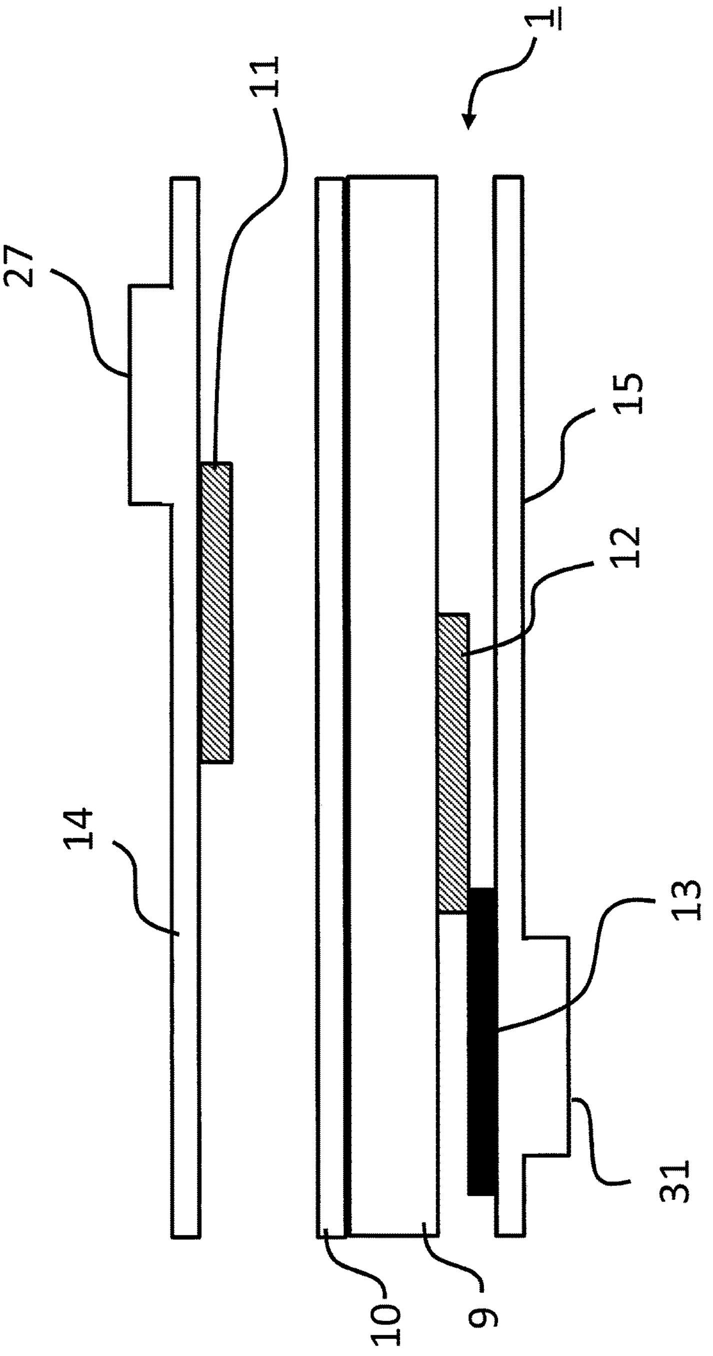

FIG. 25

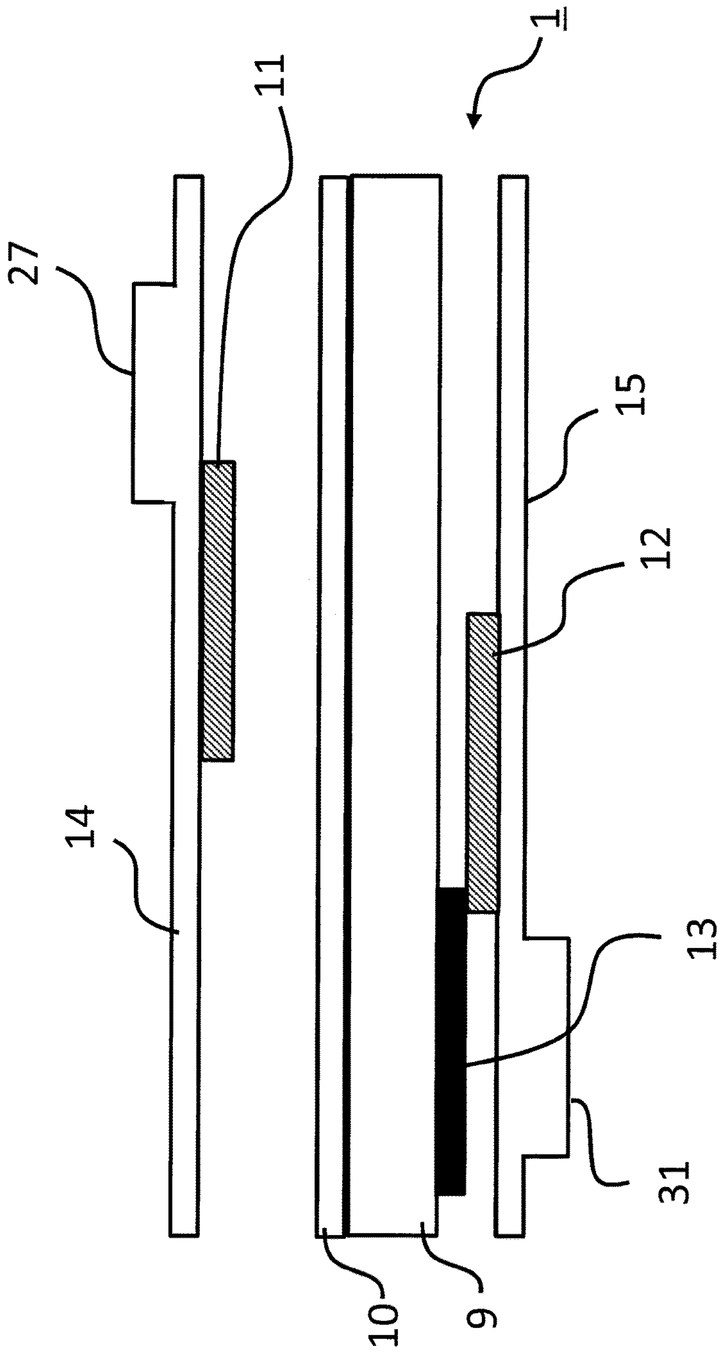

FIG. 26

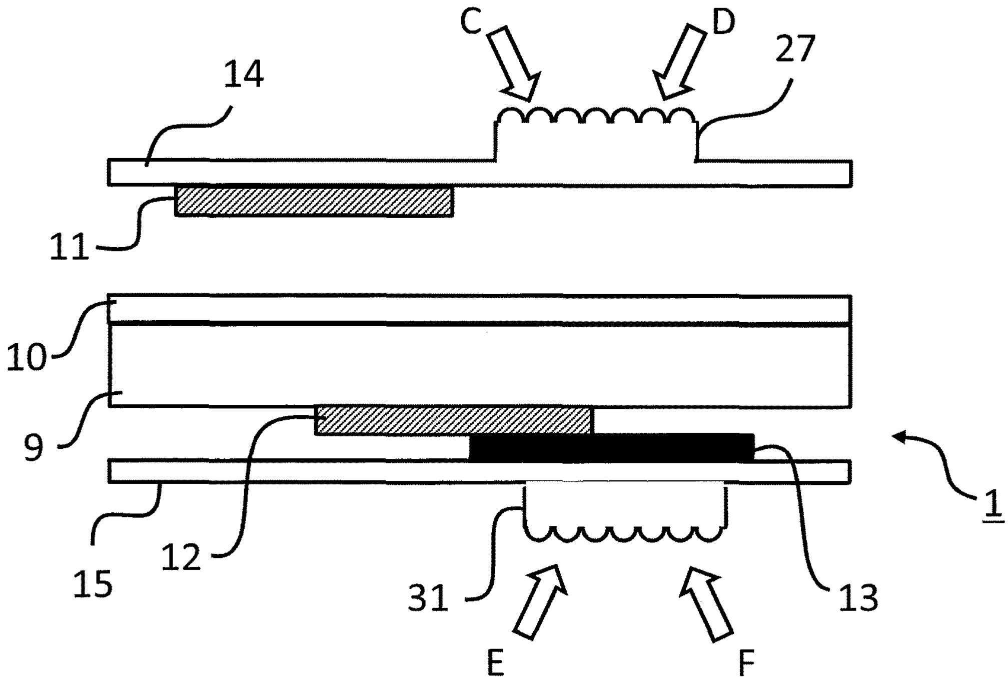


FIG. 27

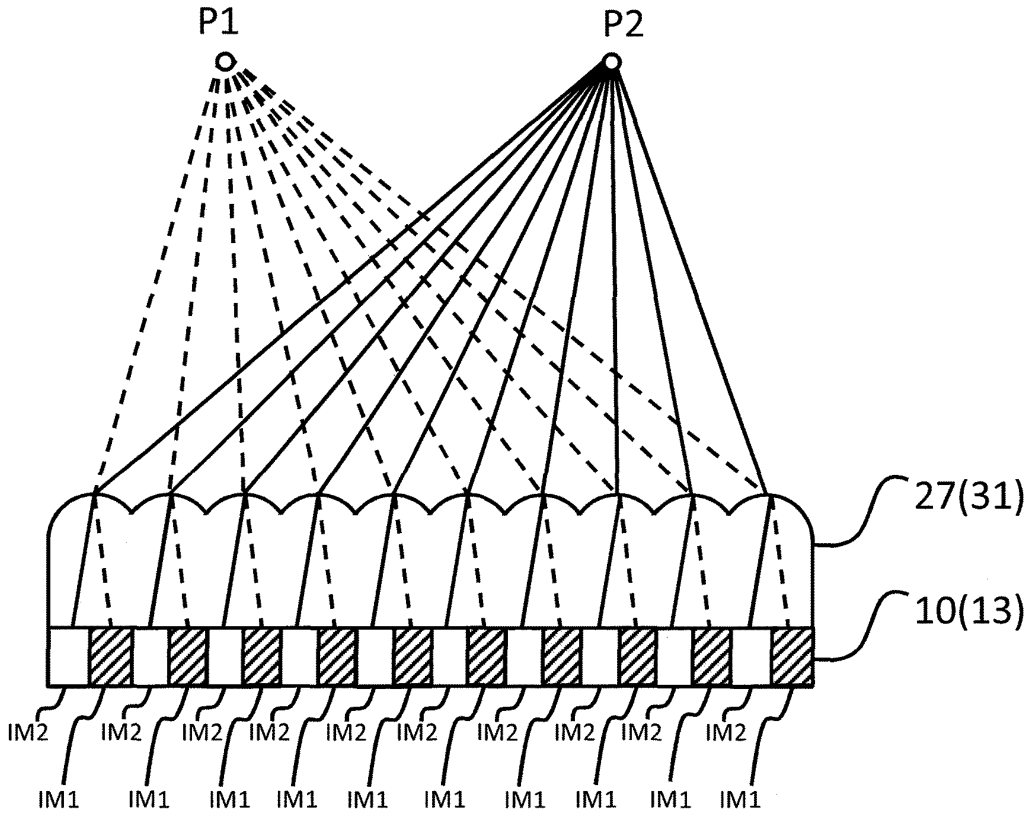

FIG. 28

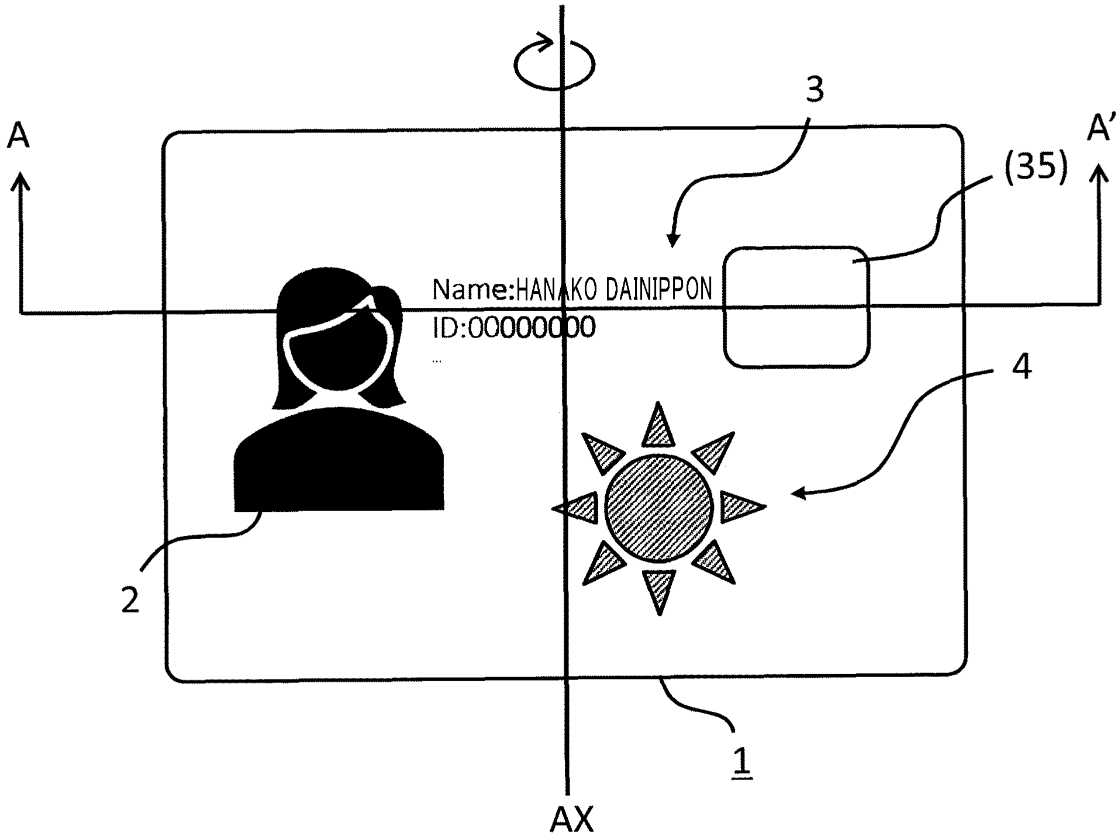
3
A
A'
(35)
Name:HANAKO DAINIPPON
ID:00000000
4
2
1
AX

FIG. 29

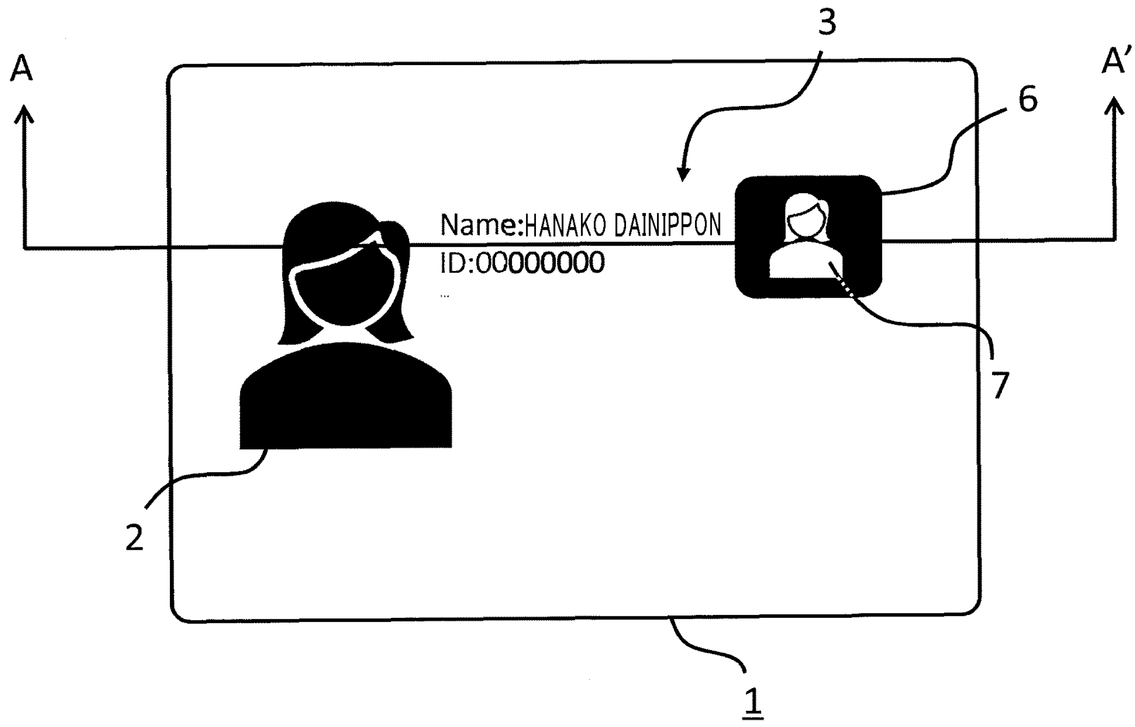
3
A
A'
6
Name:HANAKO DAINIPPON
ID:00000000
7
2
1

FIG. 30

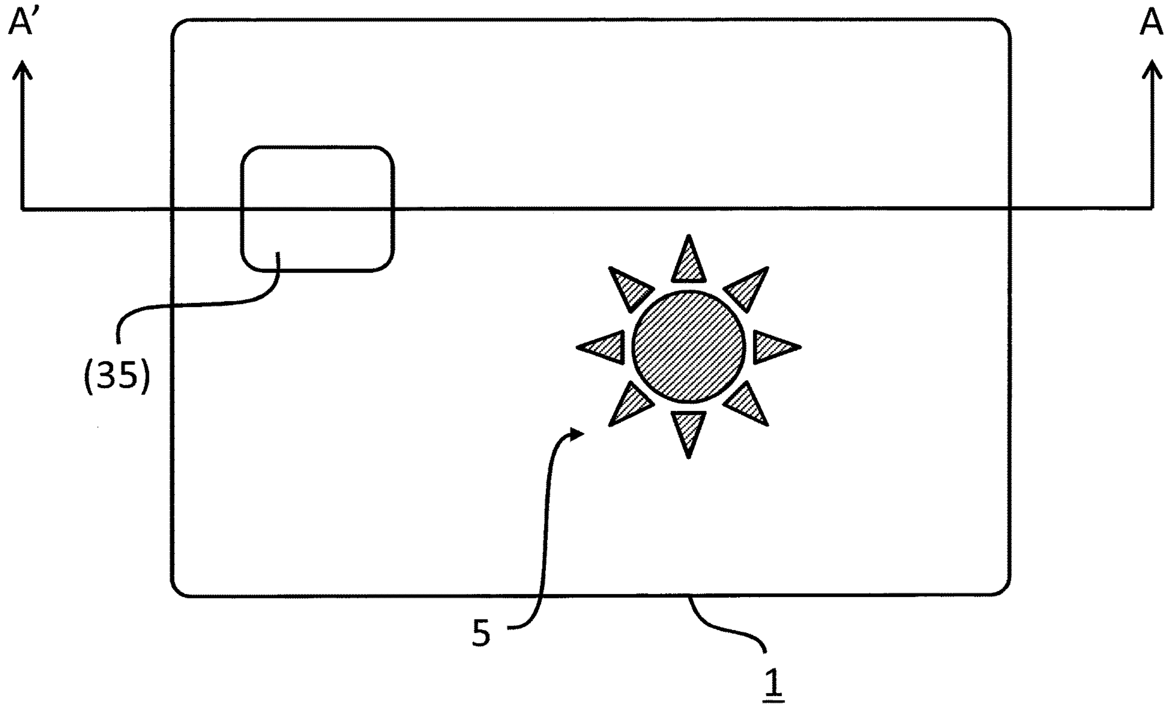


FIG. 31

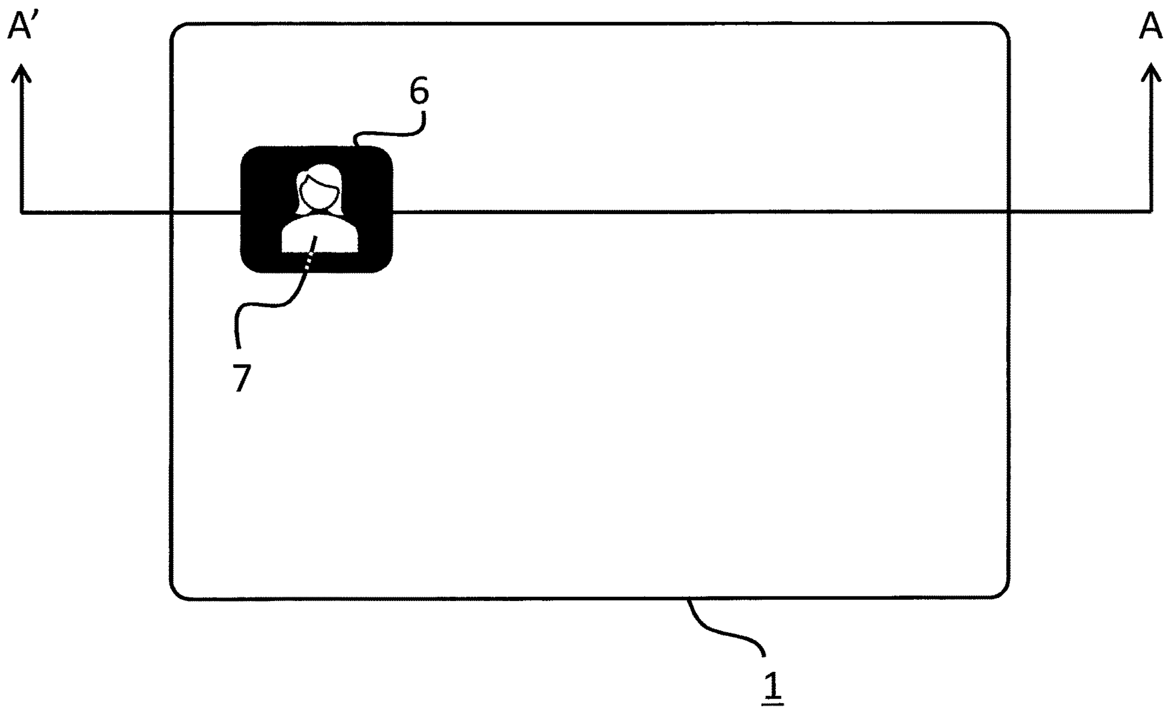

FIG. 32

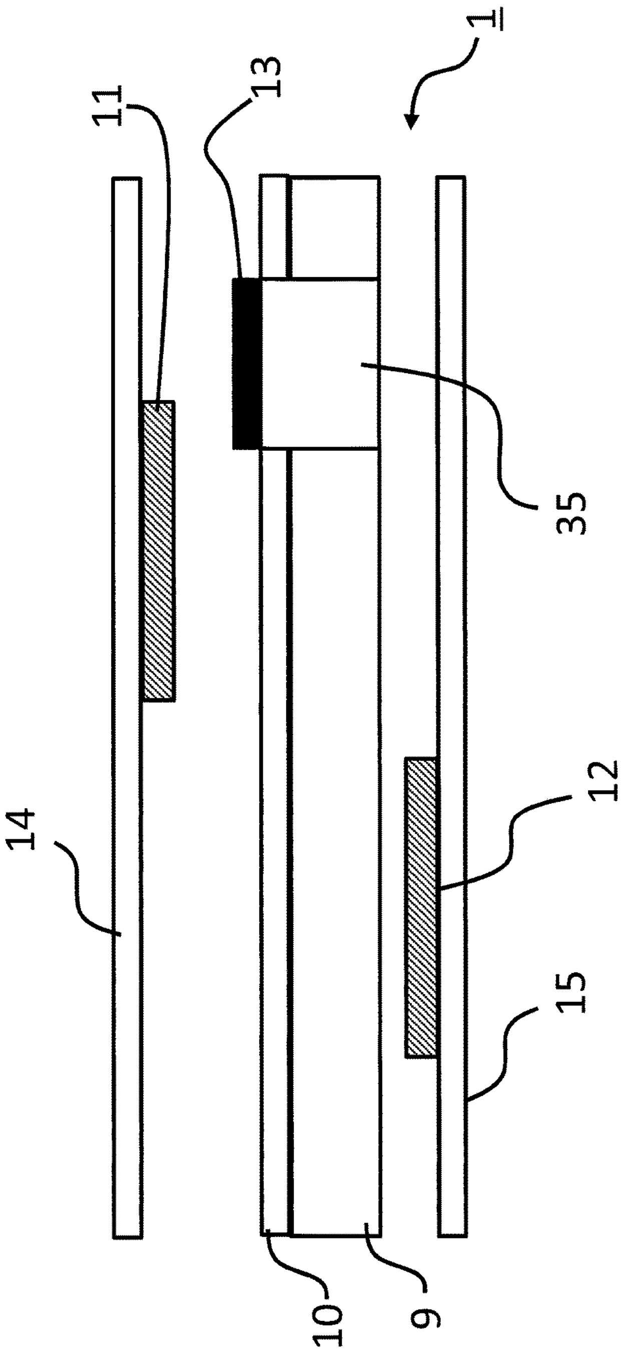

FIG. 33

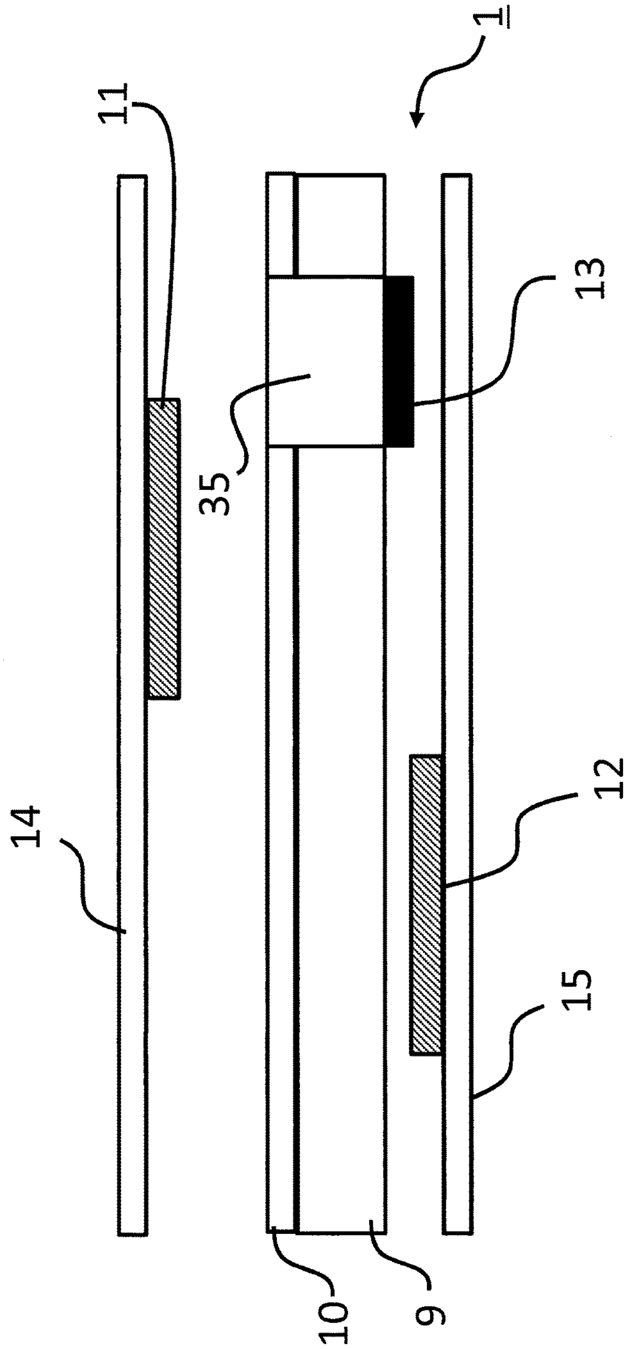

FIG. 34

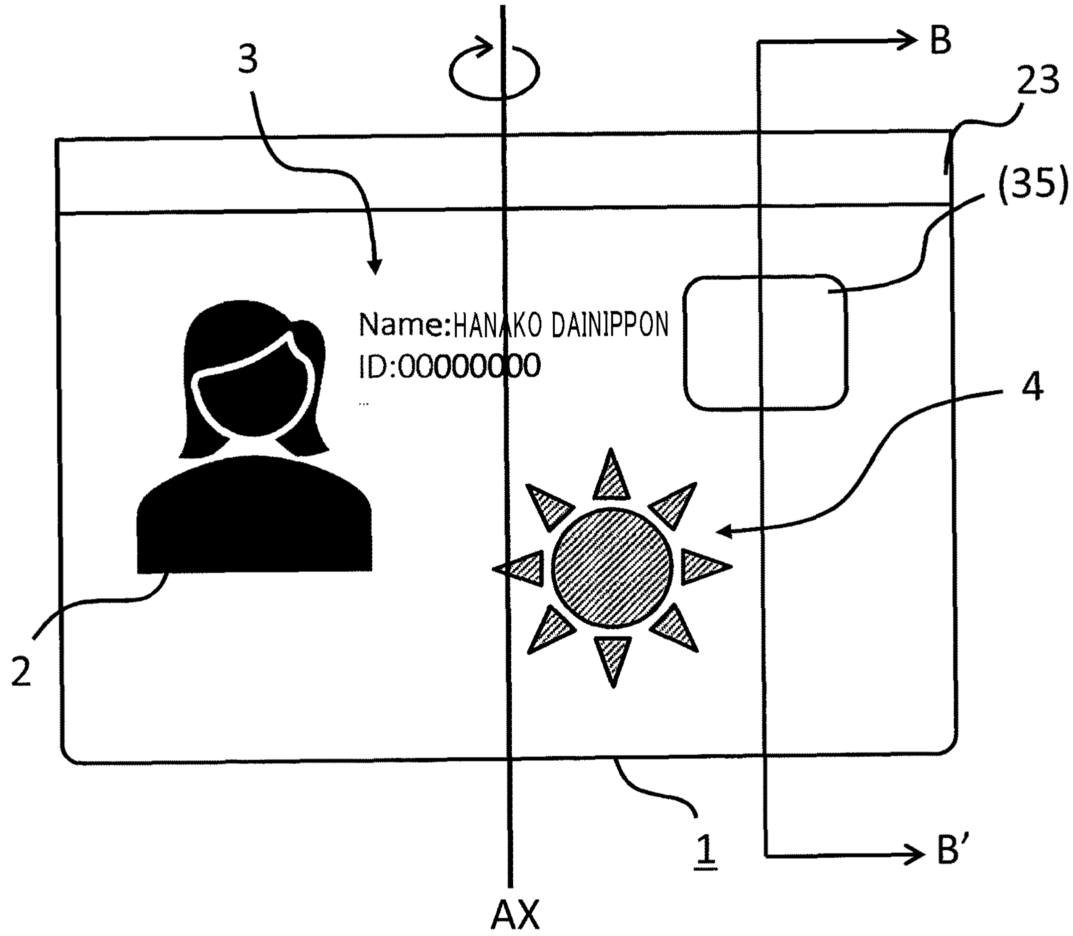

FIG. 35

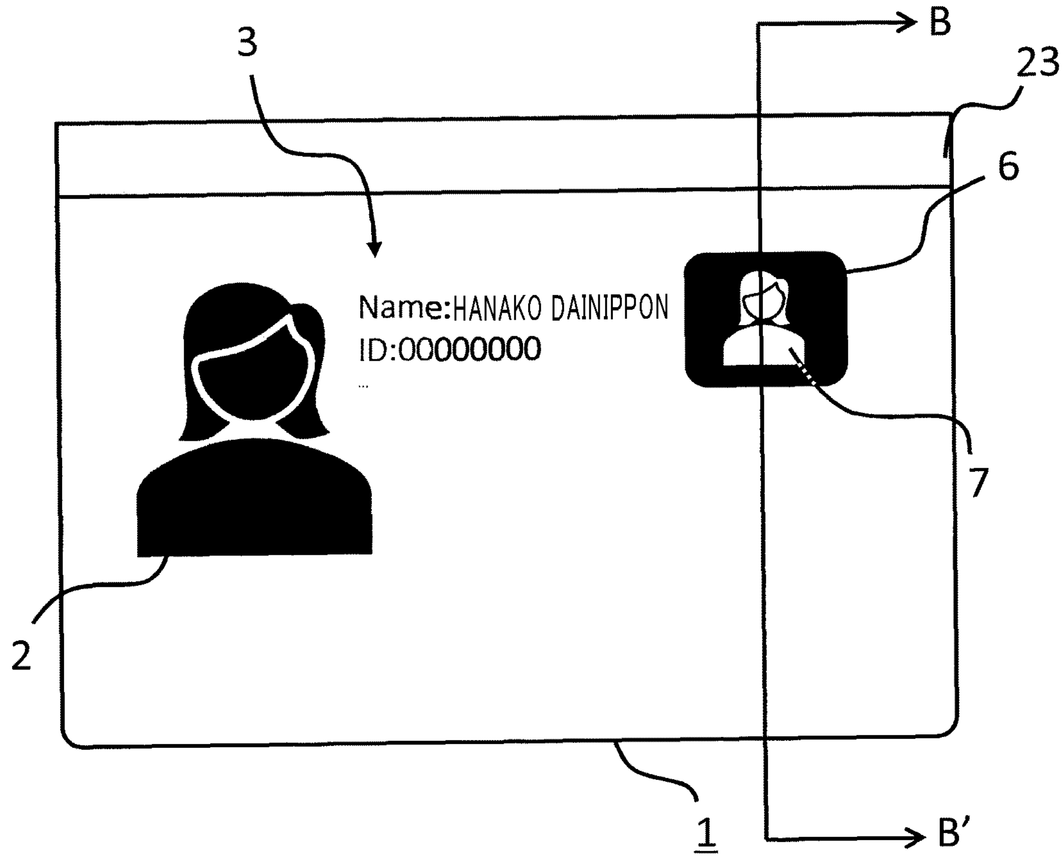

FIG. 36

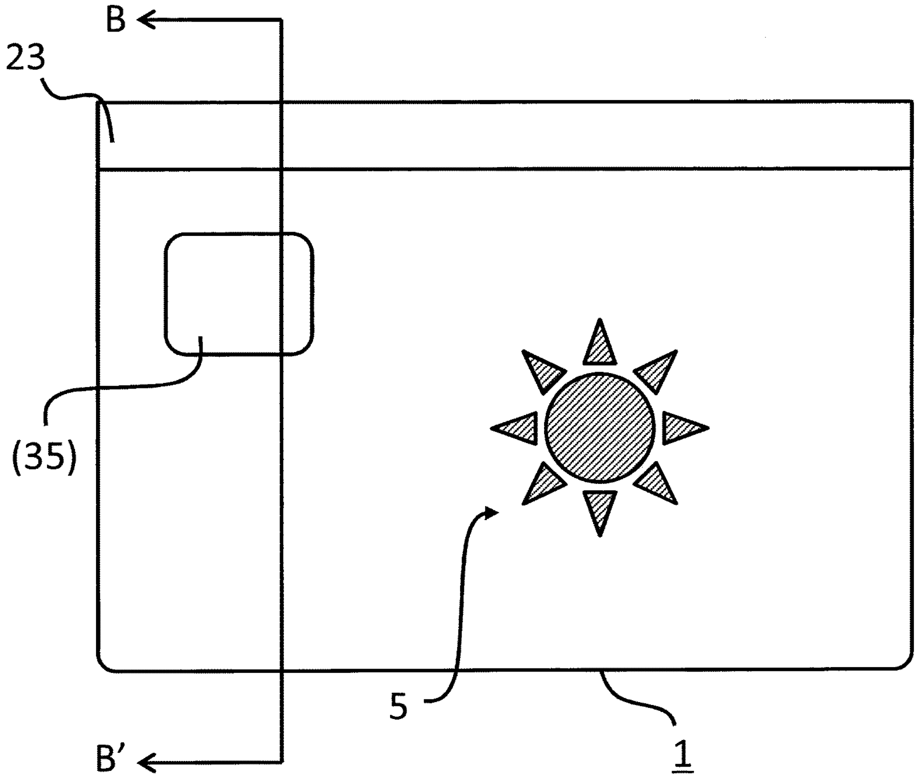


FIG. 37

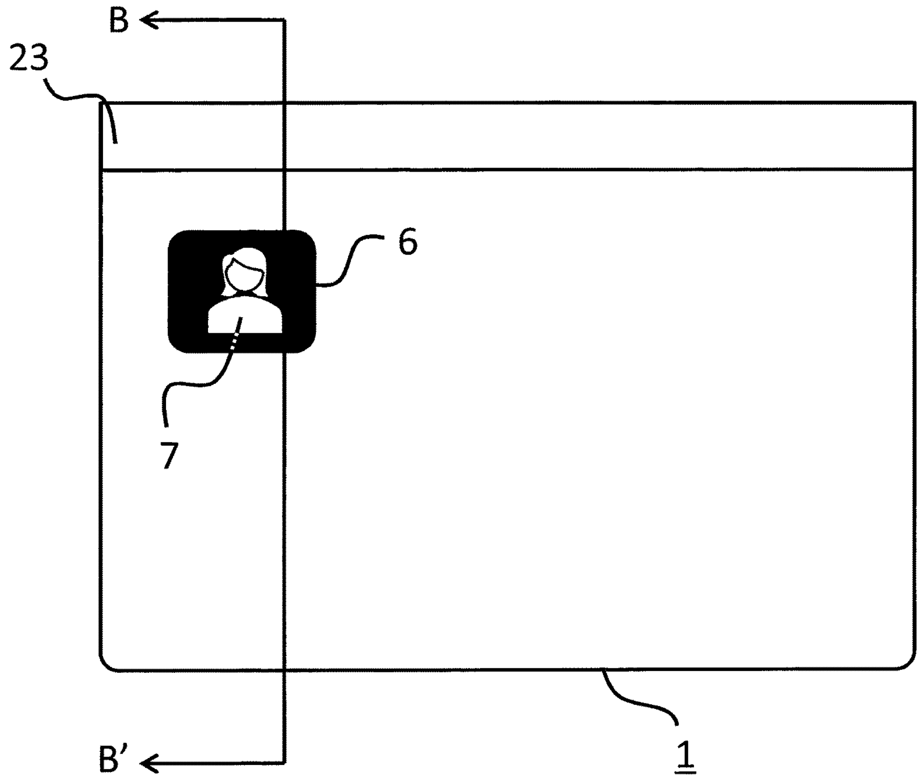

FIG. 38

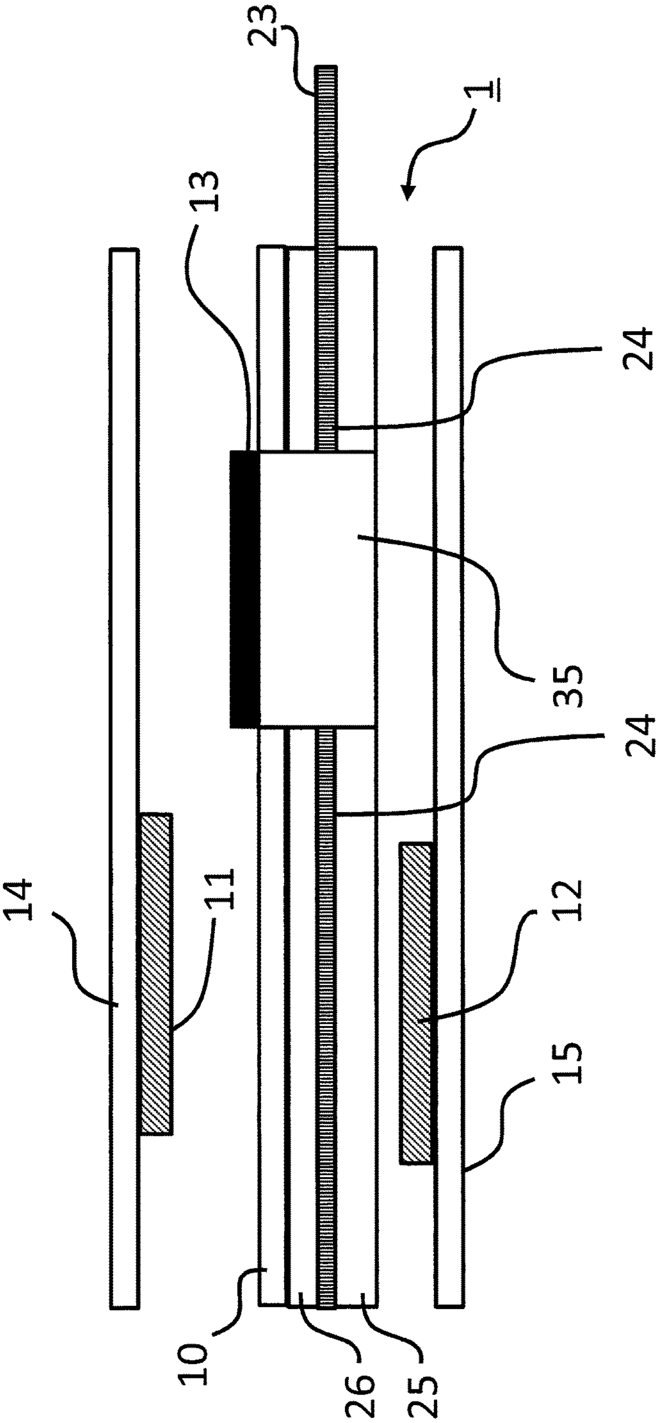

FIG. 39

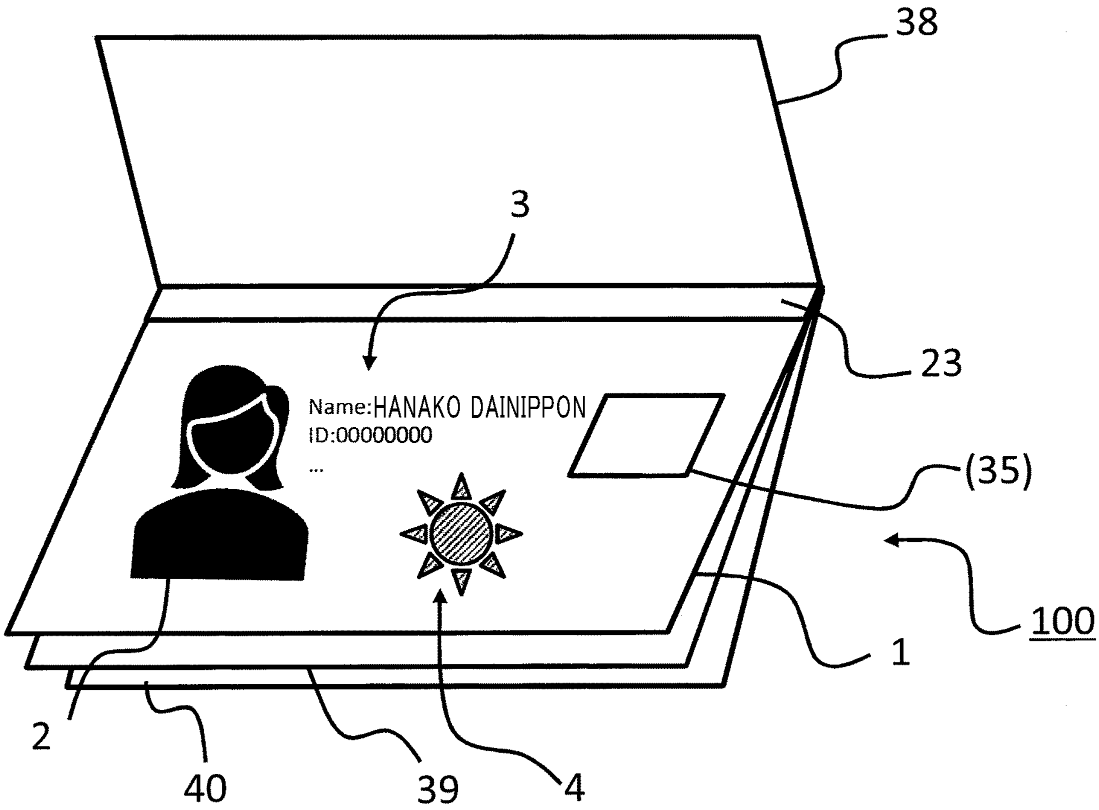
38
3
23
Name:HANAKO DAINIPPON
ID:00000000
...
(35)
100
1
2
40
39
4

FIG. 40

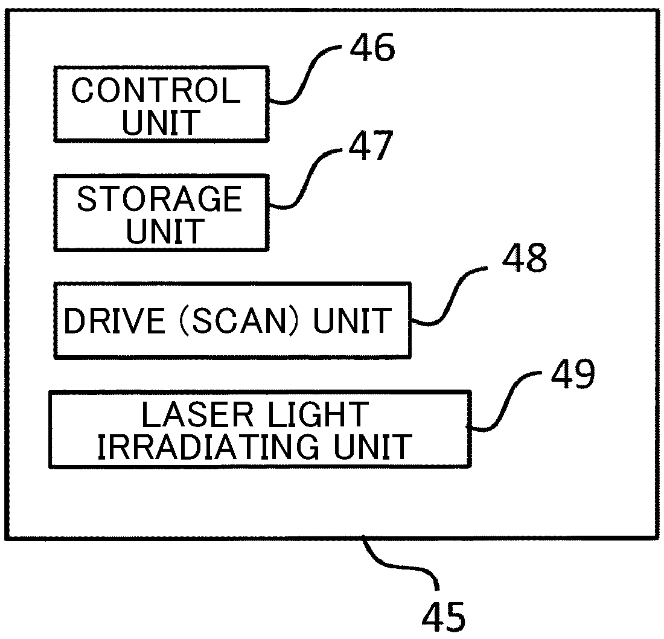
CONTROL UNIT
46
STORAGE UNIT
47
DRIVE (SCAN) UNIT
48
LASER LIGHT IRRADIATING UNIT
49
45

FIG. 41

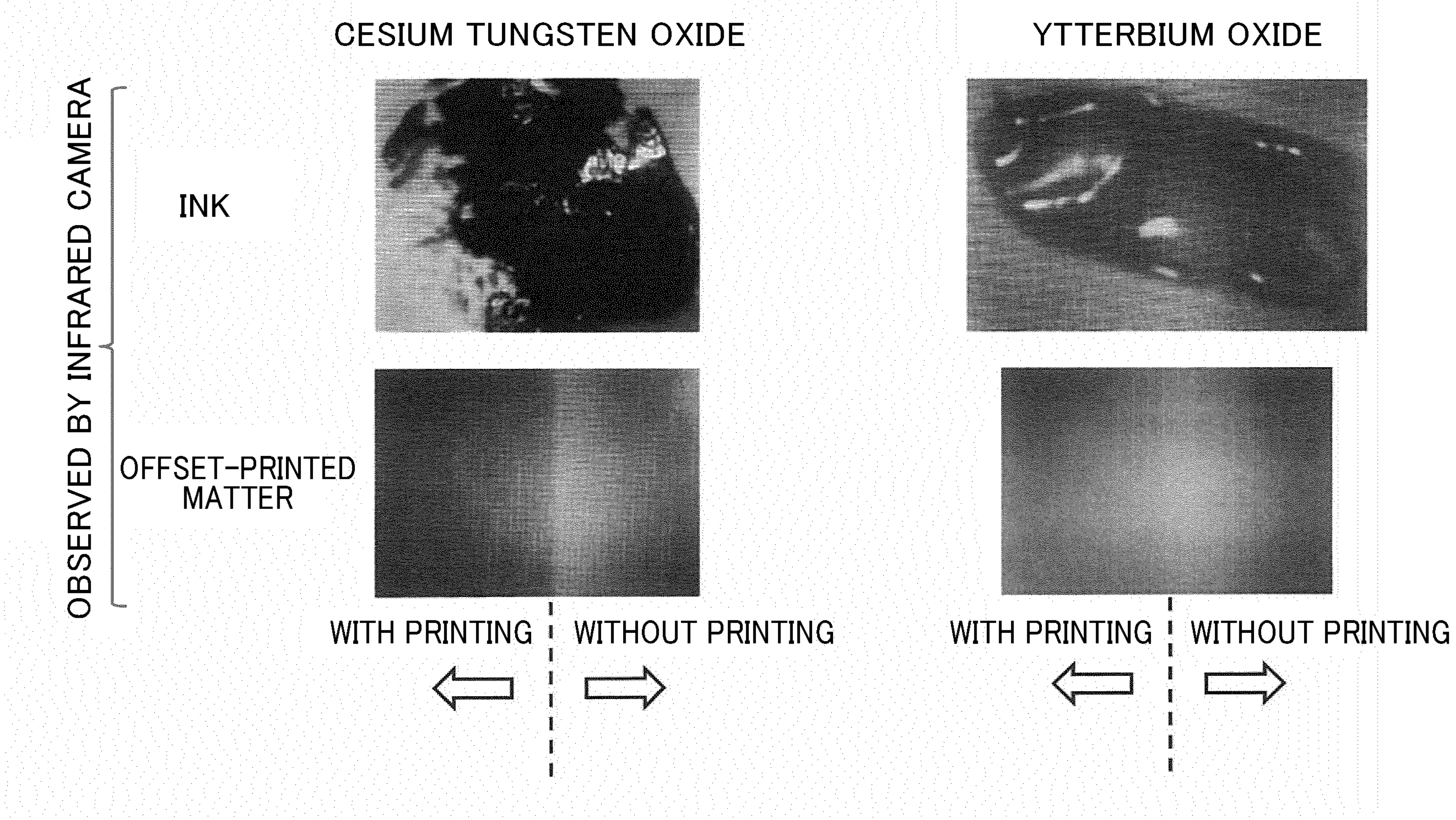
CESIUM TUNGSTEN OXIDE
YTTERBIUM OXIDE
OBSERVED BY INFRARED CAMERA
INK
OFFSET-PRINTED MATTER
WITH PRINTING
WITHOUT PRINTING
WITH PRINTING
WITHOUT PRINTING

FIG. 42

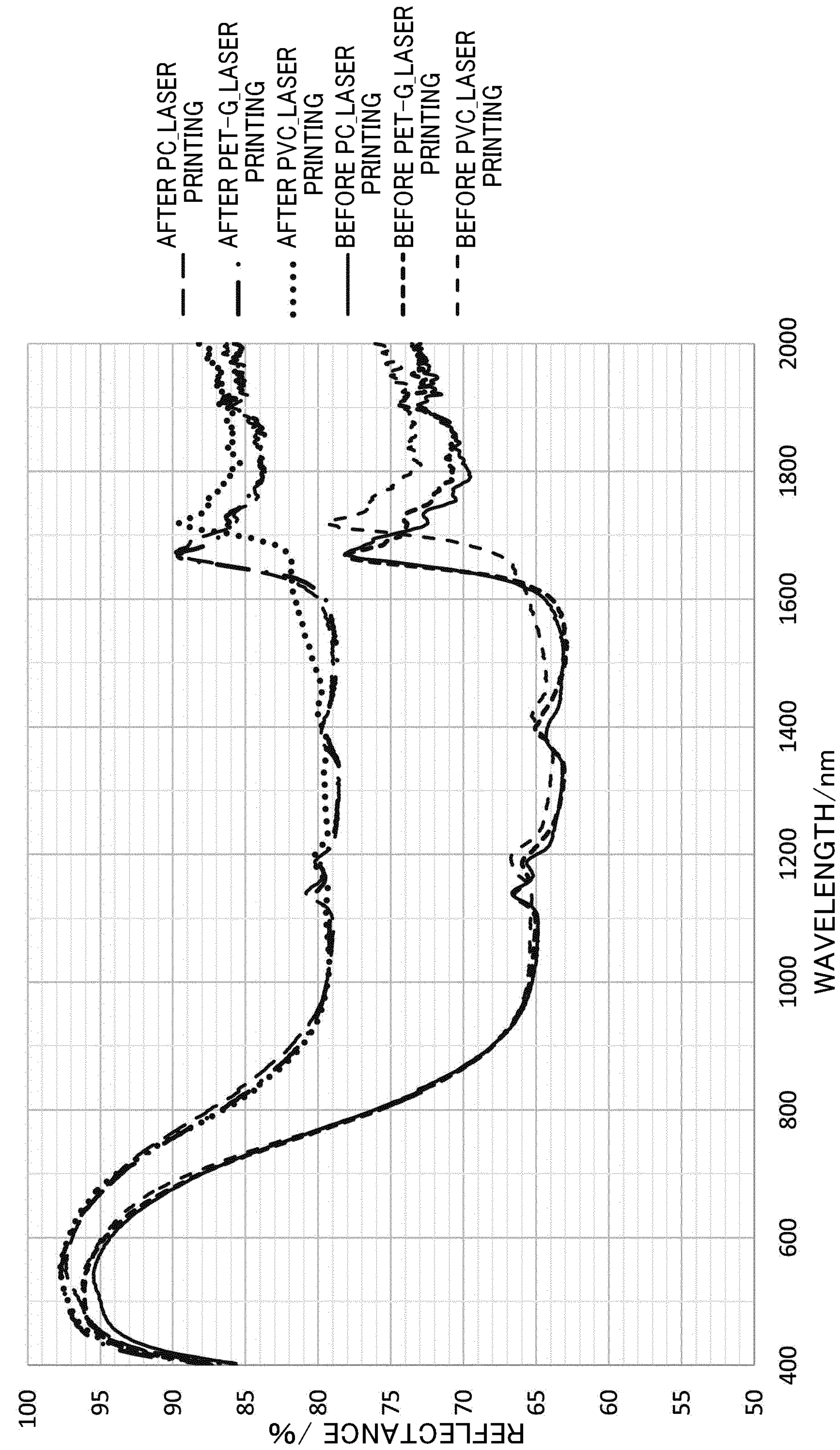
AFTER PC_LASER PRINTING
AFTER PET-G_LASER PRINTING
AFTER PVC_LASER PRINTING
BEFORE PC_LASER PRINTING
BEFORE PET-G_LASER PRINTING
BEFORE PVC_LASER PRINTING
REFLECTANCE /%
100
95
90
85
80
75
70
65
60
55
50
WAVELENGTH/nm
400
600
800
1000
1200
1400
1600
1800
2000

FIG. 43

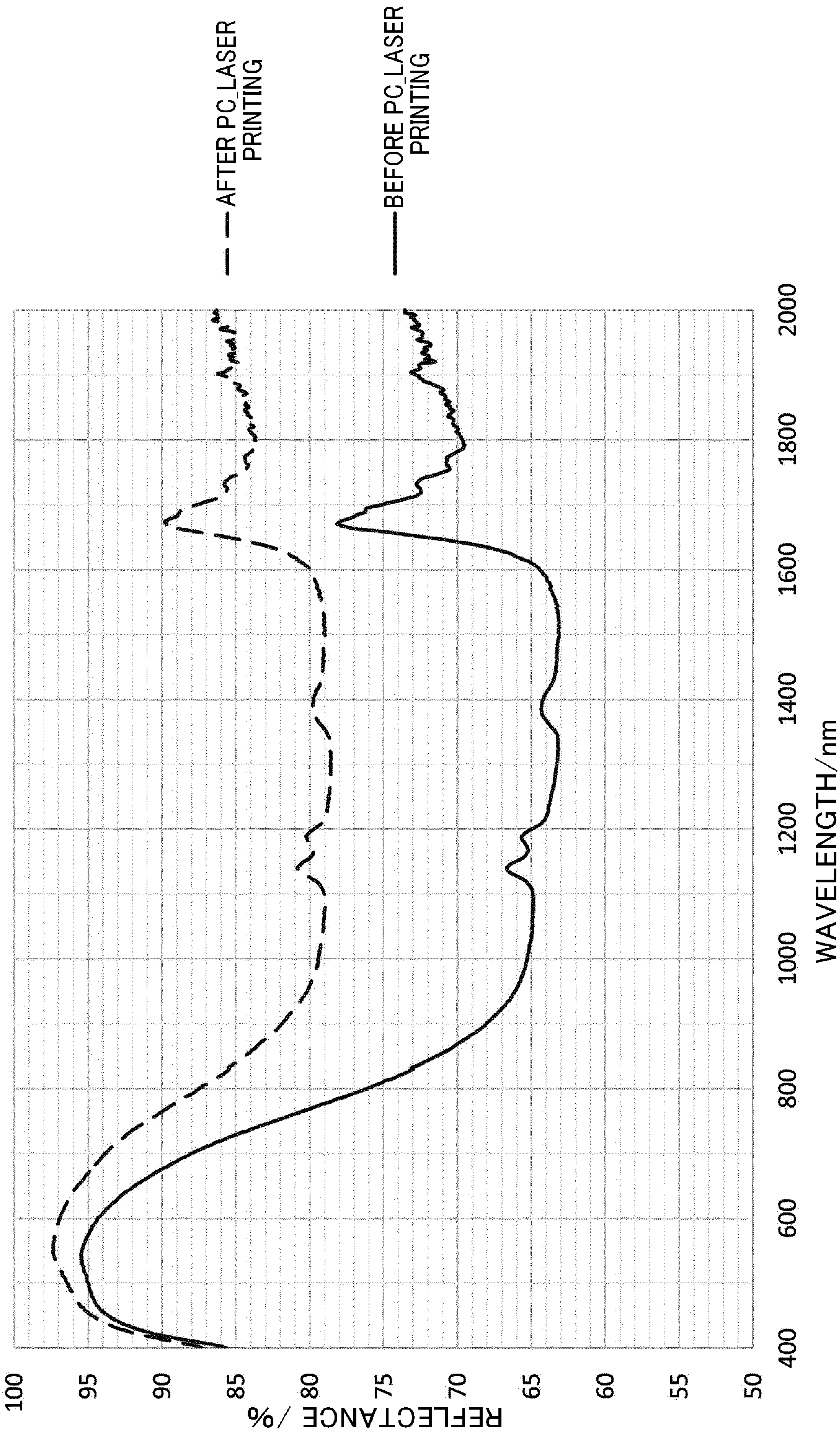
AFTER PC_LASER PRINTING
BEFORE PC_LASER PRINTING
REFLECTANCE /%
100
95
90
85
80
75
70
65
60
55
50
WAVELENGTH/nm
400
600
800
1000
1200
1400
1600
1800
2000

FIG. 44

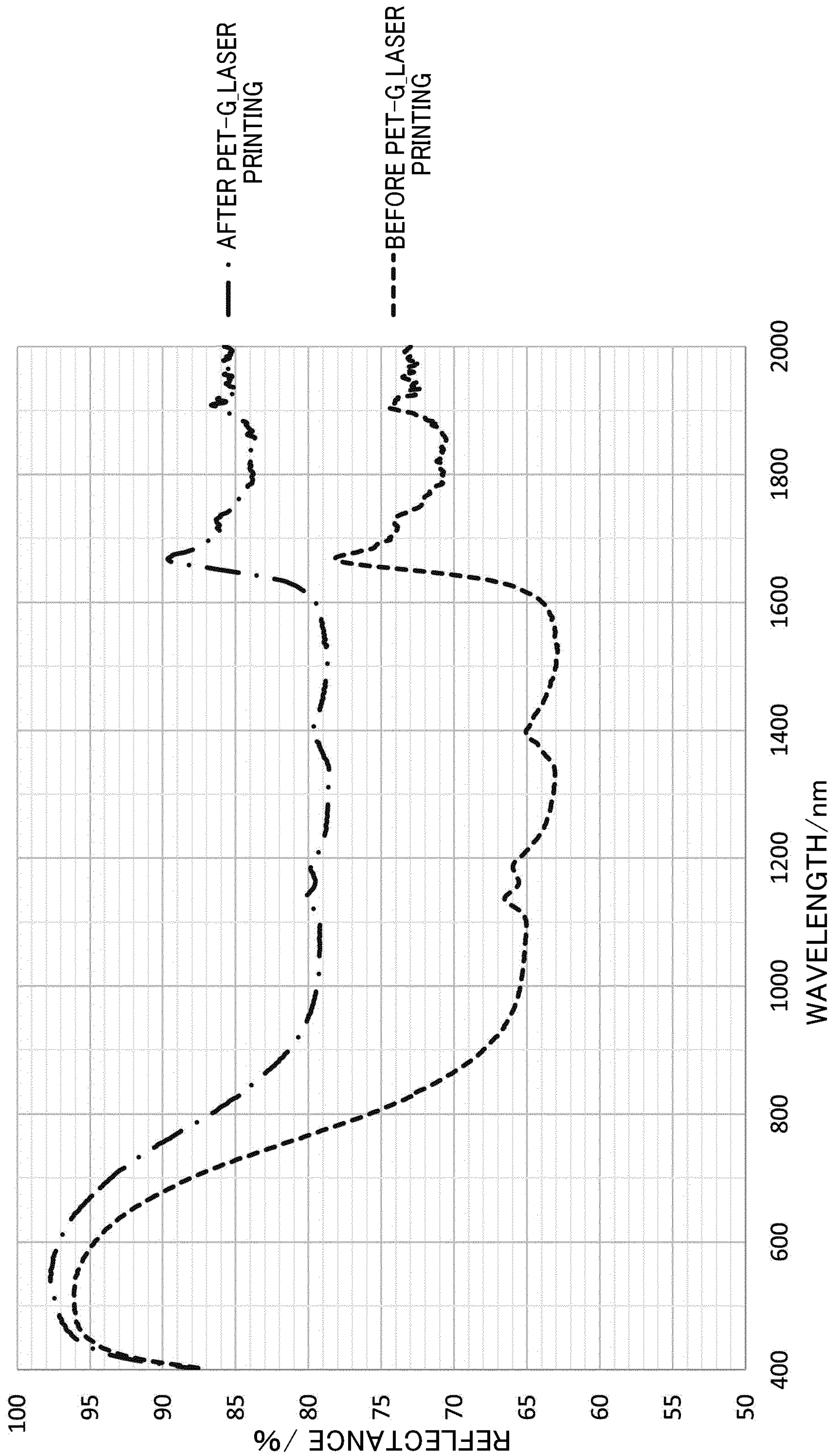
AFTER PET-G LASER PRINTING
BEFORE PET-G LASER PRINTING
REFLECTANCE /%
100
95
90
85
80
75
70
65
60
55
50
WAVELENGTH/nm
400
600
800
1000
1200
1400
1600
1800
2000

FIG. 45

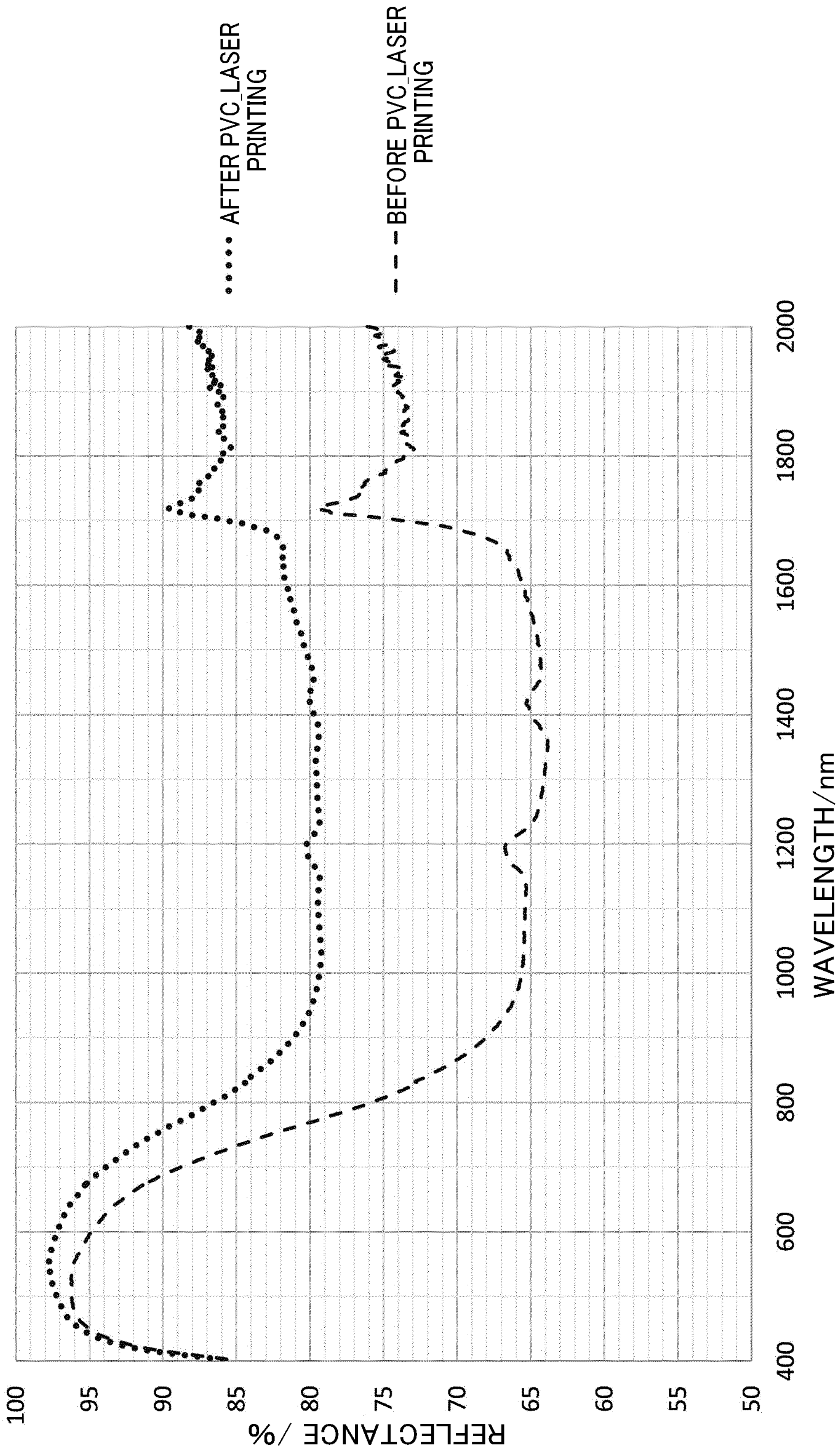
AFTER PVC_LASER PRINTING
BEFORE PVC_LASER PRINTING
REFLECTANCE /%
100
95
90
85
80
75
70
65
60
55
50
WAVELENGTH/nm
400
600
800
1000
1200
1400
1600
1800
2000

FIG. 46

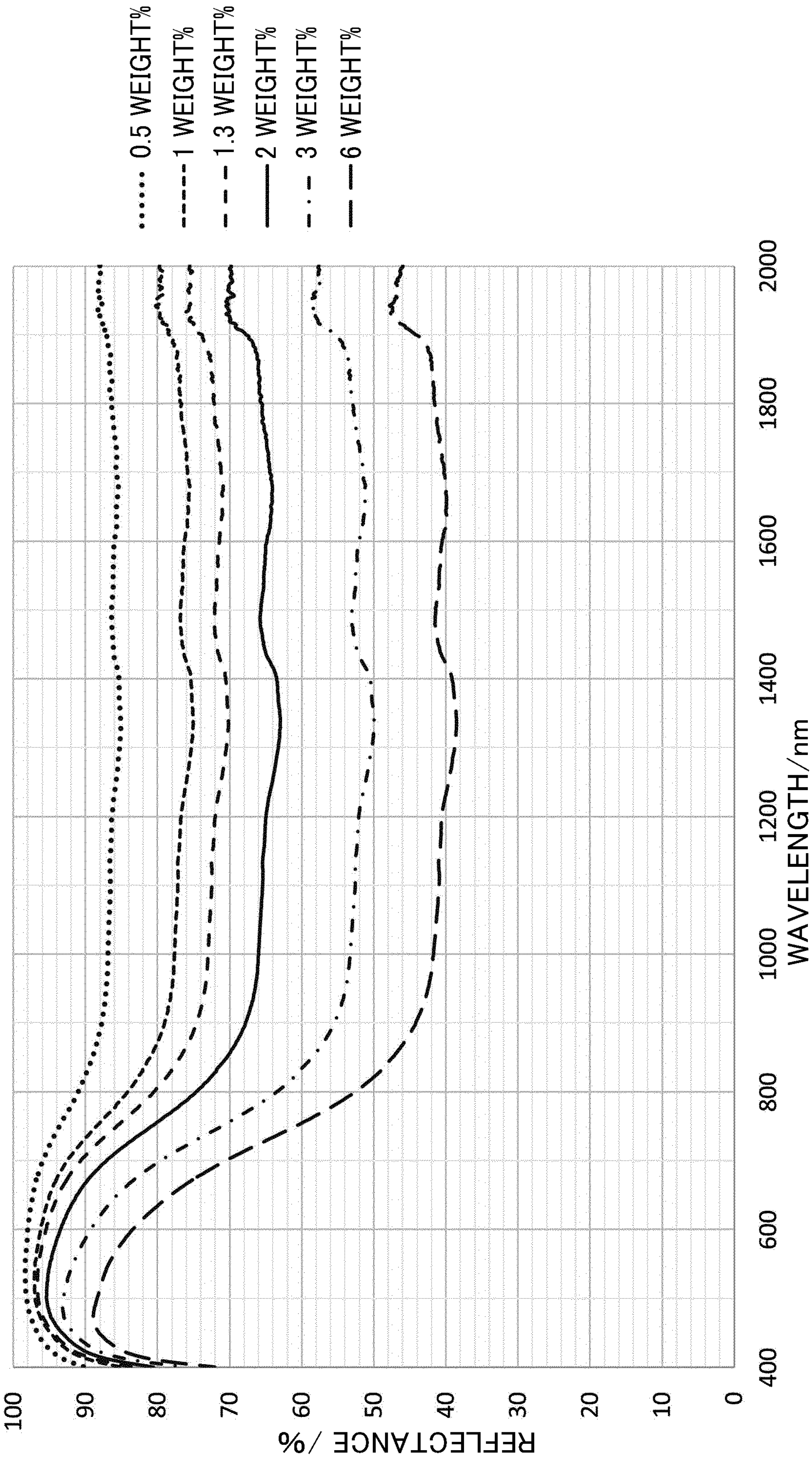
0.5 WEIGHT%
1 WEIGHT%
1.3 WEIGHT%
2 WEIGHT%
3 WEIGHT%
6 WEIGHT%
REFLECTANCE /%
100
90
80
70
60
50
40
30
20
10
0
WAVELENGTH/nm
400
600
800
1000
1200
1400
1600
1800
2000

FIG. 47

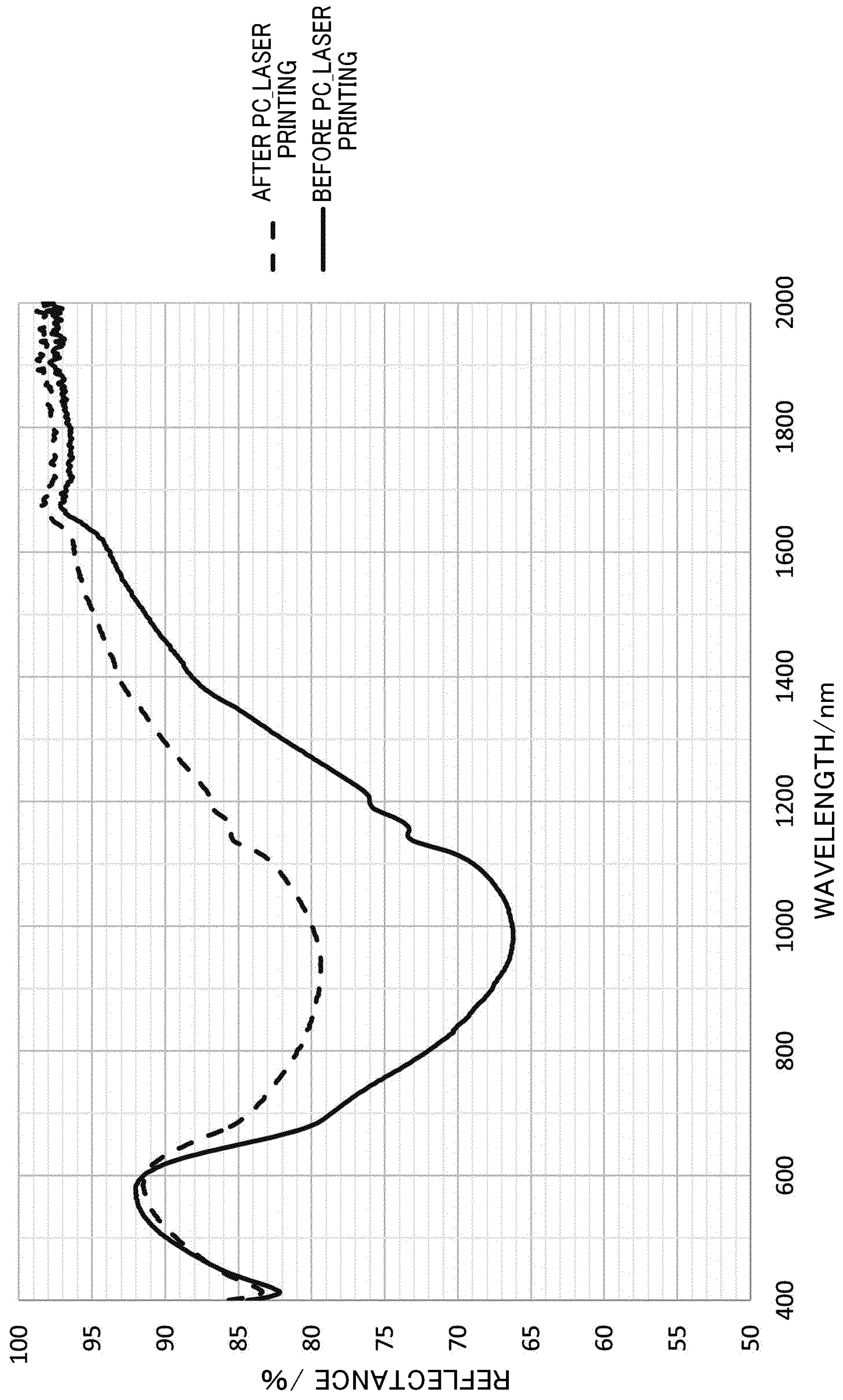
AFTER PC_LASER PRINTING
BEFORE PC_LASER PRINTING
REFLECTANCE /%
100
95
90
85
80
75
70
65
60
55
50
WAVELENGTH/nm
400
600
800
1000
1200
1400
1600
1800
2000

## INTERNATIONAL SEARCH REPORT

International application No.
**PCT/JP2021/041758**

**A. CLASSIFICATION OF SUBJECT MATTER**

***B41M 5/26***(2006.01)i; ***B42D 25/328***(2014.01)i; ***B42D 25/382***(2014.01)i; ***B32B 7/023***(2019.01)i; ***G07D 7/12***(2016.01)i
FI: B32B7/023; B41M5/26; B42D25/382; B42D25/328; G07D7/12

According to International Patent Classification (IPC) or to both national classification and IPC

**B. FIELDS SEARCHED**

Minimum documentation searched (classification system followed by classification symbols)

B41M5/26; B42D25/328; B42D25/382; B32B7/023; G07D7/12

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2019-38255 A (TOPPAN PRINTING CO LTD) 14 March 2019 (2019-03-14) paragraphs [0025]-[0166], fig. 1-21 | 1, 3-7, 12, 16, 17 |
| Y | paragraphs [0025]-[0166], fig. 1-21 | 2-7, 12 |
| A | paragraphs [0025]-[0166], fig. 1-21 | 8-11, 13-15, 18 |
| Y | JP 2003-302519 A (TOKUSHU PAPER MFG CO LTD) 24 October 2003 (2003-10-24) claims, paragraphs [0016]-[0057], fig. 1-3, 5 | 2-7, 12 |
| A | WO 2018/151238 A1 (DAINIPPON PRINTING CO LTD) 23 August 2018 (2018-08-23) paragraphs [0022]-[0121], fig. 1-7 | 1-18 |
| P, A | WO 2021/124759 A1 (DAINIPPON PRINTING CO LTD) 24 June 2021 (2021-06-24) paragraphs [0030]-[0081], fig. 1-31 | 1-18 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **12 January 2022** | **25 January 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2021/041758**

| Patent document cited in search report | Publication date (day/month/year) | Patent family member(s) | Publication date (day/month/year) |
|---|---|---|---|
| JP 2019-38255 A | 14 March 2019 | US 2020/0180346 A1 paragraphs [0053]-[0222], fig. 1-21<br>WO 2019/039524 A1 paragraphs [0014]-[0156], fig. 1-21<br>EP 3674099 A1 paragraphs [0015]-[0158], fig. 1-21<br>CN 111051076 A whole document<br>KR 10-2020-0044808 A whole document | |
| JP 2003-302519 A | 24 October 2003 | (Family: none) | |
| WO 2018/151238 A1 | 23 August 2018 | US 2020/0062019 A1 whole document | |
| WO 2021/124759 A1 | 24 June 2021 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 4323578 B
- JP 2005505444 W
- JP 2005246821 A
- JP 2008162233 A
- JP 6443597 B
- JP 6507096 B
- JP 6541400 B
- JP 6160830 B
- JP 5854329 B
- WO 2018151238 A
- JP 6167803 B